# EUROPEAN PATENT APPLICATION

(11) **EP 1 153 974 A1**
(43) Date of publication of application: **14.11.2001**
(21) Application number: 99969729.5
(22) Date of filing: 30.09.1999
(51) Int. Cl.: C08L 23/00, B32B 27/32

(54) **POLYOLEFIN RESIN COMPOSITION, LAMINATE CONTAINING THE SAME, PROCESS FOR PRODUCING THE SAME, AND APPLICATION PRODUCTS**

(30) Priority: 30.09.1998 JP 29449998; 30.09.1998 JP 27920198; 30.09.1998 JP 27920398; 30.09.1998 JP 27920598; 30.09.1998 JP 27920898; 30.09.1998 JP 27921498; 30.09.1998 JP 27921898
(71) Applicant: Japan Polyolefins Co., Ltd., Tokyo, 105-0001 (JP)
(72) Inventor: ARAKI, Takumi, Japan Poly. Co. Ltd., Techn. Head., Kawasaki-ku, Kawasaki (JP); MIYACHI, Osamu, Japan Poly. Co. Ltd., Tec. Head., Kawasaki-ku, Kawasaki (JP); YOKOYAMA, Kuniaki, Japan Poly. Co. Ltd., Tec Head, Kawasaki-ku, Kawasaki (JP); TAKA, Toshio, Japan Poly. Co. Ltd., Techn. Head., Research & Development Center, 3-2, Yako (JP)
(74) Representative: Strehl Schübel-Hopf & Partner
(86) International application number: JP9905392
(87) International publication number: WO0018836

(57) **Abstract**

The present invention relates to a polyolefin resin composition, a laminated member formed using this composition, and application products of the same. The polyolefin resin composition of the present invention is characterized in comprising a polyolefin resin, and a compound containing intramolecular unsaturated bonds, wherein in the aforementioned polyolefin resin composition, the number of intramolecular unsaturated bonds is at least 0.5 bonds per 10³ carbon atoms. As a resin material for extrusion-lamination, the polyolefin resin composition according to the present invention exhibits favorable low-temperature and high-speed molding properties at the time of extrusion-lamination, and extremely high adhesiveness to various materials. The composition of the present invention is applicable to various laminated members, such as a release member, processing sheet, packaging material, container, and the like.

## Description

### Technical Field

The present invention relates to a polyolefin resin composition; a laminated member using the same; application products thereof; and method for manufacturing the same. More specifically, the composition according to the present invention contains intramolecular unsaturated bonds, such that molded products such as films, sheets, etc., formed using the composition by means of extrusion molding, injection molding, hollow-molding, and the like, display superior adhesiveness, coating properties, printing properties, and the like. In addition, the composition of the present invention can markedly increase the polarity of the treated surface of the molded product by means of co-employing a surface treatment technique such as ozone treatment, and the like. In particular, the polyolefin resin composition according to the present invention exhibits dramatic effects as an extrusion-lamination resin material, showing favorable low-temperature moldability and high-speed moldability at the time of molding via extrusion-lamination, and an extremely favorable adhesiveness to different materials. The present invention relates to the aforementioned composition, a laminated member comprising the composition and a different material, and application products using said laminated member such as a release member, processing sheet, packaging material, container, and the like.

The present application is based on the corresponding Japanese Patent Applications (Japanese Patent Application No. Hei 10-294499, Japanese Patent Application No. Hei 10-279201, Japanese Patent Application No. Hei 10-279203, Japanese Patent Application No. Hei 10-279205, Japanese Patent Application No. Hei 10-279208, Japanese Patent Application No. Hei 10-279214, and Japanese Patent Application No. Hei 10-279218), the disclosures of which are incorporated in part into the present application.

### Background Art

Hitherto, crystalline polyolefin resins such as polyethylene, polypropylene, 4-methyl-1-pentene resins, and the like, which are either homopolymers or copolymers of α-olefins having 2 ∼ 20 carbon atoms, are known to display superior properties with respect to their transparency, thermal resistance, gas permeability, chemical resistance, and the like. However, the molded products of these resins exhibit a poor wettability on their surface, and pose problems with respect to adhesiveness, coating properties, printing properties, and the like.

A usage example of the aforementioned polyolefin resin may include a laminated member, molded by means of extrusion-lamination onto various base materials such as various films, paper, metal foil, unwoven cloth, and the like.

Needless to say, strong adhesiveness to various base materials is highly desirable in the aforementioned extrusion-lamination molding. However, the adhesive strength of these polyolefin resins to various base materials is weak, and hence, it has been impossible to provide a laminated member with a high, inter-layer adhesive strength.

More concretely, the heat sealability, moisture resistance, and the like, are provided by means of performing extrusion-lamination of a polyolefin polymer of polyethylene, polypropylene, or the like, onto various materials such as various plastic films of a polypropylene, polyamide, polyester, ethylene-vinyl acetate copolymer saponification product, or the like; aluminum foil, cellophane, paper, non-woven cloth, and the like. A large number of such laminated members are used mainly for packaging materials, and the like.

Various measures have been taken in order to increase the adhesive strength of polyolefin resins, which are most widely used for extrusion-lamination molding, to various materials, such as molding the aforementioned resin at an extremely high temperature, and co-employing surface treatment such as ozone treatment, corona discharge treatment, and the like, at the time of molding.

However, increasing the molding temperature results in problems such as (1) degradation of the working and surrounding environments due to the generation of fumes; and (2) deterioration of the product quality, generation of odor due to oxidization at high temperatures; and the like.

In particular, among the polyolefin resins, due to its non-polar resin properties, propylene polymers are substantially inferior in adhesiveness to such polar materials. Accordingly, when molding by extrusion-lamination onto a base material, the resin temperature is generally set at a temperature of 300°C or higher to oxidize the surface of a thin film of the molten resin extruded from an extruder, thus improving the adhesiveness to the base material. In recent years, in order to improve the productivity, it has been necessary to set the resin temperature higher to further augment high-speed moldability, which in turn has worsened the aforementioned problems (1) and (2) and resulted in a decline in the adhesive strength.

Furthermore, a highly crystalline, 4-methyl-1-pentene resin is superior with respect to its transparency, thermal resistance, gas permeability, chemical resistance, and the like. However, molded products of this resin exhibit a poor surface wettability, and weak adhesive strengths to different materials when formed into a laminated member. Thus, it has been impossible to provide a laminated member comprising such a resin that exhibits a strong, inter-layer adhesive strength.

In Japanese Patent Application, First Publication Number (A) Hei 5-104694, a method for manufacturing a laminated film using a 4-methyl-1-pentene resin, which exhibits an improved inter-layer adhesive strength, is disclosed. The invention discloses a method for treating the 4-methyl-1-pentene resin with ozone, and treating the base material to which the treated 4-methyl-1-pentene resin is adhered, with either oxidation or an anchor coating.

However, even according to this method, although the inter-layer adhesive strength improves to some extent, it is still insufficient for the low-temperature, high-speed moldability required particularly in recent years.

On the other hand, a method for molding at a low temperature has been proposed in order to solve the aforementioned environmental problems.

For example, Japanese Patent Application, First Publication Number (A) Sho 57-157724 discloses a method comprising the steps of extruding a polyethylene resin at a low temperature between 150 ∼ 290°C, performing ozone treatment, and then pressure-laminating the resin onto a base material, the surface of which is treated with an anchor coating.

However, when lowering the molding temperature in this manner, although a reduction in the generation of fume and odor is observed, serious production and economic problems emerge such as a decrease in the adhesive strength due to the lower molding temperature, a slower molding speed, in general, and an inability to increase the thickness of the film.

In addition, in order to improve on the aforementioned problems, Japanese Patent Application, First Publication Number (A) Hei 8-188679 discloses an adhesive resin composition wherein the adhesive strength is increased by means of mixing an epoxy compound into the polyolefin resin. However, in recent years, even greater high-speed moldability for greater productivity, and low-temperature moldability free of environmental pollution are highly desired. Accordingly, a polyolefin resin material exhibiting a greater adhesiveness, which can be manufactured at a higher molding speed, is desired.

In addition, since the application products use the laminated materials of the polyolefin resin and base materials of paper, plastics, or the like, e.g., release members, processing sheets, packaging materials, containers, and the like, it is desirable to solve problems related to environmental pollution during lamination and the decreased adhesive strength.

A release member is provided with a multi-layer structure, in which a filling layer of resin is, in general, provided on a base material such as paper, with a release material layer thereon, which is filled with adhesives and used as a label, adhesive sheet, or the like. Examples of the aforementioned filling layer generally include inexpensive, low-density polyethylenes formed according to a high-pressure radical method, which are used alone; or a mixture of polyethylenes formed according to a high-pressure radical method, a high-density polyethylene, i.e., a homopolymer of ethylene obtained by means of a Ziegler catalyst, and a linear low-densitiy polyethylene, i.e., a copolymer of ethylene and another α-olefin.

In general, the filling layer is coated by means of performing extrusion-lamination molding onto a base material.

It is desirable to improve the adhesive strength between each layer of such a release member, and to manufacture the release member over a shorter period of time.

However, raising the resin temperature for the aforementioned reasons leads to problems, such as the imparting of detrimental effects on the working environment and surrounding environment due to the generation of fumes, a deterioration in the product quality from an oxidization at a high temperature and the resultant odor, and the like.

In addition, in particular, when thermal resistance properties are required for usage, polypropylene resins, which exhibit superior thermal resistance, are considered as the filling layer. However, polypropylene resins exhibit lower adhesive strengths, and thus require molding at higher lamination temperatures and slower speeds, which in turn, worsen the aforementioned problems.

Processing sheets are used for providing uneven prints and three-dimensional designs on the surface of multi-laminated sheets such as synthetic leather, and the like. The aforementioned processing sheet is provided with a structure in which a processing layer is laminated onto a base material. The surface of the aforementioned processing sheet is firmly embossed, and the aforementioned embossing is pressed and transferred onto synthetic leather, and the like, to provide a three-dimensional design.

A laminated member that may be firmly embossed and exhibits a sufficient thermal resistance to withstand the heat during the embossing process, is used as the aforementioned processing sheet. A laminated member that is laminated with polypropylene as a processing layer onto the base material such as paper, embossed, and treated with silicone mold releasing agent, is generally used.

However, the adhesive strength to paper of polypropylene is not significantly high, such that when pressed to the surface material of a multi-laminated sheet for embossing, there is a fear of the polypropylene adhering to the surface material with separation occurring between the base material and processing layer. Thus, it is important to improve the inter-layer adhesive strength, and also highly desirable to manufacture the processing sheet over a shorter period of time.

However, raising the resin temperature for the aforementioned reasons leads to problems, such as the imparting of detrimental effects on the working environment and surrounding environment due to the generation of fumes, a deterioration in the product quality from an oxidization at a high temperature and the resultant odor, and the like.

Furthermore, a packaging material in which a plastic film such as polyethylene, polypropylene, and the like, is provided with a sealant layer, or in which a low-density polyethylene is laminated as a sealant layer onto a base material such as paper, non-woven cloth, or aluminum foil, is used as general packaging material for engineering, industrial, and consumer use.

In addition, a packaging material in which a low-density polyethylene is laminated as a sealant layer onto a base material comprising a barrier material such as aluminum foil, polyethylene terephthalate (PET) film, and the like, is used as food packaging material for both dry food and liquid food, and as medical packaging material such as for pharmaceutical capsules.

On the other hand, a container made of a laminated member comprising paper and polyethylene is used for solid, liquid, and gas containers for industrial chemicals and materials; and a container made of a laminated member comprising paper and polyethylene is used for food containers for dry food and liquid food, and as a container for medical supplies in the pharmaceutical industry.

The laminated members used for these packaging materials and containers are generally manufactured by means of extrusion-lamination, and particularly, in recent years, it has been highly desirable to improve the inter-layer adhesive strength, and manufacture the laminated members over a shorter time period (i.e., performing molding at a higher speed).

However, if the resin temperature is raised for the aforementioned reasons, problems emerge such as deleterious effects on the working environment and surrounding environment due to the generation of fumes. In addition, for packaging materials and containers for food and pharmaceuticals, odors that are generated due to the oxidization at a high temperature, remain in the packaging material or container, leading to problems such as the transfer of these odor to foods and drinks.

Furthermore, in order to improve the inter-layer adhesive strength, use of an adhesive or anchor coating has been proposed. However, the aforementioned requires use of a solvent and additional processes such as a complicated coating process, preparation process for an anchor coating agent, removal process for the anchor coating agent that is attached to a roll, and the like, which are undesirable for lowering of operation efficiency and increase of production costs. In particular, use of an adhesive or anchor coating is undesirable for packaging materials and containers for food and drinks.

### Disclosure of Invention

In order to solve the aforementioned problems, by means of blending into a polyolefin resin a specific amount of a compound possessing a specific structure, the present invention provides a polyolefin resin composition that is capable of (1) controlling, as much as possible, the effects of the resin temperature on both the working and surrounding environment, by means of restricting the resin temperature at the time of extrusion-lamination molding while maintaining an adhesiveness to different base materials at a sufficiently satisfactory level; (2) improving the high speed moldability without increasing the resin temperature; and (3) providing molded products with superior adhesive, coating, and printing properties.

In other words, the polyolefin resin composition (M) of the present invention is characterized in comprising (A) a polyolefin resin, and (B) a compound containing intramolecular unsaturated bonds, wherein in said polyolefin resin composition, the number of intramolecular unsaturated bonds is at least 0.5 bonds per 10³ carbon atoms.

Even with low-temperature, high-speed lamination molding, this polyolefin resin composition is able to increase the inter-layer strength when utilized for laminated members, and hence can be utilized for various laminated members.

Here, depending on the use, a polyolefin resin composition (M1) comprising (A1) a polyolefin resin containing 3 ∼ 20 carbon atoms, and (B) a compound containing intramolecular unsaturated bonds is preferred.

In addition, a polyolefin resin composition (M2) is preferred which further comprises (C) an epoxy compound in addition to the aforementioned (A) polyolefin resin, and (B) compound containing intramolecular unsaturated bonds.

Furthermore, a polyolefin resin composition (M3) is preferred which further comprises (D) an olefin resin possessing a functional group that is reactive with an epoxy group, in addition to the aforementioned (A) polyolefin resin, (B) compound containing intramolecular unsaturated bonds, and (C) epoxy compound.

The aforementioned polyolefin resin composition may be appropriately applied in particular to various laminated members. For example, the polyolefin resin composition is applicable to various products such as release members, processing sheets, packaging materials, containers and the like.

### Brief Description of the Drawings

Figure 1 is a schematic block diagram showing an example of a method for manufacturing a laminated member.
Figure 2 is a cross-sectional side view showing an example of the layer structure of a separable laminated member.
Figure 3 is a cross-sectional side view showing an example of the layer structure of a separable laminated member.
Figure 4 is a cross-sectional side view showing an example of the layer structure of a processing sheet.
Figure 5 is a schematic block diagram showing an example of a method for manufacturing synthetic leather.
Figure 6 is a cross-sectional side view showing an example of the layer structure of a processing sheet.
Figure 7 is a schematic block diagram showing an example of a method for manufacturing a laminated member.
Figure 8 is a cross-sectional side view showing an example of the layer structure of a packaging material.
Figure 9 is a schematic block diagram showing an example of a method for manufacturing a laminated member.
Figure 10 is a cross-sectional side view showing an example of the layer structure of a laminated member used for a packaging material or container.
Figure 11 is a schematic block diagram showing an example of a method for manufacturing a laminated member.
Figure 12 is a cross-sectional side view showing an example of the layer structure of a container for food and pharmaceuticals.
Figure 13 is a schematic block diagram showing an example of a method for manufacturing a laminated member.
Figure 14 is a schematic block diagram showing an example of a method for manufacturing a laminated member.

### Best Mode for Carrying Out the Invention

In the polyolefin resin composition of the present invention, the component (A) comprises a polyolefin resin, concrete examples of which may include a low-density polyethylene (LDPE) formed by means of high-pressure radical polymerization, an ethylene vinyl ester copolymer, a copolymer comprising ethylene and α,β-unsaturated carbonic acid or derivatives thereof, and the like.

Concrete examples of other polyolefin resin may include a homopolymer of an α-olefin having 2 ∼ 20 carbon atoms, such as an ethylene homopolymer with a density of 0.86 ∼ 0.98 g/cm³ formed by means of low-, medium-, or high-pressure polymerization, and a propylene homopolymer, or may include an alternately copolymer thereof. The aforementioned ethylene homopolymer or propylene homopolymer may be formed by using a Ziegler catalyst, Phillips catalyst, metallocene catalyst, or the like.

The aforementioned low-density polyethylene (LDPE) formed by means of high-pressure radical polymerization possesses a density of 0.91 ∼ 0.94 g/cm³, preferably 0.912 ∼ 0.935 g/cm³, and more preferably 0.912 ∼ 0.930 g/cm³. The melt-flow rate (MFR) is 0.001 ∼ 1000 g/10 min, preferably 0.1 - 100 g/10 min, and more preferably 1.0 ∼ 50 g/10 min.

The melt tension is preferably 1.5 ∼ 25 g, and more preferably 3 ∼ 20 g.

In addition, the Mw/Mn is preferably selected within the range of 3.0 ∼ 10, and preferably 4.0 ∼ 8.0.

Furthermore, the number of the terminal vinyl group in the aforementioned polyethylene is 0.4 or greater, and preferably in the range of 0.4 ∼ 0.8, per 1000 carbon atoms in the polymer chain.

The ethylene · vinyl ester copolymer is a copolymer of an ethylene monomer and a vinyl ester monomer such as vinyl propyonate, vinyl acetate, vinyl capronate, vinyl caprylate, vinyl laurate, vinyl stearate, trifluoro vinyl acetate, and the like. Among the aforementioned, vinyl acetate (EVA) is particularly preferred. That is, a copolymer comprising 50 ∼ 99.5% by weight of ethylene, 0.5 ∼ 50% by weight of a vinyl ester, and 0 ∼ 49.5% by weight of another polymerizable unsaturated monomer, is preferred. In particular, the amount of the vinyl ester is 3 ∼ 20% by weight, and preferably 5 ∼ 15% by weight.

Representative examples of the copolymer comprising ethylene and an α,β-unsaturated carbonic acid or derivatives thereof according to the present invention may include ethylene - (meth)acrylic acid or its alkyl ester copolymer, metallic salts thereof, and the like. Examples of comonomers thereof may include acrylic acid, methacylic acid, methyl acrylate, methyl methacrylate, ethyl acrylate, ethyl methacrylate, propyl acrylate, propyl methacrylate, isopropyl acrylate, isopropyl methacrylate, n-butyl-acrylate, n-butyl-methacrylate, cyclohexyl acrylate, cyclohexyl methacrylate, lauryl acrylate, lauryl methacrylate, stearyl acrylate, stearyl methacrylate, glycidyl acrylate, glycidyl methacrylate, and the like. Among the aforementioned, an alkyl ester comprising methyl (meth)acrylate, or ethyl (meth)acrylate (EEA), is particularly preferred. In particular, the amount of (meth)acrylate ester is in the range of 3 ∼ 20% by weight, and preferably 5 ∼ 15% by weight.

The aforementioned high-pressure radical polymerization method is a method for performing polymerization in the presence of a free radical initiator such as an organic or inorganic peroxide, and the like, at a polymerization temperature in the range of 100 ∼ 400°C, under a pressure in the range of 500 - 3500 kg/cm², using either a tube reactor or autoclave reactor.

Examples of the ethylene homopolymer having a density of 0.86 ∼ 0.98 g/cm³ formed by means of low-, medium-, or high-pressure polymerization, the propylene homopolymer, and the alternately copolymer of α-olefin having 2 ∼ 20 carbon atoms, which are formed by using a Ziegler catalyst, Phillips catalyst, metallocene catalyst, or the like, may include ethylene polymers such as very low density polyethylenes having a density of at least 0.86 g/cm³, but no greater than 0.91 g/cm³, linear low density polyethylenes (LLDPE) having a density of at least 0.91 g/cm³, but no greater than 0.94 g/cm³, and high density polyethylenes having a density of at least 0.94 g/cm³; propylene polymers such as propylene homopolymers, propylene - ethylene copolymers, and the like; poly-1-butene resins; 4-methyl-1-pentene resins; and the like. In particular, a crystalline resin having 3 ∼ 20 carbon atoms is preferred for a use in which such properties as separating strength, thermal resistance, and transparency are required, such with a release member and/or processing sheet.

Concrete examples of the aforementioned α-olefin having 2 ∼ 20 carbon atoms may include ethylene, propylene, 1-butene, 4-methyl-1-pentene resin, 1-hexene, 1-octene, 1-decene, 1-dodecene, and the like.

As the component (A) according to the present invention, for example, an ethylene copolymer containing a polar group such as polyethylene resin, ethylene - vinyl acetate copolymer, ethylene - ethyl acrylate copolymer, and the like, can be used together in an amount of less than 50% by weight, and preferably less than 30% by weight, according to the purpose.

In addition, the melt flow rate of the component (A) according to the present invention at a weight of 2.16 kg (measured at 190°C in case of polyethylene, and at 230°C in case of polypropylene and 4-methyl-1-pentene resins), is preferably in the range of 0.001 ∼ 1000 g/10 min, more preferably 0.1 ∼ 100 g/10 min, and even more preferably 1.0 ∼ 50 g/10 min.

An inferior moldability results when the aforementioned melt flow rate is either too low or too high. In addition, an excessively high melt flow rate leads to an inferior product strength.

The component (B) according to the present invention is a compound containing intramolecular unsaturated bonds.

The number of the intramolecular unsaturated bonds needs to be at least 0.5 per 10³ carbon atoms in the entire polyolefin resin composition. A polyolefin resin composition having less than 0.5 intramolecular unsaturated bonds per 10³ carbon atoms leads to little improvement in the adhesiveness, coating and printing properties.

Concrete examples of the compound of the aforementioned component (B) may include compounds containing a plurality of intramolecular unsaturated bonds; and a compound, oligomer, or polymer of at least one compound selected from among polybutadiene (preferably 1,2-polybutadiene), polyisoprene, natural rubber, ethylene-propylene-diene terpolymer, ethylene - aryl (meth)acrylate, ethylene - vinyl (meth)acrylate, and the like. Among the aforementioned, 1,2-polybutadiene, an ethylene-propylene-diene terpolymer (EPDM), and polyisoprene (particularly, 1,2-polybutadiene polymer) are preferred from the perspective of operation. These compounds may be used alone or in combinations of two or more.

The compound of the component (B) preferably possesses a melt flow rate, at a weight of 2.16 kg, in the range of 0.001 ∼ 100 g/10 min, more preferably 0.1 ∼ 100 g/10 min, and most preferably 1.0 ∼ 50 g/10 min. An inferior moldability results when the aforementioned melt flow rate is either too low or too high. In addition, an excessively high melt flow rate leads to an inferior product strength.

The number of the intramolecular unsaturated bonds is preferably 0.5 ∼ 250 per 10³ carbon atoms in the compound of the component (B), more preferably 5 ∼ 250 per 10³ carbon atoms, and most preferably 50 ∼ 250 per 10³ carbon atoms. An excessively small number of the intramolecular unsaturated bonds leads to little improvement in the adhesiveness, coating and printing properties, and the like; while an excessively large number of the intramolecular unsaturated bonds often leads to deterioration in the heat stability.

The aforementioned polyolefin resin composition (M) containing the components (A) and (B) may be obtained by means of appropriately combining the aforementioned polyethylene resin, polypropylene resin, and the like.

Another form of the polyolefin resin composition according to the present invention is a polyolefin resin composition (M1) comprising the aforementioned component (A), which comprises a polyolefin resin (A1) having 3 ∼ 20 carbon atoms, and a component (B) containing intramolecular unsaturated bonds. A composition in which properties of separation and thermal resistance are required, such as in release member, processing sheet, and the like, preferably comprises a homopolymer of an α-olefin having 3 ∼ 20 carbon atoms, or a alternately copolymer thereof, as the component (A1). Preferred and concrete examples of the aforementioned component (A1) may include a polypropylene resin, 4-methyl-1-pentene resin, 1-butene resin, 1-hexene resin, 1-octene resin, 1-decene resin, 1-dodecene resin, and the like. According to the purpose and use, another component (A) may be appropriately blended. For example, when considering a balance between the properties of separability, thermal resistance, and adhesiveness, a non-polar polyolefin resin and an ethylene copolymer containing polar groups, such as an ethylene-vinyl acetate copolymer, ethylene-ethyl acrylate copolymer, and the like, may be blended into the aforementioned polypropylene resin and 4-methyl-1-pentene resin (A1). When considering the molding processability while maintaining thermal resistance and separability, a low-density polyethylene may be used together in an amount less than 49.9% by weight, and preferably in an amount less than 30% by weight.

Examples of the 4-methyl-1-pentene resin may include a homopolymer of 4-methyl-1-pentene, and copolymer of 4-methyl-1-pentene and at least one other type of α-olefin having 2 ∼ 16 carbon atoms.

Herein, as the 4-methyl-1-pentene resin component (A), a non-polar polyolefin resin and an ethylene copolymer containing polar groups such as an ethylene vinyl acetate copolymer, ethylene-ethyl acrylate copolymer, and the like, may be used together in an amount less than 49.9% by weight, and preferably in an amount less than 30% by weight, according to the purpose.

The melt flow rate of the component (A) at a weight of 5.0 kg (at 260°C) is preferably in the range of 10 ∼ 500 g/10 min, more preferably 20 ∼ 300 g/10 min, and further more preferably 50 ∼ 300 g/10 min.

An inferior moldability results when the aforementioned melt flow rate is either too low or too high.

Furthermore, a polyolefin resin composition (M2) is preferred which further comprises (C) an epoxy compound in addition to the aforementioned (A) polyolefin resin, and (B) compound containing intramolecular unsaturated bonds.

A polyhydric epoxy compound having a molecular weight of 3000 or less, containing at least two epoxy groups (oxylane groups) in its molecule is preferred as the epoxy compound of the component (C). The possession of two or more epoxy groups in the molecule leads to a greater adhesive strength than that with only one epoxy group in the molecule.

An epoxy compound (C) having a molecular weight of 3000 or less produces a greater adhesive strength when formed into a resin, wherein a molecular weight of 1500 or less is more preferred.

Examples of the epoxy compound (C) may include a diglycidyl ester of phthalic acid, diglycidyl ester of isophthalic acid, diglycidyl ester of terephthalic acid, diglycidyl ester of adipic acid, trimethylolpropane triglycidyl ether, polyglycerol polyglycidyl ether, pentaerythritol polyglycidyl ether, butanediol diglycidyl ether, diglycidyl ether of hydrogenated bisphenol A, phenolnovolak polyglycidyl ether, epoxidized plant oil, and the like. Among the aforementioned, epoxidized plant oil is preferred from the perspective of ease of use and safety when used as a food packaging material.

Herein, the epoxidized plant oil is a natural plant oil in which unsaturated double bonds are epoxidized using peroxy acid, examples of which may include epoxidized soy bean oil, epoxidized linseed oil, epoxidized olive oil, epoxidized safflower oil, epoxidized corn oil, and the like. These epoxidized plant oils are marketed as, for example, "O-130P" (epoxidized soy bean oil), and "O-180A" (epoxidized linseed oil), both marketed by Asahi Denka Kogyo.

The existence of residual oil components which are not epoxidized, or insufficiently epoxidized when epoxidizing the aforementioned plant oil, does not affect the purpose or essence of the present invention.

In addition, in order to further improve adhesiveness, a polyolefin resin composition (M3) comprising an olefin resin containing a functional group that is reactive with epoxy groups, as the component (D), is preferred.

Examples of the functional group that is reactive with epoxy groups may include a carboxyl group and derivatives thereof, an amino group, phenol group, hydroxyl group, thiol group, and the like. Among the aforementioned, an anhydride group, carboxyl group, and carboxylic acid metal salt are preferred from the perspective of reaction properties and stability.

Examples of methods for introducing a functional group that is reactive with epoxy groups into the olefin resin include mainly co-polymerization methods, and graft methods.

Examples of the olefin copolymer containing a functional group that is reactive with epoxy groups, which are formed according to the co-polymerization method, may include a terpolymer of a compound that is reactive with epoxy groups, and ethylene.

Examples of the compound that is reactive with epoxy groups used in co-polymerization may include, but are not limited to, an α,β-unsaturated carboxylic acid such as (meth)acrylic acid, and the like; an α,β-unsaturated carboxylic acid metal salt such as sodium (meth)acrylate, and the like; an unsaturated carboxylic acid anhydride such as maleic anhydride, itaconic anhydride, citraconic anhydride, and the like; compounds containing hydroxyl groups such as hydroxyethyl(meth)acrylate, (meth)aryl alcohol, and the like; and unsaturated amino compounds such as an aryl amine, and the like. Among the aforementioned, those compounds containing an anhydride group, carboxyl group, or carboxylic acid metal salt, are preferred. Furthermore, in addition to these unsaturated compounds, vinyl alcohol esters such as (meth)acrylate ester, vinyl acetate, vinyl propionate, and the like, may be used in the co-polymerization.

These compounds may be used in combinations of two or more in the ethylene copolymer, and the copolymers comprising these compounds and ethylene may be used in combination of two or more.

Preferred examples of the olefin copolymer containing functional groups that are reactive with epoxy groups, which are formed according to the co-polymerization method, may include an ethylene - maleic anhydride copolymer, and an ethylene - maleic anhydride - (meth)acrylate ester copolymer.

A modified olefin resin to which functional groups that are reactive with epoxy groups are introduced by means of graft modification, is generally formed by means of reacting the unsaturated compound for modification with a polyolefin in a molten or liquid state in the presence of a radical initiator such as peroxide, and the like. Examples of the polyolefin for graft modification may include, in addition to LDPE, LLDPE, HDPE, and PP, an ethylene - propylene copolymer, a propylene - butene -1 copolymer, EVA, E(M)A, an ethylene - vinyl acetate - (meth)acrylate ester copolymer, and the like. These compounds may be used alone or in combinations of two or more.

In addition, a copolymer already containing an acid or derivatives thereof, which are further graft-modified, such as an ethylene - (meth)acrylate ester - maleic anhydride copolymer, may be used without any problems.

The type of the radical initiator used in graft-modification is not particularly limited, however, organic peroxides are generally used. Among the aforementioned, from the perspective of the reaction properties and ease of use, concrete examples may include dicumyl peroxide, 2,5-dimethyl-2,5-bis(t-butylperoxy)hexane, 1,3-bis(2-t-butylperoxyisopropyl)benzene, benzoylperoxide, and the like.

The same unsaturated compound as the aforementioned compound that may undergo co-polymerization with ethylene can be essentially used as the unsaturated compound for modification, as long as it contains a carboxylic acid group, carboxylic anhydride group, metal salt thereof, amino group, or hydroxyl group, and an unsaturated group which is capable of radical reaction.

Examples of the unsaturated compound for modification may include, but are not limited to, an α,β-unsaturated carboxylic acid such as (meth)acrylic acid, and the like; an α,β-unsaturated carboxylic acid metal salt such as sodium (meth)acrylate, and the like; an unsaturated carboxylic acid anhydride such as maleic anhydride, itaconic anhydride, citraconic anhydride, and the like; compounds containing hydroxyl groups such as hydroxyethyl(meth)acrylate, (meth)aryl alcohol, and the like; and amino compounds such as aryl amine, and the like. Among the aforementioned, those compounds containing an anhydride group, carboxyl group, or carboxylic acid metal salt, are preferred.

The mixing amount of the olefin resin containing functional groups that are reactive with the epoxy groups is generally less than 30% by weight, preferably 2 ∼ 25% by weight, and more preferably 5 ∼ 20% by weight of the resin component comprising the polyolefin resin (A) and olefin resin containing functional groups that are reactive with epoxy groups. A mixing amount of 30% by weight or greater results in an improvement of the adhesiveness, but is not economical.

When the resin composition contains an epoxy compound, the epoxy compound (C) reacts with an oxidized polar group generated at the time of air-oxidization of a synthetic resin, such as polyolefin resin and the like, which is exposed to air for air-oxidization upon extrusion from an extruder or T-die type extruder, and then grafted to a polyolefin resin or the like. Non-reactant epoxy groups remaining in the molecular structure of this grafted epoxy compound are assumed to improve the adhesive effects.

In addition, adding the aforementioned olefin resin (D) containing functional groups that are reactive with the epoxy groups improves the adhesive effects, since the functional groups that are reactive with epoxy groups react with the epoxy compound (C) when extruded from the extruder or T-die type extruder, to increase the amount of the epoxy compound grafted to the resin composition.

In the polyolefin resin composition (M) according to the present invention, 99.9 ∼ 50% by weight of the aforementioned component (A), and 0.1 ∼ 50% by weight of the component (B), are preferably blended. More preferably, 99.5 ∼ 60% by weight of the component (A) and 0.5 ∼ 40% by weight of the component (B), and most preferably 99.0 ∼ 70% by weight of the component (A) and 1.0 ∼ 30% by weight of the component (B) are blended. If the amount of the component (B) is too small (i.e., the amount of the component (A) is excessively large), the adhesive properties are not generated; while if the amount of the component (B) is excessively large (i.e., the amount of the component (A) is too small), the thermal resistance deteriorates at the time of kneading and molding.

This aspect is also seen with the polyolefin resin composition (M1) wherein the component (A) is a polyolefin resin (A1) having 3 ∼ 20 carbon atoms.

In the polyolefin resin composition (M2), 99.8 ∼ 50% by weight of the component (A), 0.1 ∼ 50% by weight of the component (B), and 0.01 ∼ 5% by weight of the component (C) are preferably blended. The mixing amount of the epoxy compound (C) is 0.01 ∼ 5 parts by weight, and preferably 0.01 ∼ 0.9 parts by weight, to 100 parts by weight of the polyolefin resin (A). A mixing amount of the epoxy compound (C) of less than 0.01 parts by weight leads to a smaller improvement in the adhesive strength from the epoxy compound. A mixing amount exceeding 5 parts by weight leads to an improved adhesive strength, but also to problems such as blocking due to stickiness of the laminated member, odor, and the like.

As described above, in the polyolefin resin composition (M3), the mixing amount of the olefin resin (D) containing functional groups that are reactive with epoxy groups is generally less than 30% by weight of the resin component comprising the polyolefin resin (A) and olefin resin containing functional groups that are reactive with epoxy groups.

The melt flow rate of the polyolefin resin composition according to the present invention at a weight of 2.16 kg is preferably in the range of 0.001 ∼ 1000 g/10 min, more preferably 0.1 ∼ 100 g/10 min, and most preferably 1.0 ∼ 50 g/10 min. If the melt flow rate is either too low or too high, an inferior moldability results. In addition, an excessively high melt flow rate leads to an inferior product strength.

Examples of the blending method for providing the aforementioned composition may include any conventional mixing operation, such as a tumbler mixer method, Henschel mixer method, banbury mixer method, extrusion-granulation method, and the like.

Furthermore, in the polyolefin resin composition, 100 parts by weight or less, and preferably 5 ∼ 50 parts by weight, of an inorganic and/or organic filler may be blended per 100 parts by weight of the polyolefin resin composition.

Examples of the aforementioned filler may include carbonates of metal such as calcium carbonate, magnesium carbonate, and the like; hydroxide; oxides of metal such as titanium oxide, zinc oxide, and the like; inorganic fillers such as silica, talc, and the like; and organic fillers.

Furthermore, other additive components such as other resins, rubber, pigment, dye, antioxidant, UV absorbent, antistatic agent, lubricant, fatty acid metal salt, acid absorbent, cross-linking agent, foaming agent, neutralizer, disperser, weather-proof improvement agent, filler, and the like, may be blended to the extent of not deviating from the purpose of the present invention.

The polyolefin resin composition according to the present invention can be used in various molding processes such as injection-molding, hollow-molding, extrusion molding, and the like, and may also be formed into a molten film for extrusion lamination, film, tube, pipe, and the like. In particular, it can be used to form a laminated member in which the adhesion to other layers is remarkably improved by means of extrusion-lamination molding. The molded product may be treated with ozone in the molten or heated molding states, or alternatively after molding.

As such, by means of performing the ozone treatment, the adhesiveness, coating properties, and printing properties are remarkably improved.

A polyolefin resin (A1) having 3 ∼ 20 carbon atoms, and in particular, a polypropylene resin and 4-methyl-1-pentene resin, are preferred as the polyolefin resin (A) of the polyolefin resin composition for use as the ozone-treated molded product.

### [Laminated Member]

According to a first embodiment of a laminated member of the present invention, a polyolefin resin composition comprising the aforementioned polyolefin resin (A1) having 3 ∼ 20 carbon atoms, and a compound (B) containing intramolecular unsaturated bonds is provided, wherein a laminated member is formed from a layer comprising a polyolefin resin composition (M1) containing at least 0.5 intramolecular unsaturated bonds per 10³ carbon atoms in the polyolefin resin composition, and a base material.

In addition, according to a second embodiment of the laminated member of the present invention, a polyolefin resin composition comprising the aforementioned polyolefin resin (A), compound containing intramolecular unsaturated bonds (B), and an epoxy compound (C) is provided, wherein a laminated member is formed from a layer comprising a polyolefin resin composition (M2) containing at least 0.5 intramolecular unsaturated bonds per 10³ carbon atoms in the polyolefin resin composition, and a base material.

According to a third embodiment of the laminated member of the present invention, a polyolefin resin composition comprising the aforementioned polyolefin resin (A), compound containing intramolecular unsaturated bonds (B), an epoxy compound (C), and an olefin resin (D) containing functional groups that are reactive with the epoxy groups is provided, wherein a laminated member is formed from a layer comprising a polyolefin resin composition (M3) containing at least 0.5 intramolecular unsaturated bonds per 10³ carbon atoms in the polyolefin resin composition, and a base material.

The base material used herein contains a film, sheet, or the like (hereinafter, just referred to as "sheet").

In addition, the base material may be appropriately selected from among paper, woven cloth, and non-woven cloth, according to the use. Examples of the paper may include board paper, high-quality paper, coating paper, kraft paper, glassine paper, thin leaf paper, inorganic-fiber-mixed paper, synthetic-resin-mixed paper, and the like. In addition, any material used as a base material in a laminated member may be included, including polyamides such as polyamide 6, polyamide 66, polyamide 6 · 66, polyamide 12, and the like; polyesters such as polyethylene terephthalate, polybutylene terephthalate, polyethylene naphthalate (hereinafterm referred to as PEN), and the like; thermoplastic resins such as a saponificated copolymer of ethylene vinyl acetate, branched low-density polyethylenes, linear low-density polyethylenes, medium- and high-density polyethylenes; propylene polymers, an ethylene - (meth)acrylate ester copolymer, polycarbonate, polyacrylonitrile, and the like; polyvinylidene chloride; and the like. In addition, aluminum, iron, copper, magnesium, tin, metal foils and metal boards of alloys principally comprising the aforementioned, cellophane, and the like, may also be included. Among the aforementioned, polyester and polyamide are particularly preferred, and PET, PBT, and PEN are even more preferred.

In addition, according to the use, an evaporation treatment with aluminum, aluminum oxide, silicone oxide, and the like, or a coating treatment with polyvinylidene chloride, and the like, may be performed. Furthermore, uni- or bi-axial orientation may be performed. In addition, printing may be performed partially or entirely on one side or both sides.

The laminated member according to the present invention is not just limited to a two-layer structure comprising a base material and polyolefin resin composition layer, but may also comprise other layers as long as the effects of the present invention are not impeded.

Concrete examples of the laminated member may include PP composition layer/paper layer, 4MP1 composition layer/paper layer, PP composition layer/paper layer/PP composition layer, 4MP1 composition layer/paper layer/4MP1 composition layer, PP composition layer/OPP layer, PP composition layer/paper layer/PP composition layer/OPP layer, PP composition layer/OPP layer/PP composition layer, PP composition layer/PA layer, PP composition layer/PA layer/PP composition layer, PP composition layer/ONY layer, PP composition layer/ONY layer/PP composition layer, PP composition layer/PEs layer, PP composition layer/PEs layer/PP composition layer, PP composition layer/OPEs layer, PP composition layer/OPEs layer/PP composition layer, PP composition layer/EVOH layer, PP composition layer/EVOH layer/PP composition layer, PP composition layer/non-woven cloth layer, PP composition layer/Al foil layer, PP composition + HDPE layer/paper layer/PP composition layer, and the like.

(Herein, PP represents polypropylene; 4MP1 represents 4-methyl-1-pentene resin; OPP represents bi-axially oriented polypropylene; PA represents polyamide; ONY represents bi-axially oriented polyamide; PEs represents polyester; OPEs represents bi-axially oriented polyester; EVOH represents an ethylene - vinyl acetate saponificated copolymer; Al foil represents aluminum foil; and HDPE represents high-density polyethylene).

The method for manufacturing the laminated member by means of lamination molding according to the present invention is a method wherein at least one side of a base material is laminated with and adhered to the aforementioned resin composition of the present invention according to an extrusion-lamination method; or alternatively surface treatment of the base material and/or the aforementioned resin composition film is performed, thereby producing lamination and adhesion. According to this method, the laminated member can be formed without lowering adhesive strength even by low-temperature, high-speed molding.

For example, the method according to the present invention preferably comprises: (1) a supply process for supplying a base material; (2) a resin surface treatment process wherein ozone treatment is performed on a molten film comprising a polyolefin resin composition containing at least 0.5 intramolecular unsaturated bonds per 10³ carbon atoms, wherein said polyolefin resin composition comprises a polyolefin resin, a compound containing intramolecular unsaturated bonds, and in some cases an epoxy compound, and a polyolefin resin containing functional groups that are reactive with the epoxy groups; and (3) a lamination process wherein at least one side of the supplied base material is pressed and adhered to the aforementioned ozone-treated molten film.

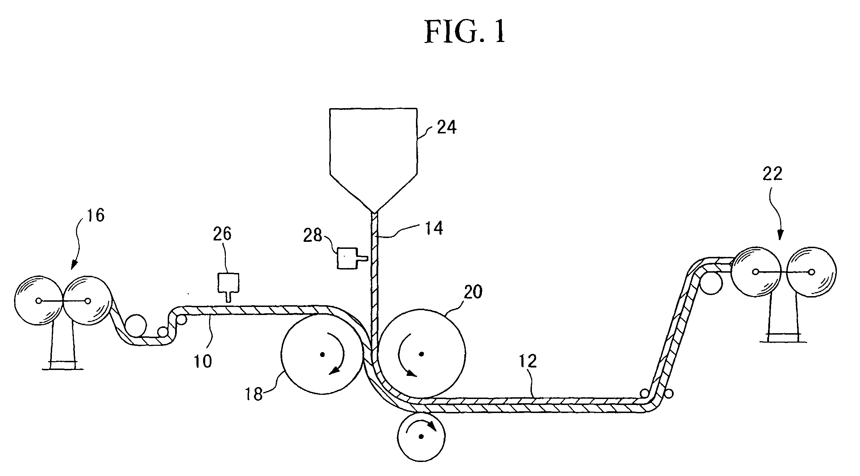

For example, as shown in Figure 1, in the process for supplying a base material, a base material 10 comprising paper or the like is delivered from a delivery device 16 at a predetermined speed, between a nip roll 18 and cooling roll 20. Simultaneously, in the resin surface treatment process, the aforementioned polyolefin resin composition is extruded from an extruder 24 in a molten film state, on the cooling roll 20 side between the nip roll 18 and cooling roll 20, to treat the molten film 14 with ozone. In general, a T-die type extruder may be used as the device for performing extrusion-lamination molding.

Furthermore, in the lamination process, the base material 10 and molten film 14 are pressed and adhered to each other for lamination between the nip roll 18 and cooling roll 20. Herein, the ozone-treated surface of the molten film 14 is in contact with the base material 10. Subsequently, a laminated member comprising the resultant base material 10 and polyolefin resin composition layer 12 is reeled into a reeling device 22 in the reeling process, to provide a finished product.

According to the present invention, low-temperature, high-speed molding is performed at a molding temperature of 300°C or lower and a molding speed of 200 m/min or higher, and in particular, at a molding temperature in the range of 200 ∼ 300°C. The present invention can provide remarkable effects of maintaining the adhesive strength, even with low-temperature, high-speed molding at temperatures in the range of 230 ∼ 270°C, and at a molding speed of 200 m/min.

As the aforementioned surface treatment, a conventional surface treatment such as corona treatment, ozone treatment, flame treatment, and the like, can be employed. Among the aforementioned, ozone treatment is preferred. Furthermore, it is preferable to laminate and adhere the ozone-treated polyolefin resin composition film and corona discharge-treated base material via the aforementioned treated surfaces, as this produces more effective results.

The ozone treatment may be performed by means of spraying ozone from an ozone supply source onto the surface of the molten resin film, which is supplied from a T-die type extruder, to be adhered to the base material. The amount of ozone for the treatment is in the range of 5 ∼ 100 g/hr, and preferably 100 ∼ 500 g/hr.

As a means of improving the inter-layer adhesive strength, ozone treatment is conventionally employed. However, the present invention provides great reforming effects from the ozone treatment by means of reacting unsaturated bonds in the polyolefin resin composition with ozone. Consequently, the adhesive strength to other layers is dramatically improved to an extent that is incomparable to the conventional method, due to the multiplied effects of the polyolefin resin composition according to the present invention and ozone treatment.

By means of performing the ozone treatment, it is possible to perform lamination without reducing the adhesive strength at a resin temperature of 200 ∼ 300°C, and preferably at a lower temperature between 240 ∼ 280°C, during extrusion molding.

In addition, the base material may also undergo surface treatment such as preheating treatment, corona treatment, flame treatment, UV treatment, and the like. Among the aforementioned, corona treatment is preferred since the adhesive strength between a corona treated-base material and an ozone-treated polyolefin resin composition layer is extremely high. It is preferable to perform the corona treatment at 1 ∼ 300W min/m², and more preferably at 10 ∼ 100 W min/m², using a corona discharge device.

According to the present invention, it is possible to manufacture a laminated member with a high inter-layer adhesive strength at a high-speed molding of 200 ∼ 400 m/min, by means of low-temperature lamination.

The method for manufacturing a laminated member by means of extrusion lamination molding is effective not only in the case of extrusion-laminating a polyolefin resin composition layer onto at least one side of a base material, but also in the case of extrusion-laminating two or more kinds of polyolefin resin compositions, or a polyolefin resin composition layer and another resin layer provided thereon onto one side of a base material. In addition, the aforementioned method is also effective in the case of extrusion-laminating a polyolefin resin composition onto both sides of a base material.

According to the present invention, an adhesive or anchor coating agent is not required between the base material and polyolefin resin composition layer; however, an adhesive, anchor coating agent, and the like, may be used.

A T-die type extruder may be generally used as the device for extrusion-lamination molding. The thickness of the laminated layers is not particularly limited, and optionally determined.

In addition, with regard to a laminated member containing a layer comprising the aforementioned 4-methyl-1-pentene resin composition, it is possible to control the wettability of the surface, and adjust the adhesiveness of the surface, by means of regulating the lamination temperature during the extrusion-lamination process of the laminated member.

In addition, a plurality of layers containing a layer comprising the aforementioned 4-methyl-1-pentene resin composition and a layer comprising only the 4-methyl-1-pentene resin, may be easily manufactured according to a co-extrusion lamination method comprising a resin surface treatment process wherein the 4-methyl-1-pentene resin composition and 4-methyl-1-pentene resin are co-extruded, and the molten film comprising the aforementioned 4-methyl-1-pentene resin composition is treated with ozone; and a lamination process wherein at least one side of the supplied base material is pressed to the ozone-treated surface of the aforementioned molten film. In addition, it is also possible to form a plurality of layers according to a so-called "sandwich lamination" method, wherein a film comprising 4-methyl-1-pentene resin is supplied onto a side of the cooling roll, pressed and laminated.

In the case of a laminated member containing a layer comprising a 4-methyl-1-pentene resin composition, it is possible to provide a laminated member with a high inter-layer adhesive strength, at a low molding temperature and high molding speed, without losing the superior transparency, thermal resistance, gas permeability, chemical resistance, and the like, of the 4-methyl-1-pentene resin. In particular, it is possible to provide a greater inter-layer adhesive strength by means of co-employing an ozone treatment.

In particular, a laminated member comprising a structure of 4-methyl-1-pentene resin layer/ 4-methyl-1-pentene resin composition layer/ base material, exhibits a high thermal resistance and durability, in addition to a high adhesive strength.

### [Release member]

A release member is used in various labels, pressure sensitive adhesive sheets, adhesive sheets, coatings for synthetic resin films and casting films, and the like.

The aforementioned polyolefin resin composition according to the present invention is suitable for a use in this release member.

The release member according to the present invention comprises a layered structure wherein a release material layer is formed onto a base material via a resin layer; or alternatively a layered structure wherein a resin layer is formed onto a base material, and the surface of the resin layer is exposed in order to function as a release material layer.

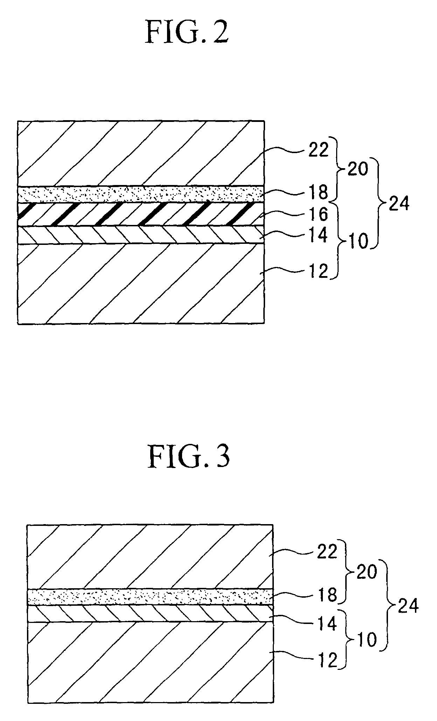

To begin with, a release member comprising a layered structure wherein a release material layer is formed onto a base material via a resin layer, will be described. For example, as the release member 10 shown in Figure 2, a release member having a structure wherein a release material layer 16 is laminated onto a base material layer 12 via a resin layer 14 is provided.

The base material layer is appropriately selected according to the use, and not particularly limited. However, in general, a synthetic resin, paper, woven cloth, or non-woven cloth is used. Examples of the paper may include high-quality paper, kraft paper, glassine paper, inorganic fiber-mixed paper, synthetic resin-mixed paper, and the like.

As a release material layer, various conventional materials are used, examples of which may include (addition-reaction type, and condensation-reaction type) silicone resins, silicone · alkyl copolymers, and mixtures thereof in addition to polyolefin resins, and the like. In addition, a thermal-curing type as well as radiation-curing type release materials are preferred, examples of which may include those disclosed in the Japanese Patent Application, First Publication Number, Hei 3-79685.

The resin layer possesses a layer comprising the aforementioned polyolefin resin composition containing a polyolefin resin (A) and a compound having intramolecular unsaturated bonds (B), wherein the aforementioned polyolefin resin composition comprises a polyolefin resin composition (M) in which the number of intramolecular unsaturated bonds in the polyolefin resin composition is at least 0.5 per 10³ carbon atoms; and/or a polyolefin resin composition (M2) containing an epoxy compound (C); and/or a polyolefin resin composition (M3) containing an olefin resin composition having functional groups that are reactive with the epoxy groups (D).

These polyolefin resin compositions are able to provide high adhesive strengths to a base material layer of different materials, and a release material layer, respectively, even at a low lamination temperature. In addition, even when the lamination molding speed is high, it is possible to maintain a high adhesive strength.

In addition, when the resin layer comprises a polypropylene resin composition it is possible to provide a release member or separable laminated member having a high thermal resistance.

The aforementioned release member comprises a laminated member having a three-layer structure comprising a base material layer, resin layer, and release material layer. However the present invention is not limited thereto, and may comprise other layers as long as the effects of the present invention are not lost. For example, it is possible to provide another layer on the side of the base material layer, on which the resin layer is not formed. In addition, a five-layer structure is also possible in which a resin layer and release material layer are formed on each side of the base material layer, wherein both sides function as a release material layer. A structure comprising a plurality of resin layers is also possible.

The thickness of each layer, i.e., resin layer, base material layer, release material layer, and the like, is not limited, and may be appropriately determined within a range wherein each layer serves its purpose.

The manufacturing method for this release member is not particularly limited, as long as it comprises a lamination method that produces a high adhesive strength for each layer. A manufacturing method in which the lamination is performed by means of extrusion-lamination molding, as in the method for manufacturing the laminated member described above, is ideal.

In other words, a method is preferred which comprises the processes of: (1) a supply process for supplying a base material; (2) a resin surface treatment process wherein ozone treatment is performed on a molten film comprising a polyolefin resin composition containing at least 0.5 intramolecular unsaturated bonds per 10³ carbon atoms, wherein said polyolefin resin composition comprises a polyolefin resin, a compound containing intramolecular unsaturated bonds; (3) a lamination process wherein at least one side of the supplied base material is pressed and adhered to the aforementioned ozone-treated molten film; and (4) a process for providing a release material layer onto the resin layer of the resultant laminated member.

In other words, the process for supplying a base material layer comprises supplying a base material layer formed from paper or the like between a nip roll and a cooling roll. At the same time, the resin surface treatment process comprises extruding the aforementioned polyolefin resin composition as a molten film, and then treating this molten film with ozone. The ozone-treated surface of the molten film is subsequently placed in contact with a base material layer to produce a laminated member comprising a base material layer and resin layer.

Furthermore, the release material layer 16 may be formed onto the resin layer 14 of the laminated member by, for example, coating, heating and curing a silicone resin or the like. In addition, it is possible to simultaneously mold a release material layer 16 by means of a co-extrusion/lamination method in which co-extrusion of the polyolefin resin composition to form the aforementioned resin layer 14 and the resin to form the release material layer 16 is performed. In addition, is also possible to simultaneously form the release material layer 16 by means of supplying the resin film to form said release material layer 16 between the cooling roll and resin layer, pressing and laminating the aforementioned in a process called "sandwich lamination".

In addition, by means of adjusting the lamination temperature at the time of performing extrusion/lamination of the resin layer, it is possible to regulate the wettability of the surface of the resin layer. As a result, during the molding of the release material layer, the wettability of the surface of the resin layer may be adjusted as necessary.

By means of molding a non- release member 20 onto the release material layer 16, e.g., as shown in Figure 2, the release member is formed into a separable laminated member 24.

The non- release member 20 comprises a non-release base material 22 formed from paper, PET film or the like, and an adhesive layer 18 that is separable and adheres the aforementioned non-release base material 22 onto the release material layer 16 in a separable manner.

Depending on the objective, the non-release base material 22 may undergo printing, and then be supplied for use.

The adhesive layer 18 may be appropriately determined from any material that has a high adhesive strength to the non-release base material 22, and a low adhesive strength to the release material layer 16.

In the following, a release member which comprises a base material layer and resin layer, in which the resin layer functions as a release material layer, is described. As an example, a release member 10 in which a resin layer 14 is laminated onto a base material layer 12, is shown in Figure 3.

This base material layer may be appropriately determined according to the use, and is not particularly limited. The base material layer in the aforementioned release member may hence be appropriately used.

However, as described later, the aforementioned resin layer, which comprises polyolefin resin composition comprising (A) a polyolefin resin, and (B) a compound containing intramolecular unsaturated bonds, regulates the adherence thereof, such that non-adherence is also possible. Thus, in the release member of this example, the resin layer itself possesses separating properties.

In other words, on one hand, when this layer comprises the polyolefin resin composition, the adhesive strength to a different type of base material is high, such that a high adhesive strength is generated even when the lamination temperature is low; in addition, is also possible to maintain a high adhesive strength even when increasing the lamination-molding speed. On the other hand, it is also possible to produce separating properties at the same time.

In this state, as the (A) component, a highly crystalline resin (A1) such as a polypropylene resin, 4-methyl-pentene resin, or the like, has both high separating properties and thermal resistance, and is thus preferable.

Moreover, the aforementioned release member was described with regard to a laminating member comprising a two-layer structure comprising a base material layer and resin layer. However, the present invention is not limited to the aforementioned. It is also possible to provide another layer as long as it does not degrade the usage effects of the present invention. For example, it is possible to provide another optional layer on the surface of the side in which the resin layer of base material layer is not provided. In addition, it is also possible to form a plurality of resin layers, such as providing resin layers on both surfaces of the base material layer to form a three-layer structure in which both surfaces comprise resin layers in forming the release member.

Furthermore, the thickness of each layer, e.g., base material layer, resin layer and the like, are not particularly limited, and may be appropriately set within a range in which the function of each layer is realized.

This release member may be manufactured according to the same method as the aforementioned release member.

The surface of the resin layer which has not been treated with ozone is able to exhibit non-adherence properties as a release material layer, by means of lowering the lamination temperature to drastically suppress the oxidation of the resin layer surface.

In such a manner, in this release member, the particular resin layer that is capable of low-temperature lamination possesses one surface with high adherence properties and another surface with low adherence properties, and thus functions sufficiently well as a release material layer regardless of its extremely high adhesiveness to the base material.

Accordingly, in this release member, neither a silicone resin nor a coating process thereof, is required, so that it is possible to reduce the number of layers in the release member, and hence reduce the number of processes.

This release member can form a separable laminated member 24 by means of forming a non- release member 20 onto a resin layer 14, as shown in Figure 3.

The non- release member 20 is provided with a non- release base material 22 comprising paper, PET film, or the like, and an adhesive layer 18 that adheres the non-release base material 22 onto the resin layer 14 in a separable manner.

The non- release base material 22 may undergo printing and the like, according to the usage objective.

The adhesive layer 18 may be appropriately selected from among materials that exhibit a high adhesive strength to the non- release base material 22, and low adhesive strength to the resin layer 14.

In this release member, a filler layer, silicone resin, and the like, are not necessary, which in turn reduces the number of layers, and provides for easier and low-cost manufacturing.

### [Processing Sheet]

A multi-layered sheet, wherein various types of woven cloth are provided with a surface material comprising polyvinyl chloride, urethane, or the like, is widely used for the bonding of shoes, bags, belts, pocket books, wall-coating materials, and the like. These sheet materials are used after undergoing a dimensional design process by means of forming rugged prints on the surface thereof; or when used, in particular, for shoes, bags, and the like, after treating synthetic leather in order to resemble natural leather.

In order to provide the embossing, a method is generally employed, in which a press board or roll, formed with embossing prints on its surface, is pressed onto the surface of the material to be embossed in order to transfer the prints. However, when producing only a small quantity, a particular method is employed in which a processing sheet provided with embossing on its surface is used.

The aforementioned polyolefin resin composition according to the present invention is suitable for a use as this processing sheet.

The processing sheet according to the present invention possesses a layered structure wherein a processing layer is formed onto a base material, or wherein a surface layer is formed via an adhesive layer onto a base material.

To begin with, a processing sheet with a layered structure wherein a processing layer is formed onto a base material will be described.

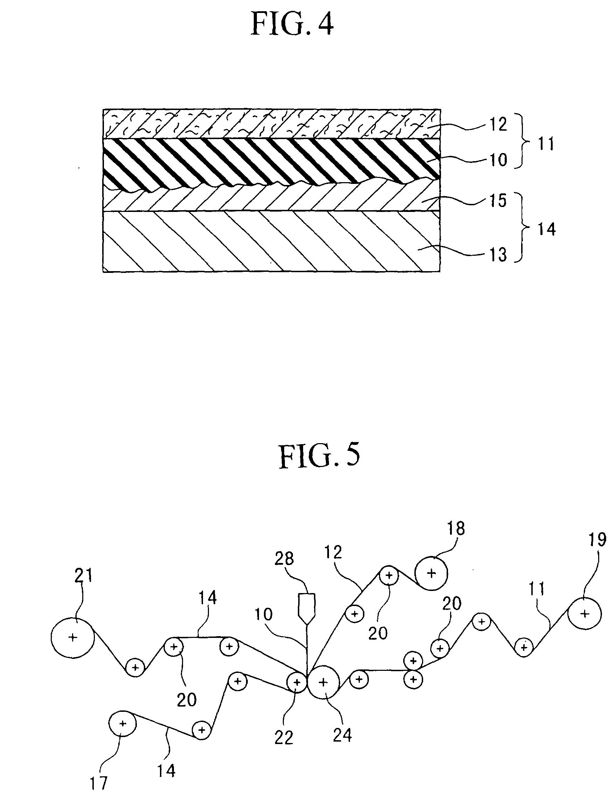

A processing sheet is provided which comprises at least a base material 13 and a processing layer 15, as illustrated by the processing sheet 14 in Figure 4.

The base material may be appropriately selected according to the purpose, and is not particularly limited. However, paper, woven cloth, and non-woven cloth are generally used. Examples of the paper may include high-quality paper, kraft paper, glassine paper, inorganic fiber-mixed paper, synthetic resin-mixed paper, and the like.

The processing layer possesses a layer comprising the aforementioned polyolefin resin composition containing a polyolefin resin (A) and a compound having intramolecular unsaturated bonds (B), wherein the aforementioned polyolefin resin composition comprises a polyolefin resin composition (M) in which the number of intramolecular unsaturated bonds in the polyolefin resin composition is at least 0.5 per 10³ carbon atoms; and/or a polyolefin resin composition (M2) containing an epoxy compound (C); and/or a polyolefin resin composition (M3) containing an olefin resin composition having functional groups that are reactive with the epoxy groups (D). Among the aforementioned, the polyolefin resin comprising component (A) is preferably a polyolefin resin having 3 ∼ 20 carbon atoms (A1). In particular, a polypropylene resin is preferred. In addition, 4-methyl-1-pentene resin is also preferred as the component (A1).

Furthermore, the aforementioned processing sheet comprises a laminated member having a two-layer structure comprising a base material and processing layer. However, the present invention is not limited thereto, and may further comprise other layers as long as the effects of the present invention are not lost. For example, another appropriate layer may be formed on the side of the base material on which a processing layer is not formed, or alternatively the processing layer may comprise a plurality of layers.

Furthermore, the thickness of each layer, e.g., the processing layer and base material layer is not limited, and may be appropriately determined as long as each layer retains its function.

The method for manufacturing a processing sheet is not particularly limited, as long as the method for lamination increases the inter-layer adhesive strength. The aforementioned method for manufacturing a laminated member can be employed. A method for performing the lamination by means of extrusion-lamination is preferably employed. For example, a method is preferred which comprises: (1) a supply process for supplying a base material; (2) a resin surface treatment process wherein ozone treatment is performed on a molten film comprising a polyolefin resin composition containing at least 0.5 intramolecular unsaturated bonds per 10³ carbon atoms; and (3) a lamination process wherein at least one side of the supplied base material is pressed and adhered to the aforementioned ozone-treated molten film.

Furthermore, performing embossing of the processing layer is not always necessary; however, when the processing sheet is used as an embossing transfer sheet, an embossed press board or roll may be pressed thereon.

The surface of the processing layer may be preferably treated with a silicone releasing agent, if necessary.

In addition, by means of adjusting the temperature for lamination during the extrusion-lamination process of the processing layer, it is possible to control the wettability of the transfer surface, and thereby adjust the adhesiveness of the surface.

When using this processing sheet for embossing, e.g., as in the manufacture of synthetic leather, a processing sheet 14, the surface of which has been embossed, is first delivered from a delivery roll 21 and introduced between a pinching roll 22 and cooling roll 24, via a guide roll 20 or the like.

In addition, base cloth 12 is also delivered from a delivery roll 18 and introduced between a pinching roll 22 and cooling roll 24.

Furthermore, a surface material 10 comprising a urethane resin, PVC, or the like, is delivered, in a molten film state, from a T-die extruder 28 or the like, between the pinching roll 22 and cooling roll 24, and introduced between a processing sheet 14 and base cloth 12. The temperature for extrusion molding of the resin is in the range of 100 ∼ 250°C.

The processing sheet 14, surface material 10, and base cloth 12 are pressed and adhered in between the pinching roll 22 and cooling roll 24, and the surface material 10 is simultaneously embossed, cooled and solidified, to produce a multi-layered synthetic leather 11 comprising the surface material 10 and base cloth 12, as shown in Figure 4.

Subsequently, the multi-layered synthetic leather 11 comprising the surface material 10 and base cloth 12 is reeled into a reeling roll 19, while the processing sheet 14 is pulled and reeled into another reeling roll 17, in a different direction than that of reeling roll 19 for the multi-layered synthetic leather. This processing sheet 14 may be used a plurality of times. In this manner, multi-layered synthetic leather can be continuously manufactured.

In addition, synthetic leather comprising a resin film with embossing provided thereon can be manufactured by means of coating the unfolded, flat processing sheet, with a urethane resin, PVC, or the like; thermally curing to yield a resin film; and subsequently separating the resin film from the processing sheet.

In methods in which a press board or roll provided with embossing thereon is used to manufacture synthetic leather, when the life of the press board or roll comes to an end, or when the embossing design requires alteration, it is necessary to change this large press board or roll, which is both a painstaking and costly process. Furthermore, it is necessary to stabilize the resin by drying after embossing, which further lengthens the time required for manufacturing.

However, in the method in which a processing sheet is used, as in the aforementioned method shown in Figure 5, it is possible to process various types of embossings by means of changing only the processing sheet 14. In this method, since the resin is instantly cooled and solidified, this in turn allows for ease in manufacture of multi-layered synthetic leather within a short time period, at low costs.

The thickness of each layer of the multi-layered synthetic leather manufactured in such a manner, cannot be defined due to differences in use. However, the thickness of the surface material is preferably at least 40 µm for the purpose of the embossing process. In addition, the maximum thickness should be no greater than 500 µm from the perspective of molding processability. On the other hand, the thickness of the base cloth may range from 10 µm to 500 µm. In addition, depending on the use, the processing sheet may comprise a laminated member having three or more layers, wherein for example, a protective layer or the like, is formed in addition to the base cloth and surface material layers.

In addition, the processing sheet exhibits high thermal resistance when the processing layer comprises polypropylene resin composition.

In addition, the processing sheet wherein the aforementioned processing layer has a structure comprising a plurality of layers comprising the aforementioned 4-methyl-1-pentene resin composition layer, and 4-methyl-1-pentene resin layer, may be easily manufactured according to, for example, a co-extrusion lamination method. This co-extrusion lamination method comprises: a resin surface treatment process in which 4-methyl-1-pentene resin composition and 4-methyl-1-pentene resin are co-extruded, and the molten film comprising the 4-methyl-1-pentene resin composition is treated with ozone; and a lamination process wherein the ozone-treated surface of the aforementioned molten film is pressed and adhered to at least one side of the supplied base material. In addition, the aforementioned processing sheet may be manufactured by means of a so-called "sandwich lamination" process, wherein lamination is performed by means of supplying, pressing and adhering a film comprising the 4-methyl-1-pentene resin to the cooling roll side thereof.

In addition, the processing sheet exhibits a particularly high thermal resistance when the processing layer comprises a 4-methyl-1-pentene resin composition.

In particular, a processing sheet having a structure comprising 4-methyl-1-penene resin layer/ 4-methyl-1-pentene resin composition layer/ base material, exhibits a high inter-layer adhesive strength, as well as a high thermal resistance and superior durability.

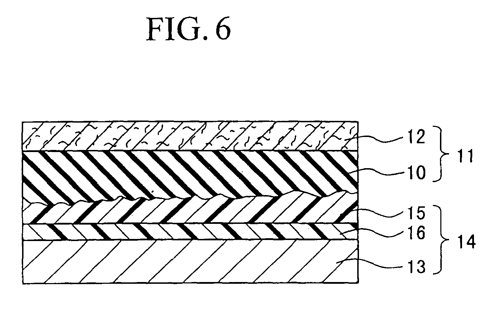

In the following, a processing sheet having a structure in which a surface layer is formed onto a base material via an adhesive layer, is described. This processing sheet comprises at least a base material 13, adhesive layer 16, and surface layer 15, as illustrated by the processing sheet 14 shown in Figure 6.

The base material may be appropriately selected according to the use, and is not particularly limited. The base material used for the aforementioned processing sheet may also be used.

The adhesive layer possesses a layer comprising the aforementioned polyolefin resin composition containing a polyolefin resin (A) and a compound having intramolecular unsaturated bonds (B), wherein the aforementioned polyolefin resin composition comprises a polyolefin resin composition (M) in which the number of intramolecular unsaturated bonds in the polyolefin resin composition is at least 0.5 per 10³ carbon atoms; and/or a polyolefin resin composition (M2) containing an epoxy compound (C); and/or a polyolefin resin composition (M3) containing an olefin resin composition having functional groups that are reactive with the epoxy groups (D). Among the aforementioned, the polyolefin resin comprising component (A) is preferably a polyolefin resin having 3 ∼ 20 carbon atoms (A1).

This polyolefin resin composition exhibits a high adhesive strength to base materials or the like which comprise different materials, even at low lamination temperatures, and is able to maintain a high adhesive strength even at high lamination-molding speeds.

As a surface layer, a homopolymer or copolymer of α-olefin having 3 ∼ 20 carbon atoms, or a composition of thereof with another polyolefin, are preferred. Among the aforementioned, a 4-methyl-1-pentene resin, or a composition thereof, is preferred. Examples of the composition may include alternately mixtures of a polyethylene resin, polypropylene resin, 4-methyl-1-pentene resin, and the like. Among the aforementioned, particularly when considering the thermal resistance, separating properties, and adhesive strength with the adhesive layer, a mixture of a polypropylene resin and 4-methyl-1-pentene resin is preferred for its performance and cost.

Examples of the 4-methyl-1-pentene resin may include a homopolymer of 4-methyl-1-pentene, a copolymer of 4-methyl-1-pentene and one or more types of another α-olefin having 2 ∼ 16 carbon atoms, and the like.

In addition, the melt flow rate (260°C) of the 4-methyl-1-pentene resin component at a weight of 5.0 kg is preferably 20 ∼ 500 g/10 min, and more preferably 50 ∼ 300 g/10 min.

A melt flow rate that is excessively high or excessively low leads to an inferior moldability.

Preferred concrete examples of the polyolefin for the surface layer may include a homopolymer of propylene (homopolypropylene), block copolymer, random copolymer, and a combination of two or more thereof.

Examples of the comonomer of a block copolymer or random copolymer may include α-olefins with the exception of propylenes, e.g., ethylene, butene-1, pentene-1, hexene-1, and the like. Among the aforementioned, ethylene is particularly preferred. The amount of propylene in the copolymer is preferably 60 ∼ 100 mol %, and in particular, 80 ∼ 99 mol %.

In a block copolymer using ethylene as the α-olefin, the intramolecular ethylene - propylene blocks disperse in homopolypropylene blocks, exhibiting rubber elasticity, and functioning as a rubber component. The amount of the rubber component is preferably 10 ∼ 25% by weight in the block copolymer.

The melt flow rate (230°C) of the polypropylene component compound at a weight of 2.16 kg is preferably 10 - 100 g/10 min, and more preferably 20 ∼ 80 g/10 min. An excessively high or excessively low melt flow rate leads to an inferior moldability.

The surface layer according to the present invention may solely comprise a 4-methyl-1-pentene resin. However, in order to improve the adhesive strength to the adhesive layer, the surface layer preferably comprises a polyolefin composition layer. In particular, in order to maintain the thermal resistance, separating properties, and adhesive strength to the adhesive layer, a 4-methyl-1-pentene resin composition into which a polypropylene is mixed, is preferred.

The 4-methyl-1-pentene resin composition preferably comprises a mixture of 2 ∼ 50% by weight of the aforementioned 4-methyl-1-pentene resin component, and 98 ∼ 50% by weight of the polyolefin component. More preferably, the aforementioned mixture comprises 10 ∼ 20% by weight of the 4-methyl-1-pentene resin component, and 90 ∼ 80% by weight of the polyolefin component. From the perspective of the separating properties and thermal resistance, a higher the content of 4-methyl-1-pentene resin is more preferred. However, 4-methyl-1-pentene resin is, in general, expensive, and from an economic perspective and the standpoint of maintaining the adhesive strength, the aforementioned range is preferred.

In addition, the melt flow rate (230°C) of the overall 4-methyl-1-pentene resin composition according to the present invention at a weight of 2.16 kg is preferably in the range of 0.001 ∼ 1000 g/10 min, more preferably 0.1 ∼ 100 g/10 min, and most preferably 1.0 ∼ 50 g/10 min. An excessively high or excessively low melt flow rate leads to an inferior moldability.

In addition, the melting point of the 4-methyl-1-pentene resin composition is preferably 220 ∼ 250°C, and more preferably 230 ∼ 240°C.

Examples of the method for blending the aforementioned composition may include conventional mixing methods, such as tumbler mixer method, Henschel mixer method, banbury mixer method, and extrusion-granulation method.

In order to obtain the aforementioned composition, other additive components such as a neutralizer, disperser, antioxidant, lubricant, weather-proof improvement agent, anti-static agent, pigment, filler, and the like, may be mixed in, as long as the effects of the present invention are not lost.

The surface layer comprising this 4-methyl-1-pentene resin composition exhibits an extremely high thermal resistance, superior residual embossing properties, and superior surface separating properties, which in turn provides superior processing sheet.

The aforementioned processing sheet has a three-layer structure comprising a base material, adhesive layer, and surface layer. However, the present invention is not limited thereto, and may further comprise other layers, as long as the effects of the present invention are not lost. For example, another appropriate layer may be provided on the side of the base material on which the adhesive layer is not formed, or alternatively the adhesive layer may comprise a plurality of layers.

The thickness of each layer such as the adhesive layer, base material, and the like, is not particularly limited, and may be appropriately determined within a range wherein each layer serves its purpose.

The method for manufacturing the processing sheet is not particularly limited, as long as the method for lamination increases the inter-layer adhesive strength. However, a method for manufacturing the processing sheet by means of extrusion-lamination is preferred.

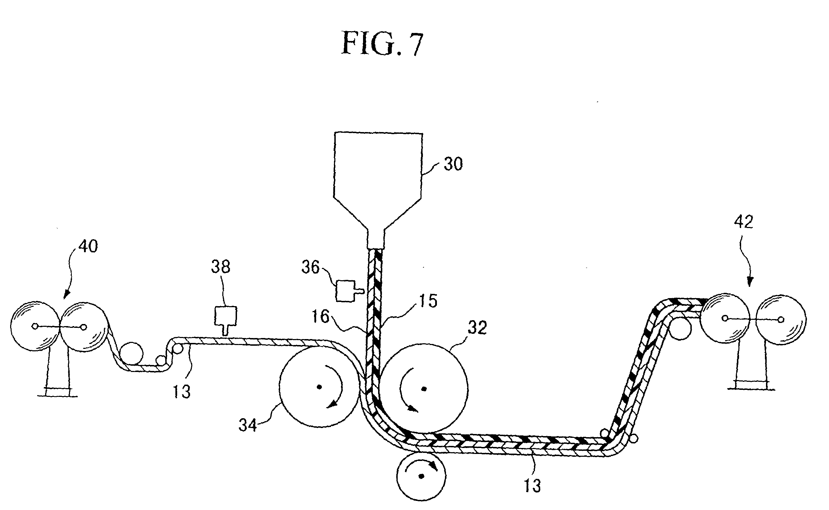

For example, as shown in Figure 7, a base material 13 comprising paper, or the like, is delivered from a delivery device 40 at a predetermined speed, between a nip roll 34 and cooling roll 32, while a resin forming the adhesive layer and a resin forming the surface layer are co-extruded, in their molten film states, from an extruder 30 to the cooling roll 32 side between the nip roll 34 and cooling roll 32. In this manner, the adhesive layer is supplied so as to be in contact with the base material 13, to yield a laminated member in which an adhesive layer 16 and surface layer 15 are laminated onto a base material 13. Subsequently, the resultant processing sheet comprising the base material 13, adhesive layer 16, and surface layer 15, is reeled into a reeling device 42.

The resin temperature during extrusion molding is generally in the range of 280 ∼ 350°C; however, according to the present invention, it is possible to reduce this temperature below 300°C.

In addition, the processing sheet may be formed according to a so-called "sandwich lamination" process wherein a film comprising the resin forming the surface layer 15 is supplied between the adhesive layer and cooling roll 32, and pressed to perform the lamination.

Furthermore, as a processing sheet, it is not always necessary to provide embossing on the surface layer. However, when used as a transfer sheet for embossing and the like, a press board or roll provided with the embossing may be pressed thereon.

The surface of the surface layer may be preferably treated with a silicone releasing agent, or the like, if necessary.

In this processing sheet, when using a 4-methyl-1-petene resin composition as the surface layer, the 4-methyl-1-pentene resin, which has low viscosity, segregates on the surface, due to the difference in the crystallization temperatures between the 4-methyl-1-pentene resin and polyolefin, especially the polypropylene. As a result, in the resultant surface layer, the proportional content of the 4-methyl-1-pentene resin is greater at the surface. Accordingly, superior separating properties and thermal resistance are achieved in a highly efficient manner in the surface layer, due to the high proportional content of 4-methyl-1-pentene resin, by means of mixing only a small amount of the 4-methyl-1-pentene resin.

In addition, by means of adjusting the lamination temperature during the extrusion lamination process of the surface layer, it is possible to control the wettability of the transfer surface, and thereby adjust the separating properties of the surface.

In addition, a small amount of 4-methyl-1-pentene resin results in a highly efficient effect, leading to only a small increase in cost.

### [Packaging Material]

The aforementioned polyolefin resin composition according to the present invention is suitable for a use in packaging material comprising this laminated member.

That is, the packaging material according to the present invention comprises at least a layer comprising the aforementioned, specific polyolefin resin composition, and base material. In the following, the present invention is described using various examples.

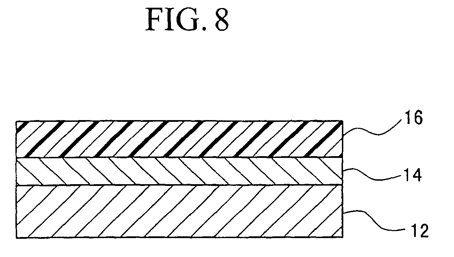

Example 1 of the packaging material comprises a laminated member provided with at least a base material, resin layer, and sealant layer, and for example, as shown in Figure 8, is structured such that a sealant layer 16 is layered onto a base material 12 via a resin layer 14.

The base material may be selected from any material that is appropriate as a base material of a packaging material, according to the use. In particular, those materials comprising a barrier-type material are preferred. Preferred examples of these materials may include polyester; polyamide; ethylene vinyl alcohol (EVOH); polyvinylalcohol; acrylonitrile; vinylidene chloride; polyvinylidene fluoride; drawings thereof; printed materials; aluminum; films evaporated with metal or a metallic oxide; or the like; and multi-layered structures thereof.

As the sealant layer, various conventional materials are used, preferred examples of which may include low-density polyethylenes formed according to a high-pressure radical method; linear low-density polyethylenes; and the like; and in particular, low-density polyethylenes formed according to the high-pressure radical method, and Ziegler or metallocene, linear low-density polyethylenes.

The resin layer comprises the aforementioned polyolefin resin composition containing a polyolefin resin (A), and a compound containing intramolecular unsaturated bonds (B), which comprises a polyolefin resin composition (M) wherein the number of the intramolecular unsaturated bonds in the polyolefin resin composition is at least 0.5 per 10³ carbon atoms; and/or a polyolefin resin composition (M2) containing an epoxy compound (C); and a polyolefin resin composition (M3) containing an olefin resin having functional groups that are reactive with the epoxy groups (D).

This polyolefin resin composition exhibits a high adhesive strength to the base material, sealant layer, and the like, of a different material, and maintains this high adhesive strength even at low lamination temperatures. In addition, this polyolefin resin composition can maintain a high adhesive strength even at a high lamination molding speed.

Furthermore, the aforementioned laminated member comprises a laminated member having a three-layer structure comprising a base material, resin layer, and sealant layer. However, the present invention is not limited thereto, and may further comprise other layers, as long as the effects of the present invention are not lost. For example, another appropriate layer may be provided on the side of the base material on which the resin layer is not formed, or alternatively a laminated member may comprise a five-layer structure, wherein a resin layer and sealant layer are formed on both sides of the base material. In addition, the resin layer may also comprise a plurality of layers. Furthermore, the base material comprise a plurality of layers comprising paper, plastic, and the like, wherein one or both sides of the base material are provided with a resin layer, and an additional sealant layer.

Furthermore, the thickness of each layer such as the resin layer, base material, sealant layer, and the like, is not particularly limited, and may be appropriately determined within a range wherein each layer serves its purpose.

The method for manufacturing this packaging material is not particularly limited as long as the method for lamination increases the inter-layer adhesive strength. However, a method for performing lamination by means of extrusion lamination is preferred, as well as a method wherein a resin layer and sealant layer are co-extruded during lamination molding, wherein a resin layer is sandwiched therein between for lamination, are preferred.

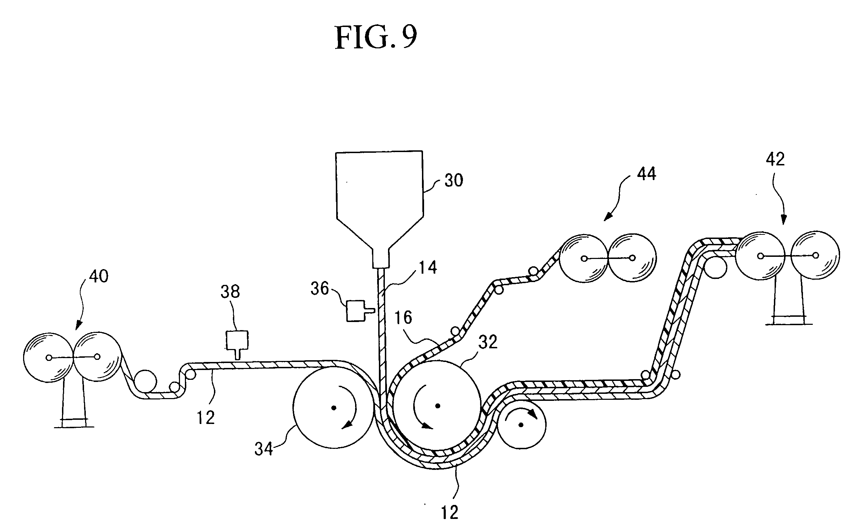

For example, as shown in Figure 9, in a process for supplying a base material, the base material 12 comprising aluminum foil, polyamide film, or the like, is delivered from a delivery device 40 at a predetermined speed, and supplied between a nip roll 34 and cooling roll 32. Simultaneously, the sealant layer 16 comprising a low-density polyethylene film, or the like, is supplied from a "sandwich" delivery device 44 in the same manner. Furthermore, in the resin surface treatment process, the aforementioned polyolefin resin composition forming the resin layer is delivered, in a molten film state, from the extruder 30 between the base material 12 and sealant layer 16, at which time the molten film is treated with ozone. A T-die type extruder may be generally used as the device for extrusion-lamination molding.

Furthermore, in the lamination process, the base material 12, resin layer 14, and sealant layer 16 are pressed together, between the nip roll 34 and cooling roll 32 to yield a laminated member. Subsequently, the laminated member comprising the resultant base material 12, resin layer 14, and sealant layer 16, is reeled into a reeling device 42 in the reeling process.

The resin temperature during extrusion molding is generally in the range of 280 ∼ 350°C; however, according to the present invention, it is possible to decrease this temperature to below 300°C.

In addition, by means of adjusting the lamination temperature during the extrusion lamination process of the resin layer, it is possible to control the wettability of the surface of the resin layer. In this manner, the wettablity of the resin layer surface may be adjusted, as necessary, during the formation of the sealant layer.

In order to use this packaging material for various products, the packaging material may be formed into a bag or the like, according to a conventional, bonding method such as the heat sealing method, and the like. This method for packaging is not particularly limited.

This packaging material is suitable for general packaging materials for industrial and home goods use, such as for auto parts, including tires and the like; packaging of home goods; steel coil; filler for air bubble sheets; packaging materials including paper roll material, and the like; and various bags for solid, liquid, and gas, including liquid synthetic detergents, surfactants, shampoos, conditioners, liquid fertilizers, developing solutions, paints, chemicals, oils, and the like. In particular, it is suitable for packaging materials for light-weight goods such as chemicals.

In addition, it is possible to use the aforementioned packaging material as packaging material for food and medical supplies. It is suitable for bags for dry foods and liquid foods, such as water, dairy products, juice, liquor, coffee, tea, soy sauce, sauce, tofu, and the like, and as medical packaging materials such as for pharmaceutical supplies.

According to the present invention, it is possible to remarkably improve the productivity due to the higher molding speed, and to minimize the effects on the working and surrounding environments from the fumes produced, due to the low temperature molding capabilities. In addition, the present invention leaves little residual odor.

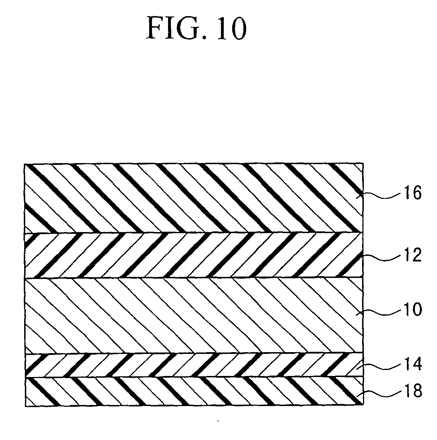

Example 2 of the packaging material comprises at least a resin base material layer, resin layer, and gas barrier layer, and as shown in Figure 10, may be provided with other layers. This packaging material is particularly suitable for packaging materials for food and medical supplies.

The packaging material for food and medical supplies shown is structured such that a resin base material layer 16 is laminated onto one side of a gas barrier layer 10 via a resin layer 12, while a sealant layer 18 is laminated onto the other side of the gas barrier layer 10 via a resin layer 14.

The resin base material layer 16 is preferably selected from among those materials used as a base material for packaging materials for food and medical supplies, examples of which may include polyamide, polyethylene, polypropylene, polyesters such as polyethylene terephthalate (PET), and the like.

Resin layers 12 and 14 comprise the aforementioned polyolefin resin compositions ((M), (M1), (M2), and (M3)).

The gas barrier layer 10 may be appropriately determined from among various materials according to the use, and is not particularly limited. However, examples may include materials comprising polyester, polyamide, ethylenevinyl alcohol (EVOH), polyvinyl alcohol, acryronitrile, vinylidene chloride, polyvinylidene fluoride, aluminum, films evaporated with metal or metallic oxide, and the like. Among the aforementioned, polyester, polyamide, EVOH, and aluminum foil are preferred.

The sealant layer 18 may be appropriately determined from various conventionally-known materials, according to the particular use of the packaging material for food and medical supplies, and is not particularly limited. Examples of the aforementioned may include polyolefins such as low-density polyethylenes, high-density polyethylenes, linear low-density polyethylenes, polypropylenes, and the like; polyesters such as PET, and the like; polyamides; and the like. When used for food and drinks, low-density polyethylenes or linear low-density polyethylenes containing no additives, low-density polyethylenes formed according to a high-pressure radical method, and Ziegler or metallocene linear low-density polyethylenes, are particularly preferred.

By means of forming such a sealant layer 18, it is possible to reduce the odor derived from the packaging material.

Furthermore, the aforementioned laminated member for packaging materials for food and medical supplies has a five-layer structure comprising a resin base material layer 16/ resin layer 12/ gas barrier layer 10/ resin layer 14/ sealant layer 18. However, the present invention is not limited thereto, and may comprise at least a three-layer structure comprising a resin base material layer, resin layer, and gas barrier layer, and may further comprise other layers as long as the effects of the present invention are not lost.

Furthermore, the thickness of each layer such as the resin base material layer, resin layer, gas barrier layer, and the like, is not particularly limited, and may be appropriately determined within a range wherein each layer serves its purpose.

The method for manufacturing the packaging material for food and medical supplies is not particularly limited as long as the method for lamination increases the inter-layer adhesive strength. However, a manufacturing method which uses extrusion lamination, as well as a lamination molding method, wherein a resin layer and resin base material layer are co-extruded against a gas barrier layer; and a "sandwich lamination" method wherein a resin layer is sandwiched therein between, are preferred.

For example, the aforementioned laminated member having a five-layer structure may be manufactured in the following manner.

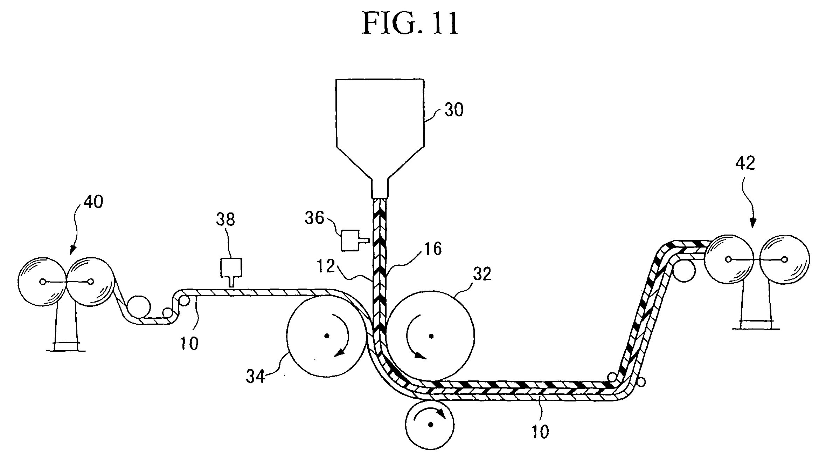

As shown in Figure 11, in the process for supplying a gas barrier layer, a gas barrier layer 10 comprising aluminum foil, polyamide film or the like, is delivered from a delivery device 40 at a predetermined speed, between a nip roll 34 and cooling roll 32. Simultaneously, in the resin surface treatment process, the aforementioned polyolefin resin composition forming the resin layer, and the resin forming the resin base material layer are co-extruded, in their molten film states, from the extruder 30, and the molten films are treated with ozone. A T-die type extruder may be generally used as the device for the extrusion-lamination molding.

Furthermore, in the lamination process, a laminated member is manufactured by means of pressing together and laminating the gas barrier layer 10, resin layer 12, and resin base material layer 16, between the nip roll 34 and cooling roll 32. Subsequently, a laminated member comprising the resultant gas barrier layer 10, resin layer 12, and resin base material layer 16, is reeled into a reeling device 42 in the reeling process. In this method, the resin surface treatment process and lamination process are combined into a process wherein the resin base material layer is formed on the resin layer.

Furthermore, in the same manner, a laminated member is delivered from the delivery device 40 at a predetermined speed, between the nip roll 34 and cooling roll 32, such that the gas barrier layer of the laminated member is supplied to the cooling roll 32 side. Simultaneously, in the resin surface treatment process, the aforementioned polyolefin resin composition forming the aforementioned resin layer, and the resin forming the sealant layer are co-extruded, in their molten film states, from the extruder 30, and the molten films are treated with ozone.

Furthermore, in the lamination process, a laminated member is manufactured by means of pressing together and laminating the laminated member, resin layer, and sealant layer, between the nip roll 34 and cooling roll 32, to form a packaging material having a five-layer structure shown in Figure 10.

The resin temperature during the extrusion molding is generally in the range of 280 ∼ 350°C; however, according to the present invention, it possible to reduce this temperature to below 300°C.

By means of the ozone treatment, it is possible to perform lamination without reducing the adhesive strength, even at a low resin temperature at the time of the extrusion molding, i.e., at 200 ∼ 310°C, preferably at 200 ∼ 300°C, more preferably at 240 ∼ 280°C, and most preferably at 250 ∼ 280°C, and thus reduce the generation of odor.

In order to form this laminated member into a packaging material for food and medial supplies, a conventional, bonding method such as a heat-sealing, method or the like, may be employed. This method for forming a packaging material for food and medical supplies is not particularly limited. However, for example, the laminated member may be cut into a predetermined form, and bonded by means of heat sealing, to form a packaging material, or a bag for food and medical supplies.

According to the present invention, it is possible to remarkably improve the productivity due to the higher molding speed, and also to minimize the detrimental effects on the working and surrounding environments from the fumes and odor produced, due to the low-temperature molding capabilities, thus providing a packaging material suitable for food and medical supplies.

### [Container]

The aforementioned polyolefin resin composition according to the present invention is suitable for a use in a container comprising a laminated member.

That is, the container according to the present invention comprises a laminated member comprising at least a base material and resin layer, and preferably, another layer(s) as shown in Figure 10.

In the following, the present invention is described using various examples.

Example 1 of the laminated member used for a container shown in Figure 10 is provided with a resin layer 12 and surface layer 16, which are laminated onto one side of a base material 10, and a resin layer 14 and surface layer 18, which are laminated onto the other side of the base material 10 in the same manner.

The base material may be appropriately determined from among various materials according to the use, and is not particularly limited. Preferred examples of the aforementioned may include paper, plastic, and aluminum foil. Examples of the paper may include board paper, high-quality paper, kraft paper, glassine paper, inorganic fiber-mixed paper, synthetic resin-mixed paper, and the like.

By means of using plastic with a high thermal resistance such as polypropylene and high-density polyethylene, as the base material, it is possible to provide a heat-resistant container.

For the resin layer, the aforementioned resin layer can be employed, which possesses a layer comprising the aforementioned polyolefin resin composition containing a polyolefin resin (A) and a compound having intramolecular unsaturated bonds (B), wherein the aforementioned polyolefin resin composition comprises a polyolefin resin composition (M) in which the number of intramolecular unsaturated bonds in the polyolefin resin composition is at least 0.5 per 10³ carbon atoms; and/or a polyolefin resin composition (M2) containing an epoxy compound (C); and/or a polyolefin resin composition (M3) containing an olefin resin composition having functional groups that are reactive with the epoxy groups (D).

This polyolefin resin composition exhibits a high adhesive strength to base materials or the like of a different material, even at a low lamination temperature, and can maintain this adhesive strength at a higher lamination molding speed.

The surface layer shown in this example, may be appropriately determined according to the use of the container, and preferably comprises various types of resins. Examples of the aforementioned may include polyolefins such as low-density polyethylenes, high-density polyethylenes, linear low-density polyethylenes, polypropylenes, and the like; polyesters such as PET, and the like; polyamides; and the like.

As a container for food and medical supplies, low-density polyethylenes and linear low-density polyethylenes containing no additives are particularly preferred.

Furthermore, the container comprising an aforementioned laminated member has a five-layer structure comprising a surface layer/ resin layer/ base material/ resin layer/ surface layer. However, the present invention is not limited thereto, and may comprise at least a two-layer structure comprising a base material and resin layer, and further comprise another layer, as long as the effects of the present invention are not lost. In addition, the base material may be structured with a plurality of layers, e.g., the base material may comprise a laminated member comprising paper and printed PET film.

The thickness of each layer such as the resin layer, base material, and the like, is not particularly limited, and may be appropriately determined within a range where each layer serves its purpose.

The method for manufacturing the laminated member used for Example 1 of the container is not particularly limited, as long as the method for lamination increases the inter-layer adhesive strength. However, a method for manufacturing the aforementioned by means of extrusion-lamination is preferred.

For example, as shown in Figure 11, a base material 10 comprising paper or the like, is delivered from a delivery device 40, and supplied between a nip roll 34 and cooling roll 32. At the same time, the resin forming the resin layer 12, and the resin forming the surface layer 16 are co-extruded, in their molten film states, from the extruder 30 to the cooling roll 32 side, between the nip roll 34 and cooling roll 32. In this manner, the resin layer is supplied in contact with the base material 10, to provide a laminated member wherein the resin layer 12 and surface layer 16 are laminated onto the base material 10 (hereinafter, the laminated member having this three-layer structure is referred to as "inner layer" for the sake of convenience).

Furthermore, for this inner layer, the resin forming the resin layer 14, and the resin forming the surface layer 18 are again co-extruded, in their molten resin states, from the extruder 30 to the cooling roll 32 side, between the nip roll 34 and cooling roll 32, in a manner such that the resin layer is supplied in contact with the base material 10 of the inner layer, to provide a laminated member wherein the resin layer 14 and surface layer 18 are laminated onto the base material 10, as shown in Figure 10. The resultant laminated member is subsequently reeled into a reeling device 42.

The resin temperature during the extrusion-molding is generally in the range of 280∼ 350°C; however, according to the present invention, it is possible to reduce this temperature to below 300°C.

The resin layers 12 and 14 are preferably treated with ozone. Ozone treatment-is performed by means of spraying ozone from an ozone supply source 36 onto the surface of the molten resin film, supplied from the T-die type extruder, which is adhered to the base material. The amount of ozone treatment is in the range of 5 ∼ 100 g/hr, and preferably 100 ∼ 500 g/hr.

By means of performing the ozone treatment, it is possible to adequately perform lamination, even at a low resin temperature of 200 ∼ 300°C, preferably 240 ∼ 280°C at the time of the extrusion-molding.

In order to form this laminated member into a container, a conventional, bonding method, such as a heat-sealing method or the like, may be employed; however the method for forming the container is not particularly limited thereto. For example, the laminated member may be punched into the predetermined shape, and bonded by means of heat sealing and assembled into the shape of a container.

In addition, the shape of the container is not particularly limited, and for example, the laminated member may be formed into a gable-type container, brick-type container, or standing pouch container.

The container is suitable as a container for various solids, liquids, and gases, i.e., for non-food products including industrial chemicals and materials, such as liquid synthetic detergents, surfactants, shampoos, conditioners, liquid fertilizers, developing solutions, paints, various chemicals, various oils, and the like. Among the aforementioned, it is particularly suitable as a container for chemicals.

In addition, by means of using a heat-resistant base material, it is possible to apply the container of the present invention to a retort container that is thermally sterilized.

In addition, the container according to the present invention is suitable for containers for dry and liquid foods such as for water, dairy products, juice, liquor, coffee, tea, soy sauce, sauces, tofu, and the like. In addition, it is also suitable for containers for medical supplies such as blood bags (containers), liquid-transportation bags (containers), and the like.

According to the present invention, due to the higher molding speed, it is possible to dramatically improve the productivity, as well as to minimize the detrimental effects on the working and surrounding environments from the fumes and odor produced, due to the low-temperature molding capabilities.

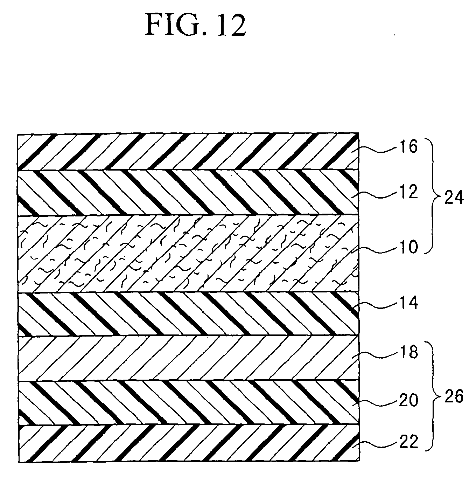

The laminated member used in Example 2 of the container comprises at least the base material layer, and gas barrier layer, and may further comprise other layer(s), as shown in Figure 12. This container is particularly suitable for containers for food and medical supplies.

The laminated member used for a container for food and medical supplies, shown in the figure, is provided with a base material layer 10 on one side of a gas barrier layer 18 via the resin layer 14; a polyethylene layer 16 on the base material 10 via a resin layer 12; and a sealant layer 22 on the other side of the gas barrier layer 18 via a resin layer 20.

The base material layer 10 is not particularly limited as long as it is a material used as a base material for containers for food and medical supplies, examples of which may include board paper, high-quality paper, kraft paper, glassine paper, inorganic fiber-mixed paper, synthetic resin-mixed paper, and the like.

The resin layers 12, 14 and 20 comprise the aforementioned polyolefin resin compositions ((M), (M1), (M2), and (M3)).

This polyolefin resin composition exhibits a high adhesive strength to the base material layer, gas barrier layer, and the like, comprising different materials, even at a low laminating temperature, and can maintain this adhesive strength, even at a higher lamination-molding speed.

The gas barrier layer 18 may be appropriately determined according to the use, and is not particularly limited. However, examples of the aforementioned may include polyester, polyamide, ethylene vinyl alcohol (EVOH), polyvinyl alcohol, acrylonitrile, vinylidene chloride, polyvinylidene fluoride, aluminum, films evaporated with metal or metallic oxide, and the like. Among the aforementioned, polyester, polyamide, EVOH, and aluminum foil are preferred.

For the sealant layer 22, various conventional materials are used. The sealant layer 22 may be appropriately determined according to the use of the container, with those materials comprising various resins being preferred. Examples of the aforementioned may include polyolefins such as low-density polyethylenes, high-density polyethylenes, linear low-density polyethylenes, polypropylenes, and the like; polyesters such as PET, and the like; polyamides; and the like. When used for foods or drinks, low-density polyethylenes or linear low-density polyethylenes containing no additives, low-density polyethylenes formed according to a high-pressure radical method, and Ziegler or metallocene linear low-density polyethylenes are particularly preferred.

The polyethylene layer 16 is selected from among the polyethylenes which can be used for the sealant layer 22.

By means of forming the sealant layer 22 or polyethylene layer 16, it is possible to reduce the odor derived from the container.

The aforementioned laminated member for use in containers for food and medical supplies has a seven-layer structure comprising a polyethylene layer 16/ resin layer 12/ base material layer 10/ resin layer 14/ gas barrier layer 18/ resin layer 20/ sealant layer 22. However, the present invention is not limited thereto, and may be provided with at least a three-layer structure comprising a paper layer/ resin layer/ gas barrier layer, or a structure comprising other layers in addition to the aforementioned layers, as long as the effects of the present invention are not lost.

Furthermore, the thickness of each layer such as the paper layer, resin layer, gas barrier layer, or the like, is not particularly limited, and may be appropriately determined within a range where each layer serves its purpose.

The method for manufacturing the laminated member for use in a container for food and medical supplies is not particularly limited, as long as the method for lamination increases the inter-layer adhesive strength. However, a method for manufacturing the laminated member by means of extrusion-lamination is preferred.

For example, the aforementioned laminated member having a seven-layer structure may be provided in the following manner.

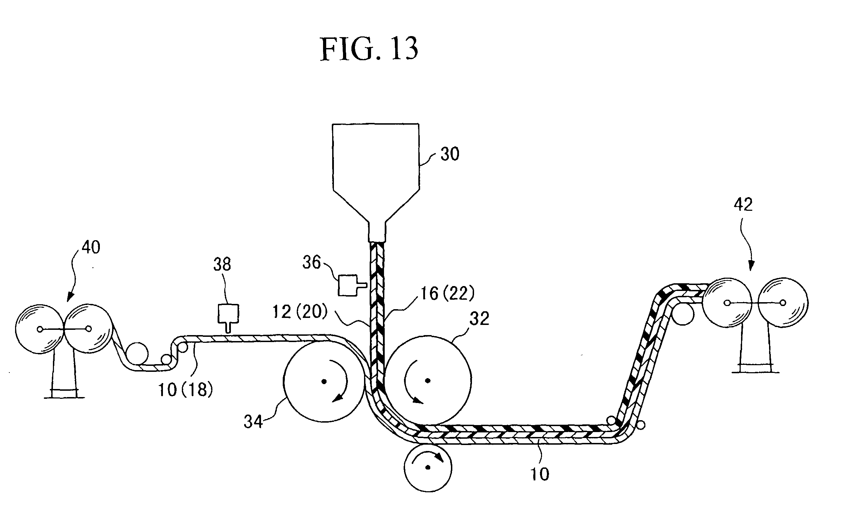

First, as shown in Figure 13, a base material layer 10 is delivered from a delivery device 40 at a predetermined speed, and supplied between a nip roll 34 and cooling roll 32. At the same time, the resin forming the resin layer 12, and the resin forming the polyethylene layer 16, are co-extruded in their molten film states, from the extruder 30 to the cooling roll 32 side between the nip roll 34 and cooling roll 32, in a manner such that the resin layer 12 is supplied in contact with the base material layer 10. In this manner, a laminated member 24, in which a resin layer 12 and polyethylene layer 16 are laminated onto the base material layer 10, is provided and subsequently reeled into a reeling device 42.

In addition, in the same manner, a gas barrier layer 18 is delivered from the delivery device 40 at a predetermined speed, and supplied between the nip roll 34 and cooling roll 32. At the same time, the resin forming the resin layer 20, and the resin forming the sealant layer 22 are co-extruded, in their molten film states, from the extruder 30 to the cooling roll 32 side, between the nip roll 34 and cooling roll 32, in a manner such that the resin layer 20 is supplied in contact with the gas barrier layer 18. In this manner, a laminated member 26, in which a resin layer 20 and sealant layer 22 are laminated onto a gas barrier layer 18, is provided and reeled into a reeling device 42.

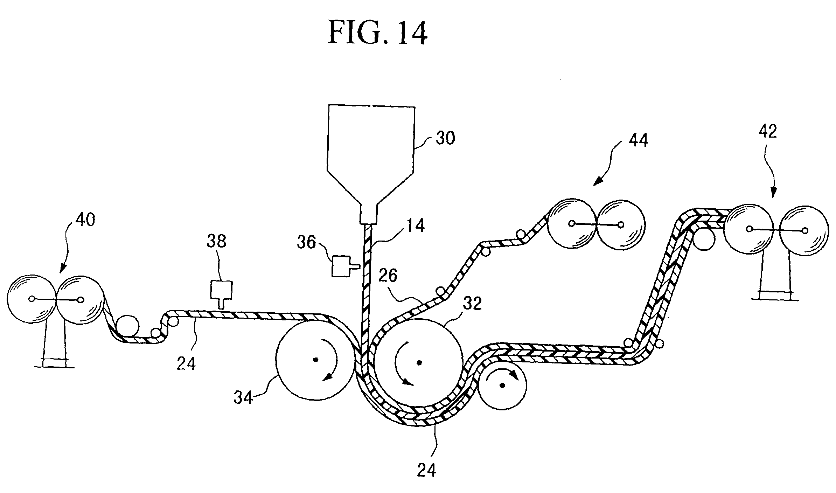

Furthermore, as shown in Figure 14, the laminated member 24 manufactured as described above is delivered from a main delivery device 40, and the aforementioned laminated member 26 is delivered from a 'sandwich' delivery device 44. Meanwhile, the aforementioned polyethylene resin composition is extruded from the extruder 30, and pressed by means of "sandwich lamination" between the nip roll 34 and cooling roll 32, such that the base material layer 10 of the laminated member 24 and gas barrier layer 18 of the laminated member 26 are, respectively, in contact with the molten, polyolefin resin composition, to provide a laminated member having the layer structure shown in Figure 12.

The resin temperature during the extrusion molding is generally in the range of 280 ∼ 350°C; however, according to the present invention, it is possible to decrease this temperature to below 300°C.

The resin layers 12, 14 and 20 are preferably pre-treated with ozone. Ozone treatment is performed by means of spraying ozone from the ozone supply source 36 onto the molten resin film, which is supplied from a T-die type extruder. The amount of ozone treatment is in the range of 5 ∼ 1000 g/hr, and preferably 100 ∼ 500 g/hr.

By means of performing the ozone treatment, it is possible to perform lamination without reducing the adhesive strength at a low resin temperature of 200 ∼ 310°C, preferably 200 ∼ 300°C, more preferably 240 ∼ 280°C, and most preferably 250 ∼ 280°C, at the time of the extrusion-molding. In this manner, it is possible to reduce the generation of odor.

In addition, the base material layer 10 and gas barrier layer 18 may be surface-treated in advance, by means of a pre-heating treatment, corona treatment, flame treatment, UV treatment, and or the like. Among the aforementioned, corona treatment is preferred, since the adhesive strength between the corona-treated gas barrier layer and ozone-treated resin layer is extremely high. Corona treatment is preferably performed by means of discharging at 1 ∼ 300 W minute/m², and more preferably 10 ∼ 100 w minute/m², using a corona discharging apparatus 38.

In order to form this laminated member into a container for food and medical supplies, a conventional, bonding method such as a heat-sealing method, and the like, may be employed. However, the method for forming the container for food and medical supplies is not particularly limited. For example, this laminated member may be punched into a predetermined shape, bonded by means of heat-sealing, and assembled into the shape of the container for food and medical supplies.

In addition, the shape of the container for food and medical supplies is not particularly limited, and may be formed into, for example, a gable type container, brick-type container, standing pouch container, and the like.

The container for food according to the present invention is suitable as a container for dry and liquid foods such as water, dairy products, juice, liquor, coffee, tea, soy sauce, sauces, tofu, and the like. In addition, the container for medical supplies according to the present invention is suitable for blood bags (containers), liquid transportation bags (containers), and the like.

According to the present invention, due to a higher molding speed, it is possible to dramatically improve the productivity, and to minimize the detrimental effects on the working and surrounding environments from fumes and odor produced, due to the low-temperature molding capabilities.

In the following, the present invention is described using examples; however, the present invention is not limited thereto.

Furthermore, the method for evaluating fumes and odor in all of the following examples and comparative examples, is based on the following standard.

### [Fumes]

a: No fumes were observed.
b: A small amount of fumes were observed.
c: A large amount of fumes were observed.

### [Odor]

The odor was evaluated according to a sensory test using the following three-stage standard by a group of panel members.
A: Nearly odorless.
B: A weak odor was detected.
C: A strong odor was detected.

### Example 1

### [Example 1-1]

A polypropylene resin composition was prepared comprising 97% by weight of a polypropylene resin having a melt flow rate (MFR) at 230°C of 20 g/10 min, and 3.0% by weight of 1,2-polybutadiene resin having a melt flow rate (MFR) at 150°C of 3.0 g/10 min.

Using the resultant polypropylene resin composition, a laminated member was manufactured by laminating the resin composition onto paper under the conditions shown in Table 1, by means of a lamination-molding apparatus having a width of 1100 mm and equipped with a 90 mm extruder.

Subsequently, the inter-layer adhesive strength and odor of the resultant laminated member, and fumes produced at the time of manufacture were evaluated. These results are shown in Table 1.

### [Example 1-2]

A polypropylene resin composition was prepared comprising 93% by weight of the aforementioned polypropylene resin of Example 1-1, and 7.0% by weight of the aforementioned 1,2-polybutadiene resin of Example 1-1.

Using the resultant polypropylene resin composition, a laminated member was manufactured by laminating the resin composition onto paper under the conditions shown in Table 1, by means of a lamination-molding apparatus having a width of 1100 mm and equipped with a 90 mm extruder.

Subsequently, the inter-layer adhesive strength and odor of the resultant laminated member, and fumes produced at the time of manufacture were evaluated. These results are shown in Table 1.

### [Example 1-3]

A polypropylene resin composition was prepared comprising 99% by weight of the aforementioned polypropylene resin of Example 1-1, and 1.0% by weight of the aforementioned 1,2-polybutadiene resin of Example 1-1.

Using the resultant polypropylene resin composition, a laminated member was manufactured by laminating the resin composition onto paper under the conditions shown in Table 1, by means of a lamination-molding apparatus having a width of 1100 mm and equipped with a 90 mm extruder.

Subsequently, the inter-layer adhesive strength and odor of the resultant laminated member, and fumes produced at the time of manufacture were evaluated. These results are shown in Table 1.

### [Comparative Examples 1-1 and 1-3]

Using only the aforementioned polypropylene resin of Example 1-1, a laminated member was manufactured by laminating the resin onto paper under the conditions shown in Table 1, by means of a lamination-molding apparatus having a width of 1100 mm and equipped with a 90 mm extruder.

Subsequently, the inter-layer adhesive strength and odor of the resultant laminated member, and fumes produced at the time of manufacture were evaluated. These results are shown in Table 1.

### [Comparative Example 1-2]

A polypropylene resin composition was prepared comprising 99.95% by weight of the aforementioned polypropylene resin of Example 1-1, and 0.05% by weight of the aforementioned 1,2-polybutadiene resin of Example 1-1.

Using the resultant polypropylene resin composition, a laminated member was manufactured by laminating the resin composition onto paper under the conditions shown in Table 1, by means of a lamination-molding apparatus having a width of 1100 mm and equipped with a 90 mm extruder.

Subsequently, the inter-layer adhesive strength and odor of the resultant laminated member, and fumes produced at the time of manufacture were evaluated. These results are shown in Table 1.

### [Evaluation Method]

### (Adhesive strength to paper)

The adhesive strength to a paper base material was evaluated based on the condition at the time of inter-layer separation according to the following 3-stage evaluation standard.
ⓞ: uniform solidification of the paper and polyethylene without residual stranding of the resin
Δ : intermediate adhesiveness with separation possible
× : easy separation of the paper and polyethylene

**Table 1**

| Items | Examples | | | Comparative Examples | | |
|---|---|---|---|---|---|---|
| | 1-1 | 1-2 | 1-3 | 1-1 | 1-2 | 1-3 |
| Component (A) | PP | | | PP | | |
| MFR of component (A) (230°C)(g/10 min) | 20 | | | 20 | | |
| Component (B) | 1,2-polybutadiene | | | - | 1,2-polybutadiene | - |
| MFR of component (B) (g/10 min) | 3.0 (150°C) | | | - | 3.0 (150°C) | - |
| No.of intramolecular unsaturated bonds of (B) (per 1000 carbon atoms) | 250 | | | - | 250 | - |
| Amount of component (B) | 3.0% | 7% | 1.0% | 0 | 0.05% | 0 |
| No.of intramolecular unsaturated bonds in the composition (per 1000 carbon atoms) | 7.5 | 17.5 | 2.5 | 0 | 0.13 | 0 |
| Base material | Kraft paper | | | Kraft paper | | |
| Molding temperature (°C) | 270 | | | 270 | | 310 |
| Molding speed (m/min) | 100 | | | 100 | | 100 |
| Air gap (mm) | 130 | | | 130 | | 130 |
| Film thickness (µm) | 30 | | | 30 | | 30 |
| Ozone treatment | Done | | | Done | | None |
| Adhesive strength | ⓞ | ⓞ | Δ | × | × | Δ |
| Odor | A | A | A | A | A | C |
| Fume | a | a | a | a | a | c |
| Condition for ozone treatment: 50 g/m³ -4.5 m³/hr | | | | | | |

As seen from the aforementioned, when compared with Comparative Example 1-1 which lacked the (B) component, the Examples, which all included the (B) component, displayed an adequate adhesive strength. On the other hand, as seen in Comparative Example 1-2 when the blending amount of the (B) component was inadequate, it was not possible to produce the effects of the present invention. In addition, as seen in Comparative Example 1-3, increasing the molding temperature to 310°C improves the adhesive strength, but also results in extreme worsening of the odor and fumes at the time of manufacture.

### Example 2

The following resin components were used in the Examples and Comparative Examples described below.
LDPE (I): Low-density polyethylene having a melt flow rate (190°C) of 15 g/10 min and a density of 0.918 g/cm³ produced by means of a high-pressure radical method.
LDPE (II): Low-density polyethylene having a melt flow rate (190°C) of 8.2 g/10 min and a density of 0.918 g/cm³ produced by means of a high-pressure radical method.
1,2-polybutadiene resin: melt flow rate (150°C) of 9.0 g/10 min with 250 intramolecular unsaturated bonds per 10³ carbon atoms.

### [Examples 2-1, 2-2]

A polyethylene resin composition was prepared comprising 93% by weight of the aforementioned LDPE (I), 7.0% by weight of the aforementioned 1,2-polybutadiene resin, and 1500 ppm of epoxidized soybean oil (ESO).

The number of intramolecular unsaturated bonds per 10³ carbon atoms of the resultant polyethylene resin composition was measured by means of infrared (IR) analysis.

As shown in Figure 1, a resin layer in a molten resin film state comprising the resultant polyethylene resin composition was treated with ozone and then laminated onto a base material 10 under the conditions shown in the following Table, by means of a lamination-molding apparatus having a width of 1100 mm and equipped with a 90 mm extruder, to produce a laminated member.

As the base material 10, a PET film was used in Example 2-1, and a polyamide film was used in Example 2-2.

Subsequently, the inter-layer adhesive strength and odor of the resultant laminated member, and fumes produced at the time of manufacture were evaluated. These results are shown in Tables 2-1 and 2-2.

### [Examples 2-3, 2-4]

A polyethylene resin composition was prepared comprising 99% by weight of the aforementioned LDPE (I), 1.0% by weight of the aforementioned 1,2-polybutadiene resin, and 1500 ppm of epoxidized soybean oil (ESO).

Using the resultant polyethylene resin composition, a laminated member was manufactured by laminating the resin composition onto a base material 10 under the conditions shown in the following Table, by means of a lamination-molding apparatus having a width of 1100 mm and equipped with a 90 mm extruder.

As the base material 10, a PET film was used in Example 2-3, and a polyamide film was used in Example 2-4.

Subsequently, the inter-layer adhesive strength and odor of the resultant laminated member, and fumes produced at the time of manufacture were evaluated. These results are shown in Tables 2-1 and 2-2.

### [Examples 2-5, 2-6]

A polyethylene resin composition was prepared comprising 93% by weight of the aforementioned LDPE (I), 7.0% by weight of the aforementioned 1,2-polybutadiene resin, and 1000 ppm of epoxidized soybean oil (ESO).

A laminated member was then manufactured by laminating the resin composition onto a base material 10 under the conditions shown in the following Table, by means of a lamination-molding apparatus having a width of 1100 mm and equipped with a 90 mm extruder.

As the base material 10, a PET film was used in Example 2-5, and a polyamide film was used in Example 2-6.

Subsequently, the inter-layer adhesive strength and odor of the resultant laminated member, and fumes produced at the time of manufacture were evaluated. These results are shown in Tables 2-1 and 2-2.

### [Comparative Example 2-1, 2-2]

A laminated member was manufactured by laminating only the aforementioned LDPE (I) onto a base material 10 under the conditions shown in the following Table, by means of a lamination-molding apparatus having a width of 1100 mm and equipped with a 90 mm extruder. As the base material 10, a PET film was used in Comparative Example 2-1, and a polyamide film was used in Comparative Example 2-2.

Subsequently, the inter-layer adhesive strength and odor of the resultant laminated member, and fumes produced at the time of manufacture were evaluated. These results are shown in Tables 2-1 and 2-2.

### [Comparative Examples 2-3, 2-4]

A polyethylene resin composition was prepared comprising 93% by weight of the aforementioned LDPE (I), and 7.0% by weight of the aforementioned 1,2-polybutadiene resin.

Using the resultant polyethylene resin composition, a laminated member was manufactured by laminating the resin composition onto a base material 10 under the conditions shown in the following Table, by means of a lamination-molding apparatus having a width of 1100 mm and equipped with a 90 mm extruder.

As the base material 10, a PET film was used in Comparative Example 2-3, and a polyamide film was used in Comparative Example 2-4.

Subsequently, the inter-layer adhesive strength and odor of the resultant laminated member, and fumes produced at the time of manufacture were evaluated. These results are shown in Tables 2-1 and 2-2.

### [Comparative Example 2-5, 2-6]

A laminated member was manufactured by laminating only the aforementioned LDPE (II) onto a base material 10 under the conditions shown in the following Table, by means of a lamination-molding apparatus having a width of 1100 mm and equipped with a 90 mm extruder. However, ozone treatment of the molten resin was not performed.

As the base material 10, a PET film was used in Comparative Example 2-5, and a polyamide film was used in Comparative Example 2-6.

Subsequently, the inter-layer adhesive strength and odor of the resultant laminated member, and fumes produced at the time of manufacture were evaluated. These results are shown in Tables 2-1 and 2-2.

### [Evaluation Method]

### (Adhesive strength 1)

The adhesive strength of the resultant laminated members was tested by means of cutting the laminated members in their direction of flow into rectangles having a width of 15 mm, and then separating them (180° separation at a separation speed of 300 mm/min) at the interface of the base material and resin layer using a universal tensile strength testing apparatus (manufactured by Orientech).

### (Adhesive strength 2)

The adhesive strength was tested by means of maintaining the laminated members at a temperature of 40°C and a humidity of 80% for 24 hours, and then subjecting them to the aforementioned Adhesive strength (test) 1.

**Table 2-1**

| Items | Examples | | | Comparative Examples | | |
|---|---|---|---|---|---|---|
| | 2-1 | 2-3 | 2-5 | 2-1 | 2-3 | 2-5 |
| Component (A) | LDPE (I) | | | LDPE (I) | | LDPE (II) |
| MFR of component (A) (190°C)(g/10 min) | 15 | | | 15 | | 8.2 |
| Component (B) | 1,2-polybutadiene | | | - | 1,2-polybutadiene | - |
| MFR of component (B) (g/10 min) | 9.0 (150°C) | | | - | 9.0 (150°C) | - |
| No.of intramolecular unsaturated bonds of (B) (per 1000 carbon atoms) | 250 | | | - | 250 | - |
| Amount of component (B) | 7.0% | 1.0% | 7.0% | 0 | 7.00% | 0 |
| No.of intramolecular unsaturated bonds in the composition (per 1000 carbon atoms) | 17.5 | 2.5 | 17.5 | 0 | 17.5 | 0 |
| Component (C) | ESO | ESO | ESO | - | ESO | - |
| Amount of component (C) (ppm) | 1500 | 1500 | 1000 | 0 | 0 | - |
| Base material | PET | | | PET | | PET |
| Molding temperature (°C) | 270 | | | 270 | | 320 |
| Molding speed (m/min) | 150 | | | 150 | | 150 |
| Air gap (mm) | 120 | | | 120 | | 120 |
| Film thickness (µm) | 30 | | | 30 | | 30 |
| Ozone treatment | Done | | | Done | | None |
| Adhesive strength 1 | 650 | 430 | 630 | 60 | 410 | 230 |
| Adhesive strength 2 | 620 | 400 | 350 | - | 150 | 120 |
| Odor | A | A | A | A | A | C |
| Fume | a | a | a | a | a | c |
| Condition for ozone treatment: 50 g/m³ -4.5 m³/hr | | | | | | |

**Table 2-2**

| Items | Examples | | | Comparative Examples | | |
|---|---|---|---|---|---|---|
| | 2-2 | 2-4 | 2-6 | 2-2 | 2-4 | 2-6 |
| Component (A) | LDPE (I) | | | LDPE (I) | | LDPE (II) |
| MFR of component (A) (190°C)(g/10 min) | 15 | | | 15 | | 8.2 |
| Component (B) | 1,2-polybutadiene | | | - | 1,2-polybutadiene | - |
| MFR of component (B) (g/10 min) | 9.0 (150°C) | | | - | 9.0 (150°C) | - |
| No.of intramolecular unsaturated bonds of (B) (per 1000 carbon atoms) | 250 | | | - | 250 | - |
| Amount of component (B) | 7.0% | 1.0% | 7.0% | 0 | 7.00% | 0 |
| No.of intramolecular unsaturated bonds in the composition (per 1000 carbon atoms) | 17.5 | 2.5 | 17.5 | 0 | 17.5 | 0 |
| Component (C) | ESO | ESO | ESO | - | ESO | - |
| Amount of component (C) (ppm) | 1500 | 1500 | 1000 | 0 | 0 | - |
| Base material | Nylon film | | | Nylon film | | |
| Molding temperature (°C) | 270 | | | 270 | | 320 |
| Molding speed (m/min) | 150 | | | 150 | | 150 |
| Air gap (mm) | 120 | | | 120 | | 120 |
| Film thickness (µm) | 30 | | | 30 | | 30 |
| Ozone treatment | Done | | | Done | | None |
| Adhesive strength 1 | 650 | 480 | 630 | 60 | 860 | 250 |
| Adhesive strength 2 | 630 | 420 | 620 | - | 210 | 50 |
| Odor | A | A | A | A | A | C |
| Fume | a | a | a | a | a | c |
| Condition for ozone treatment: 50 g/m³ -4.5 m³/hr | | | | | | |

As seen from the aforementioned, according to the laminated member of the present invention, it is possible to produce a high adhesive strength while also maintaining a high molding speed and a low molding temperature, even in the case when the base material is a PET film or a polyamide film. In contrast, Comparative Examples 1 and 2, which lacked the (B) component, produced laminated members that displayed low adhesive strengths. Similarly, Comparative Examples 3 and 4, which lacked the (C) component, showed a reduction in the adhesive strength of the laminated members following alteration of their intrinsic states. In addition, although an improvement in the adhesive strength was observed in Comparative Examples 5 and 6, which lacked the (B) component and did not undergo ozone treatment, these Comparative Examples generated a remarkable quantity of fumes as a result of their increased molding temperatures.

### Example 3

The following resin components were used in the Examples and Comparative Examples described below.
MeP (I): 4-methyl-1-pentene resin having a melt flow rate (260°C) of 100 g/10 min.
MeP (II): 4-methyl-1-pentene resin having a melt flow rate (260°C) of 80 g/10 min.
PB (I): 1,2-polybutadiene resin having a melt flow rate (150°C) of 9.0 g/10 min with 250 intramolecular unsaturated bonds per 10³ carbon atoms.
PB (II): 1,2-polybutadiene resin having a melt flow rate (150°C) of 3.0 g/10 min with 250 intramolecular unsaturated bonds per 10³ carbon atoms.

### [Example 3-1]

A 4-methyl-1-pentene resin composition was prepared comprising 85% by weight of the aforementioned MeP (I), and 15% by weight of the aforementioned PB (I).

The number of intramolecular unsaturated bonds per 10³ carbon atoms of the resultant 4-methyl-1-pentene resin composition was measured by means of infrared (IR) analysis.

As shown in Figure 1, a molten resin film comprising the 4-methyl-1-pentene resin composition was then subjected to ozone treatment, and laminated onto corona-treated high-quality paper 10 (160 g/m²) under the conditions shown in the following Table 3-1, by means of a lamination-molding apparatus having a width of 1100 mm and equipped with a 90 mm extruder, to produce a laminated member.

Subsequently, the inter-layer adhesive strength of the resultant laminated member was measured. These results are shown in Table 3-1.

### [Example 3-2]

A 4-methyl-1-pentene resin composition was prepared comprising 97.5% by weight of the aforementioned MeP (I), and 2.5% by weight of the aforementioned PB (I).

In the same manner as in Example 3-1, a molten resin film comprising the 4-methyl-1-pentene resin composition was laminated onto high-quality paper 10 under the conditions shown in Table 3-1, by means of a lamination-molding apparatus having a width of 1100 mm and equipped with a 90 mm extruder, to produce a laminated member.

Subsequently, the inter-layer adhesive strength of the resultant laminated member was measured. These results are shown in Table 3-1.

### [Example 3-3]

A 4-methyl-1-pentene resin composition was prepared comprising 85% by weight of the aforementioned MeP (I), and 15% by weight of the aforementioned PB (I).

Extrusion-lamination (via co-extrusion) onto high-quality paper 10 was then jointly performed under the conditions shown in Table 3-1, with the resultant 4-methyl-1-pentene resin composition provided on the base material 13 side, and the aforementioned MeP (I) provided on the cooling roll side, by means of a lamination-molding apparatus having a width of 1100 mm and equipped with a 90 mm extruder, to produce a laminated member having a three-layer structure comprising MeP (I)/ MeP (I) + PB (I)/ base material. The thickness of both the MeP (I) layer and MeP (I) + PB (I) layer was 25 µm, respectively.

Subsequently, the inter-layer adhesive strength between the resin layer (MeP (I)/ MeP (I) + PB (I)) and base material was measured. These results are shown in Table 3-1.

### [Comparative Example 3-1]

Using only the aforementioned MeP (I), a laminated member was manufactured in the same manner as in Example 3-1 by means of laminating the MeP (I) onto high-quality paper under the conditions shown in Table 3-1, using a lamination-molding apparatus having a width of 1100 mm and equipped with a 90 mm extruder.

Subsequently, the inter-layer adhesive strength of the resultant laminated member was measured. These results are shown in Table 3-1.

### [Comparative Example 3-2]

A 4-methyl-1-pentene resin composition was prepared comprising 99.9% by weight of the aforementioned MeP (I), and 0.1% by weight of the aforementioned PB (II).

Using the resultant 4-methyl-1-pentene resin composition, a laminated member was manufactured by means of laminating the resin composition onto high-quality paper under the conditions shown in Table 3-1, using a lamination-molding apparatus having a width of 1100 mm and equipped with a 90 mm extruder.

Subsequently, the inter-layer adhesive strength of the resultant laminated member was measured. These results are shown in Table 3-1.

### [Comparative Example 3-3]

Using only the aforementioned MeP (II), a laminated member was manufactured by means of laminating the MeP (II) onto high-quality paper under the conditions shown in Table 3-1, using a lamination-molding apparatus having a width of 1100 mm and equipped with a 90 mm extruder. However, the molten resin was not subjected to ozone treatment.

Subsequently, the inter-layer adhesive strength of the resultant laminated member was measured. These results are shown in Table 3-1.

### [Evaluation Method]

### (Adhesive strength to paper)

The adhesive strength to a high-quality paper base material was evaluated based on the condition at the time of inter-layer separation according to the following 3-stage evaluation standard.
ⓞ : uniform solidification of the high-quality paper and 4-methyl-1-pentene resin composition layer without residual stranding of the resin
Δ : intermediate adhesiveness with separation possible
× : easy separation of the high-quality paper and 4-methyl-1-pentene resin composition layer

**Table 3-1**

| Items | Examples | | | Comparative Examples | | |
|---|---|---|---|---|---|---|
| | 3-1 | 3-2 | 3-3 | 3-1 | 3-2 | 3-3 |
| Component (A) | MeP (I) | | | MeP (I) | | MeP (II) |
| MFR of component (A) (260°C)(g/10 min) | 100 | | | 100 | | 80 |
| Component (B) | 1,2-polybutadiene | | | - | 1,2-polybutadiene | - |
| MFR of component (B) (g/10 min) | 9.0 (150°C) | | | - | 3.0 (150°C) | - |
| No.of intramolecular unsaturated bonds of (B) (per 1000 carbon atoms) | 250 | | | - | 250 | - |
| Amount of component (B) | 15% | 2.5% | 15% | 0 | 0.1% | 0 |
| No.of intramolecular unsaturated bonds in the composition (per 1000 carbon atoms) | 37.5 | 6.25 | 37.5 | 0 | 0.25 | 0 |
| Single layer/co-extrusion | Single layer | | Co-extrusion | Single layer | | |
| Base material | High quality paper | | | High quality paper | | |
| Molding temperature (°C) | 270 | | | 270 | | 310 |
| Molding speed (m/min) | 120 | | | 120 | | 120 |
| Air gap (mm) | 110 | | | 110 | | 110 |
| Film thickness (µm) | 50 | | | 50 | | 50 |
| Corona discharge treatment | 7KW | | | 7KW | | 7KW |
| Ozone treatment | Done | | | Done | | None |
| Adhesive strength | ⓞ | Δ | ⓞ | × | × | Δ |
| Condition for ozone treatment: 50 g/m³ - 4.5 m³/hr | | | | | | |

As seen from the aforementioned, according to the laminated member of the present invention, it is possible to produce a high adhesive strength while also maintaining a high molding speed and a low molding temperature. In contrast, Comparative Example 1, which lacked the (B) component, and Comparative Example 2, which had an inadequate number of intramolecular unsaturated bonds, produced laminated members that displayed low adhesive strengths. Incidentally, an improvement in the adhesive strength was observed in Comparative Example 3, which lacked the (B) component and did not undergo ozone treatment, by means of increasing the molding temperature.

### Example 4 .

### [Example 4-1]

A polypropylene resin composition was prepared comprising 97% by weight of a polypropylene resin (I) having a melt flow rate (MFR) at 230°C of 30 g/10 min, and 3.0% by weight of an ethylene-propylene-diene terpolymer (EPDM) having a melt flow rate (MFR) at 230°C of 3.0 g/10 min.

The number of intramolecular unsaturated bonds per 10³ carbon atoms of the resultant polypropylene resin composition was measured by means of infrared (IR) analysis.

Using the resultant polypropylene resin composition, a laminated member was manufactured by laminating the resin composition onto paper under the conditions shown in Table 4-1, by means of a lamination-molding apparatus having a width of 1100 mm and equipped with a 90 mm extruder.

Subsequently, the inter-layer adhesive strength and odor of the resultant laminated member, and fumes produced at the time of manufacture were evaluated. These results are shown in Table 4-1.

### [Example 4-2]

A polypropylene resin composition was prepared comprising 90% by weight of the aforementioned polypropylene resin (I) of Example 4-1, and 10% by weight of a 1, 2-polybutadiene resin having a melt flow rate (MFR) at 150°C of 9.0 g/10 min.

Using the resultant polypropylene resin composition, a laminated member was manufactured by laminating the resin composition onto paper under the conditions shown in Table 4-1, by means of a lamination-molding apparatus having a width of 1100 mm and equipped with a 90 mm extruder.

Subsequently, the inter-layer adhesive strength and odor of the resultant laminated member, and fumes produced at the time of manufacture were evaluated. These results are shown in Table 4-1.

### [Example 4-3]

A polypropylene resin composition was prepared comprising 99.0% by weight of the aforementioned polypropylene resin (I) of Example 4-1, and 1.0% by weight of a 1, 2-polybutadiene resin having a melt flow rate (MFR) at 150°C of 9.0 g/10 min.

Using the resultant polypropylene resin composition, a laminated member was manufactured by laminating the resin composition onto paper under the conditions shown in Table 4-1, by means of a lamination-molding apparatus having a width of 1100 mm and equipped with a 90 mm extruder.

Subsequently, the inter-layer adhesive strength and odor of the resultant laminated member, and fumes produced at the time of manufacture were evaluated. These results are shown in Table 4-1.

### [Comparative Example 4-1]

Using only the aforementioned polypropylene resin (I) of Example 4-1, a laminated member was manufactured by laminating the resin onto paper under the conditions shown in Table 4-1, by means of a lamination-molding apparatus having a width of 1100 mm and equipped with a 90 mm extruder. Subsequently, the inter-layer adhesive strength and odor of the resultant laminated member, and fumes produced at the time of manufacture were evaluated. These results are shown in Table 4-1.

### [Comparative Example 4-2]

A polypropylene resin composition was prepared comprising 99.95% by weight of a polypropylene resin (II) having a melt flow rate (MFR) at 230°C of 20 g/10 min, and 0.05% by weight of a 1, 2-polybutadiene resin having a melt flow rate (MFR) at 150°C of 3.0 g/10 min.

Using the resultant polypropylene resin composition, a laminated member was manufactured by laminating the resin composition onto paper under the conditions shown in Table 4-1, by means of a lamination-molding apparatus having a width of 1100 mm and equipped with a 90 mm extruder. Subsequently, the inter-layer adhesive strength and odor of the resultant laminated member, and fumes produced at the time of manufacture were evaluated. These results are shown in Table 4-1.

### [Comparative Example 4-3]

Using only a polypropylene resin (II) having a melt flow rate (MFR) at 230°C of 20 g/10 min, a laminated member was manufactured by laminating the resin onto paper under the conditions shown in Table 4-1, by means of a lamination-molding apparatus having a width of 1100 mm and equipped with a 90 mm extruder. Subsequently, the inter-layer adhesive strength and odor of the resultant laminated member, and fumes produced at the time of manufacture were evaluated. These results are shown in Table 4-1.

### [Evaluation Method]

### (Adhesive strength to paper)

The adhesive strength to a paper base material was evaluated based on the condition at the time of inter-layer separation according to the following 3-stage evaluation standard.
ⓞ : uniform solidification of the paper and polypropylene resin composition layer without residual stranding of the resin
Δ : intermediate adhesiveness with separation possible
× : easy separation of the paper and polypropylene resin composition layer

**Table 4-1**

| Items | Examples | | | Comparative Examples | | |
|---|---|---|---|---|---|---|
| | 4-1 | 4-2 | 4-3 | 4-1 | 4-2 | 4-3 |
| Component (A) | PP (I) | | | PP (I) | PP (II) | |
| MFR of component (A) (230°C)(g/10 min) | 30 | | | 30 | 20 | |
| Component (B) | EPDM | 1,2-polybutadiene | | - | 1,2-polybutadiene | - |
| MFR of component (B) (g/10 min) | 3.0 (230°C) | 9.0 (150°C) | | - | 3.0 (150°C) | - |
| No.of intramolecular unsaturated bonds of (B) (per 1000 carbon atoms) | 70 | 250 | | - | 250 | - |
| Amount of component (B) | 3.0% | 10% | 1.0% | 0 | 0.05% | 0 |
| No.of intramolecular unsaturated bonds in the composition (per 1000 carbon atoms) | 2.1 | 25 | 2.5 | 0 | 0.13 | 0 |
| Base material | Kraft paper | | | Kraft paper | | |
| Molding temperature (°C) | 270 | | | 270 | | 310 |
| Molding speed (m/min) | 120 | | | 120 | | 120 |
| Air gap (mm) | 120 | | | 120 | | 120 |
| Film thickness (µm) | 40 | | | 40 | | 40 |
| Corona discharge treatment | 6KW | | | 6KW | | 6KW |
| Ozone treatment | Done | | | Done | | None |
| Adhesive strength | ⓞ | ⓞ | Δ | × | × | Δ |
| Odor | A | A | A | A | A | C |
| Fume | a | a | a | a | a | C |
| Condition for ozone treatment: 50 g/m³ - 4.5 m³/hr | | | | | | |

As seen from the aforementioned, when compared with Comparative Example 1 which lacked the (B) component, the Examples, which all included the (B) component, displayed an adequate adhesive strength to the base material. On the other hand, as seen in Comparative Example 2, when the number of intramolecular-unsaturated bonds was inadequate, it was not possible to produce the effects of the present invention. In addition, as seen in Comparative Example 3, it is possible to slightly improve the adhesive strength by increasing the molding temperature; however, this also results in worsening of the odor and an increase in fumes at the time of manufacture.

### § Examples relating to a release member

### Example 5

The following resin components were used in the Examples and Comparative Examples described below.
LDPE (I): Low-density polyethylene having a melt flow rate (190°C) of 8.5 g/10 min and a density of 0.918 g/cm³ produced by means of a high-pressure radical method.
LDPE (II): Low-density polyethylene having a melt flow rate (190°C) of 20 g/10 min and a density of 0.918 g/cm³ produced by means of a high-pressure radical method.
LDPE (III): Low-density polyethylene having a melt flow rate (190°C) of 8.2 g/10 min and a density of 0.918 g/cm³ produced by means of a high-pressure radical method.
Mixed PE: A mixture comprising 40% by weight of the aforementioned LDPE (I), and 60% by weight of a high-density polyethylene having a melt flow rate of 20 g/10 min.
EPDM: An ethylene-propylene-diene terpolymer having a melt flow rate (MFR) at 230°C of 3.0 g/10 min, and 70 intramolecular unsaturated bonds per 10³ carbon atoms.
PB (I): 1,2-polybutadiene resin having a melt flow rate (150°C) of 3.0 g/10 min with 250 intramolecular unsaturated bonds per 10³ carbon atoms.
PB (II): 1,2-polybutadiene resin having a melt flow rate (150°C) of 9.0 g/10 min with 250 intramolecular unsaturated bonds per 10³ carbon atoms.

### [Example 5-1]

A polyethylene resin composition was prepared comprising 97.5% by weight of the aforementioned LDPE (I), and 2.5% by weight of the aforementioned EPDM.

The number of intramolecular unsaturated bonds per 10³ carbon atoms of the resultant polyethylene resin composition was measured by means of infrared (IR) analysis.

As shown in Figure 4, a resin layer in a molten resin film state comprising the polyethylene resin composition was then subjected to ozone treatment, and laminated onto corona -treated kraft paper 12 under the conditions shown in Table 5-1, by means of a lamination-molding apparatus having a width of 1100 mm and equipped with a 90 mm extruder, to produce a laminated member.

Subsequently, the inter-layer adhesive strength of the resultant laminated member, and fumes produced at the time of manufacture were evaluated. These results are shown in Table 5-1.

Furthermore, a silicone resin was coated onto the resin layer, and then cured to form a release member.

### [Example 5-2]

A polyethylene resin composition was prepared comprising 97.5% by weight of the aforementioned LDPE (I), and 2.5% by weight of the aforementioned PB (I).

Using the resultant polyethylene resin composition, a laminated member was manufactured by laminating the resin composition onto kraft paper under the conditions shown in Table 5-1, by means of a lamination-molding apparatus having a width of 1100 mm and equipped with a 90 mm extruder.

Subsequently, the inter-layer adhesive strength of the resultant laminated member, and fumes produced at the time of manufacture were evaluated. These results are shown in Table 5-1.

Furthermore, a silicone resin was coated onto the resin layer, and then cured to form a release member.

### [Example 5-3]

A polyethylene resin composition was prepared comprising 99.0% by weight of the aforementioned LDPE (I), and 1.0% by weight of the aforementioned PB (I).

Using the resultant polyethylene resin composition, a laminated member was manufactured by laminating the resin composition onto kraft paper under the conditions shown in Table 5-1, by means of a lamination-molding apparatus having a width of 1100 mm and equipped with a 90 mm extruder.

Subsequently, the inter-layer adhesive strength of the resultant laminated member, and fumes produced at the time of manufacture were evaluated. These results are shown in Table 5-1.

Furthermore, a silicone resin was coated onto the resin layer, and then cured to form a release member.

### [Example 5-4]

A polyethylene resin composition was prepared comprising 93% by weight of the aforementioned mixed PE, and 7.0% by weight of the aforementioned PB (II).

Using the resultant polyethylene resin composition, a laminated member was manufactured by laminating the resin composition onto kraft paper under the conditions shown in Table 5-1, by means of a lamination-molding apparatus having a width of 1100 mm and equipped with a 90 mm extruder.

Subsequently, the inter-layer adhesive strength of the resultant laminated member, and fumes produced at the time of manufacture were evaluated. These results are shown in Table 5-1.

Furthermore, a silicone resin was coated onto the resin layer, and then cured to form a release member.

### [Example 5-5]

A polyethylene resin composition was prepared comprising 97.5% by weight of the aforementioned LDPE (I), and 2.5% by weight of the aforementioned PB (I).

Extrusion-lamination (via co-extrusion) onto kraft paper was then jointly performed under the conditions shown in Table 5-1, with the resultant polyethylene resin composition provided on the base material layer side, and the aforementioned LDPE (I) provided on the cooling roll 32 side, by means of a lamination-molding apparatus having a width of 1100 mm and equipped with a 90 mm extruder, to produce a laminated member having a three-layer structure comprising LDPE (I)/ LDPE (I) + PB (I)/ base material layer.

Subsequently, the inter-layer adhesive strength between the resin layer (LDPE (I)/ LDPE (I) + PB (I)) and base material layer was measured, and fumes produced at the time of manufacture were evaluated. These results are shown in Table 5-1.

Furthermore, a silicone resin was coated onto the resin layer, and then cured to form a release member.

### [Example 5-6]

A polyethylene resin composition was prepared comprising 93% by weight of the aforementioned mixed PE, and 7.0% by weight of the aforementioned PB (II). Extrusion-lamination (via co-extrusion) onto kraft paper was then jointly performed under the conditions shown in Table 5-1, with the polyethylene resin composition provided on the base material layer side, and the mixed PE provided on the cooling roll 32 side, by means of a lamination-molding apparatus having a width of 1100 mm and equipped with a 90 mm extruder, to produce a laminated member having a three-layer structure comprising mixed PE/ mixed PE + PB (II)/ base material layer.

Subsequently, the inter-layer adhesive strength between the resin layer (mixed PE/ mixed PE + PB (II)) and base material layer was measured, and fumes produced at the time of manufacture were evaluated. These results are shown in Table 5-1.

Furthermore, a silicone resin was coated onto the resin layer, and then cured to form a release member.

### [Comparative Example 5-1]

Using only the aforementioned LDPE (II), a laminated member was manufactured by laminating the LDPE (II) onto kraft paper under the conditions shown in Table 5-2, by means of a lamination-molding apparatus having a width of 1100 mm and equipped with a 90 mm extruder.

Subsequently, the inter-layer adhesive strength of the resultant laminated member and fumes produced at the time of manufacture were evaluated. These results are shown in Table 5-2.

### [Comparative Example 5-2]

A polyethylene resin composition was prepared comprising 99.95% by weight of the aforementioned LDPE (II), and 0.05% by weight of the aforementioned PB (I).

Using the resultant polyethylene resin composition, a laminated member was manufactured by laminating the resin composition onto kraft paper under the conditions shown in Table 5-2, by means of a lamination-molding apparatus having a width of 1100 mm and equipped with a 90 mm extruder.

Subsequently, the inter-layer adhesive strength of the resultant laminated member and fumes produced at the time of manufacture were evaluated. These results are shown in Table 5-2.

### [Comparative Example 5-3]

Using only the aforementioned LDPE (III), a laminated member was manufactured by laminating the LDPE (III) onto kraft paper under the conditions shown in Table 5-2, by means of a lamination-molding apparatus having a width of 1100 mm and equipped with a 90 mm extruder. However, ozone treatment of the molten resin was not performed.

Subsequently, the inter-layer adhesive strength of the resultant laminated member and fumes produced at the time of manufacture were evaluated. These results are shown in Table 5-2.

### [Evaluation Method]

### (Adhesive strength to paper)

The adhesive strength to the kraft paper base material was evaluated based on the condition at the time of inter-layer separation according to the following 3-stage evaluation standard.
ⓞ : uniform solidification of the kraft paper and polyethylene resin layer without residual stranding of the resin
Δ : intermediate adhesiveness with separation possible
× : easy separation of the kraft paper and polyethylene resin layer

**Table 5-1**

| Items | Examples | | | | | |
|---|---|---|---|---|---|---|
| | 5-1 | 5-2 | 5-3 | 5-4 | 5-5 | 5-6 |
| Component (A) | LDPE (I) | | | Mixed PE | LDPE (I) | Mixed PE |
| MFR of component (A) (190°C)(g/10 min) | 8.5 | | | 20/8.5 | 8.5 | 20/8.5 |
| Component (B) | EPDM | PB (I) | PB (I) | PB (II) | PB (I) | PB (II) |
| MFR of component (B) (g/10 min) | 3.0 (230°C ) | 3.0 (150°C ) | 3.0 (150°C ) | 9.0 (150°C) | 3.0 (150°C) | 9.0 (150°C) |
| No.of intramolecular unsaturated bonds of (B) (per 1000 carbon atoms) | 70 | 250 | 250 | 250 | 250 | 250 |
| Amount of component (B) | 2.5% | 2.5% | 1.0% | 7.0% | 2.5% | 7.0% |
| No.of intramolecular unsaturated bonds in the composition (per 1000 carbon atoms) | 1.9 | 6.3 | 2.6 | 17.5 | 6.3 | 17.5 |
| Single layer/co-extrusion | Single layer | | | | Co-extrusion | |
| Base material | Kraft paper | | | | | |
| Molding temperature (°C) | 270 | | | | | |
| Molding speed (m/min) | 350 | | | | | |
| Air gap (mm) | 140 | | | | | |
| Film thickness (µm) | 20 | | | | | |
| Corona discharge treatment | 7KW | | | | | |
| Ozone treatment | Done | | | | | |
| Adhesive strength | ⓞ | ⓞ | Δ | ⓞ | ⓞ | ⓞ |
| Fume | a | a | a | a | a | A |
| Condition for ozone treatment: 50 g/m³ - 4.5 m³/hr | | | | | | |

**Table 5-2**

| Items | Comparative Examples | | |
|---|---|---|---|
| | 5-1 | 5-2 | 5-3 |
| Component (A) | LDPE (II) | LDPE (II) | LDPE (III) |
| MFR of component (A) (190°C)(g/10 min) | 20 | 20 | 8.2 |
| Component (B) | - | PB (I) | - |
| MFR of component (B) (g/10 min) | - | 3.0 (150°C) | - |
| No. of intramolecular unsaturated bonds of (B) (per 1000 carbon atoms) | - | 250 | - |
| Amount of component (B) | 0 | 0.05% | 0 |
| No. of intramolecular unsaturated bonds in the composition (per 1000 carbon atoms) | 0 | 0.13 | 0 |
| Single layer/co-extrusion | Single layer | Single layer | Single layer |
| Base material | Kraft paper | | |
| Molding temperature (°C) | 270 | 270 | 270 |
| Molding speed (m/min) | 350 | 350 | 350 |
| Air gap (mm) | 140 | 140 | 140 |
| Film thickness (µm) | 20 | 20 | 20 |
| Corona discharge treatment | 7KW | 7KW | 7KW |
| Ozone treatment | Done | Done | None |
| Adhesive strength | × | × | Δ |
| Fume | a | a | c |
| Condition for ozone treatment: 50 g/m³ - 4.5 m³/hr | | | |

As seen from the aforementioned, according to the laminated members of the present example, it is possible to produce a high adhesive strength while also maintaining a high molding speed and a low molding temperature. In contrast, Comparative Example 1, which lacked the (B) component, and Comparative Example 2, which had an inadequate amount of the (B) component, produced products that displayed low adhesive strengths. In addition, although an improvement in the adhesive strength was observed in Comparative Example 3, which lacked the (B) component and did not undergo ozone treatment, a significant quantity of fumes was generated as a result of the increase in the molding temperature.

### Example 6

The following resin components were used in the Examples and Comparative Examples described below.
PP (I): A polypropylene having a melt flow rate (230°C) of 30 g/10 min.
PP (II): A polypropylene having a melt flow rate (230°C) of 20 g/10 min.
PB (I): 1,2-polybutadiene resin having a melt flow rate (150°C) of 9.0 g/10 min with 250 intramolecular unsaturated bonds per 10³ carbon atoms.
PB (II): 1,2-polybutadiene resin having a melt flow rate (150°C) of 3.0 g/10 min with 250 intramolecular unsaturated bonds per 10³ carbon atoms.

### [Example 6-1]

A polypropylene resin composition was prepared comprising 90% by weight of the aforementioned PP (I), and 10% by weight of the aforementioned PB (I).

The number of intramolecular unsaturated bonds per 10³ carbon atoms of the resultant polypropylene resin composition was measured by means of infrared (IR) analysis.

As shown in Figure 4, a resin layer in a molten resin film state comprising the polypropylene resin composition was then subjected to ozone treatment, and laminated onto corona-treated kraft paper 12 under the conditions shown in Table 6-1, by means of a lamination-molding apparatus having a width of 1100 mm and equipped with a 90 mm extruder, to produce a laminated member.

Subsequently, the inter-layer adhesive strength of the resultant laminated member and fumes produced at the time of manufacture were evaluated. These results are shown in Table 6-1.

Furthermore, a silicone resin was coated onto the resin layer, and then cured to form a release member.

### [Example 6-2]

A polypropylene resin composition was prepared comprising 99% by weight of the aforementioned PP (I), and 1.0% by weight of the aforementioned PB (I).

Using the resultant polypropylene resin composition, a laminated member was manufactured by laminating the resin composition onto kraft paper under the conditions shown in Table 6-1, by means of a lamination-molding apparatus having a width of 1100 mm and equipped with a 90 mm extruder.

Subsequently, the inter-layer adhesive strength of the resultant laminated member and fumes produced at the time of manufacture were evaluated. These results are shown in Table 6-1.

Furthermore, a silicone resin was coated onto the resin layer, and then cured to form a release member.

### [Example 6-3]

A polypropylene resin composition was prepared comprising 90% by weight of the aforementioned PP (I), and 10% by weight of the aforementioned PB (I).

Extrusion-lamination (via co-extrusion) onto kraft paper was then jointly performed under the conditions shown in Table 6-1, with the resultant polyethylene resin composition provided on the base material layer side, and the aforementioned PP (I) provided on the cooling roll 32 side, by means of a lamination-molding apparatus having a width of 1100 mm and equipped with a 90 mm extruder, to produce a laminated member having a three-layer structure comprising PP (I)/ PP (I) + PB (I)/ base material layer.

Subsequently, the inter-layer adhesive strength between the resin layer (PP (I)/ PP (I) + PB (I)) and base material layer was measured, and fumes produced at the time of manufacture were evaluated. These results are shown in Table 6-1.

Furthermore, a silicone resin was coated onto the resin layer, and then cured to form a release member.

### [Comparative Example 6-1]

Using only the aforementioned PP (I), a laminated member was manufactured by laminating the PP (I) onto kraft paper under the conditions shown in Table 6-1, by means of a lamination-molding apparatus having a width of 1100 mm and equipped with a 90 mm extruder.

Subsequently, the inter-layer adhesive strength of the resultant laminated member and fumes produced at the time of manufacture were evaluated. These results are shown in Table 6-1.

### [Comparative Example 6-2]

A polypropylene resin composition was prepared comprising 99.95% by weight of the aforementioned PP (I), and 0.05% by weight of the aforementioned PB (II).

Using the resultant polyethylene resin composition, a laminated member was manufactured by laminating the resin composition onto kraft paper under the conditions shown in Table 6-1, by means of a lamination-molding apparatus having a width of 1100 mm and equipped with a 90 mm extruder.

Subsequently, the inter-layer adhesive strength of the resultant laminated member and fumes produced at the time of manufacture were evaluated. These results are shown in Table 6-1.

### [Comparative Example 6-3]

Using only the aforementioned PP (II), a laminated member was manufactured by laminating the PP (II) onto kraft paper under the conditions shown in Table 6-1, by means of a lamination-molding apparatus having a width of 1100 mm and equipped with a 90 mm extruder. However, ozone treatment of the molten resin was not performed.

Subsequently, the inter-layer adhesive strength of the resultant laminated member and fumes produced at the time of manufacture were evaluated. These results are shown in Table 6-1.

### [Evaluation Method]

### (Adhesive strength to paper)

The adhesive strength to the kraft paper base material was evaluated based on the condition at the time of inter-layer separation according to the following 3-stage evaluation standard.
ⓞ : uniform solidification of the kraft paper and polypropylene resin layer without residual stranding of the resin
Δ : intermediate adhesiveness with separation possible
× : easy separation of the kraft paper and polypropylene resin layer

**Table 6-1**

| Items | Examples | | | Comparative Examples | | |
|---|---|---|---|---|---|---|
| | 6-1 | 6-2 | 6-3 | 6-1 | 6-2 | 6-3 |
| Component (A) | PP (I) | | | PP (I) | | PP (II) |
| MFR of component (A) (230°C)(g/10 min) | 30 | | | 30 | | 20 |
| Component (B) | 1,2-polybutadiene | | | - | 1,2-polybutadiene | - |
| MFR of component (B) (g/10 min) | 9.0 (150°C) | | | - | 3.0 (150°C) | - |
| No. of intramolecular unsaturated bonds of (B) (per 1000 carbon atoms) | 250 | | | - | 250 | - |
| Amount of component (B) | 10.0% | 1.0% | 10.0% | 0 | 0.05% | 0 |
| No. of intramolecular unsaturated bonds in the composition (per 1000 carbon atoms) | 25 | 2.5 | 25 | 0 | 0.13 | 0 |
| Single layer/co-extrusion | Single layer | | Co-extrusion | Single layer | | |
| Base material | Kraft paper | | | Kraft paper | | |
| Molding temperature (°C) | 270 | | | 270 | | 310 |
| Molding speed (m/min) | 150 | | | 150 | | 150 |
| Air gap (mm) | 120 | | | 120 | | 120 |
| Thickness of the film (µm) | 20 | | | 20 | | 20 |
| Corona discharge treatment | 7KW | | | 7KW | | 7KW |
| Ozone treatment | Done | | | Done | | None |
| Adhesive strength | ⓞ | Δ | ⓞ | × | × | Δ |
| Fume | a | a | a | a | a | c |
| Condition for ozone treatment: 50 g/m³ - 4.5 m³/hr | | | | | | |

As seen from the aforementioned, according to the laminated members of the present example, it is possible to produce a high adhesive strength while also maintaining a high molding speed and a low molding temperature. In contrast, Comparative Example 1, which lacked the (B) component, and Comparative Example 2, which had an inadequate amount of the (B) component, produced products that displayed low adhesive strengths. In addition, although an improvement in the adhesive strength was observed in Comparative Example 3, which lacked the (B) component and did not undergo ozone treatment, a significant quantity of fumes was generated as a result of the increase in the molding temperature.

### Example 7

The following resin components were used in the Examples and Comparative Examples described below.
LDPE (I): Low-density polyethylene having a melt flow rate (190°C) of 8.5 g/10 min and a density of 0.918 g/cm³ produced by means of a high-pressure radical method.
LDPE (II): Low-density polyethylene having a melt flow rate (190°C) of 20 g/10 min and a density of 0.918 g/cm³ produced by means of a high-pressure radical method.
LDPE (III): Low-density polyethylene having a melt flow rate (190°C) of 8.2 g/10 min and a density of 0.918 g/cm³ produced by means of a high-pressure radical method.
EPDM: An ethylene-propylene-diene terpolymer having a melt flow rate (MFR) at 230°C of 3.0 g/10 min, and 70 intramolecular unsaturated bonds per 10³ carbon atoms.

A 1,2-polybutadiene resin having a melt flow rate (150°C) of 3.0 g/10 min with 250 intramolecular unsaturated bonds per 10³ carbon atoms.

### [Example 7-1]

A polyethylene resin composition was prepared comprising 98% by weight of the aforementioned LDPE (I), and 2.0% by weight of the aforementioned EPDM.

The number of intramolecular unsaturated bonds per 10³ carbon atoms of the resultant polyethylene resin composition was measured by means of infrared (IR) analysis.

As shown in Figure 4, a resin layer in a molten resin film state comprising the polyethylene resin composition was then subjected to ozone treatment, and laminated onto corona-treated kraft paper 12 under the conditions shown in Table 7-1, by means of a lamination-molding apparatus having a width of 1100 mm and equipped with a 90 mm extruder, to produce a release member.

Subsequently, the inter-layer adhesive strength of the resultant release member and fumes produced at the time of manufacture were evaluated. These results are shown in Table 7-1.

### [Example 7-2]

A polyethylene resin composition was prepared comprising 97.8% by weight of the aforementioned LDPE (I), and 2.2% by weight of the aforementioned 1, 2-polybutadiene resin.

Using the resultant polyethylene resin composition, a release member was manufactured by laminating the resin composition onto kraft paper under the conditions shown in Table 7-1, by means of a lamination-molding apparatus having a width of 1100 mm and equipped with a 90 mm extruder.

Subsequently, the inter-layer adhesive strength of the resultant release member and fumes produced at the time of manufacture were evaluated. These results are shown in Table 7-1.

### [Example 7-3]

A polyethylene resin composition was prepared comprising 99.3% by weight of the aforementioned LDPE (I), and 0.7% by weight of the aforementioned 1, 2-polybutadiene resin.

Using the resultant polyethylene resin composition, a release member was manufactured by laminating the resin composition onto kraft paper under the conditions shown in Table 7-1, by means of a lamination-molding apparatus having a width of 1100 mm and equipped with a 90 mm extruder.

Subsequently, the inter-layer adhesive strength of the resultant release member and fumes produced at the time of manufacture were evaluated. These results are shown in Table 7-1.

### [Example 7-4]

A polyethylene resin composition was prepared comprising 97.0% by weight of the aforementioned LDPE (I), and 3.0% by weight of the aforementioned 1, 2-polybutadiene resin.

Extrusion-lamination (via co-extrusion) onto kraft paper was then jointly performed under the conditions shown in Table 7-1, with the resultant polyethylene resin composition provided on the base material layer side, and the aforementioned LDPE (I) provided on the cooling roll 32 side, by means of a lamination-molding apparatus having a width of 1100 mm and equipped with a 90 mm extruder, to produce a release member having a three-layer structure comprising LDPE (I)/ LDPE (I) + 1, 2-polybutadiene resin/ base material layer.

Subsequently, the inter-layer adhesive strength between the resin layer (LDPE (I)/ LDPE (I) + 1, 2-polybutadiene resin) and base material layer was measured, and fumes produced at the time of manufacture were evaluated. These results are shown in Table 7-1.

### [Comparative Example 7-1]

Using only the aforementioned LDPE (II), a laminated member was manufactured by laminating the LDPE (II) onto kraft paper under the conditions shown in Table 7-1, by means of a lamination-molding apparatus having a width of 1100 mm and equipped with a 90 mm extruder.

Subsequently, the inter-layer adhesive strength of the resultant laminated member and fumes produced at the time of manufacture were evaluated. These results are shown in Table 7-1.

### [Comparative Example 7-2]

A polyethylene resin composition was prepared comprising 99.95% by weight of the aforementioned LDPE (II), and 0.05% by weight of the aforementioned 1, 2-polybutadiene resin.

Using the resultant polyethylene resin composition, a laminated member was manufactured by laminating the resin composition onto kraft paper under the conditions shown in Table 7-1, by means of a lamination-molding apparatus having a width of 1100 mm and equipped with a 90 mm extruder.

Subsequently, the inter-layer adhesive strength of the resultant laminated member and fumes produced at the time of manufacture were evaluated. These results are shown in Table 7-1.

### [Comparative Example 7-3]

Using only the aforementioned LDPE (III), a laminated member was manufactured by laminating the LDPE (III) onto kraft paper under the conditions shown in Table 7-1, by means of a lamination-molding apparatus having a width of 1100 mm and equipped with a 90 mm extruder. However, ozone treatment of the molten resin was not performed.

Subsequently, the inter-layer adhesive strength of the resultant laminated member and fumes produced at the time of manufacture were evaluated. These results are shown in Table 7-1.

### [Evaluation Method]

### (Adhesive strength to paper)

The adhesive strength to the kraft paper base material was evaluated based on the condition at the time of inter-layer separation according to the following 3-stage evaluation standard.
ⓞ : uniform solidification of the kraft paper and the resin layer without residual stranding of the resin
Δ : intermediate adhesiveness with separation possible
× : easy separation of the kraft paper and the resin layer

**Table 7-1**

| Items | Examples | | | | Comparative Examples | | |
|---|---|---|---|---|---|---|---|
| | 7-1 . | 7-2 | 7-3 | 7-4 | 7-1 | 7-2 | 7-3 |
| Component (A) | LDPE (I) | | | | LDPE(II) | | LDPE (III) |
| MFR of component (A) (190°C)(g/10 min) | 8.5 | | | | 20 | | 8.2 |
| Component (B) | EPDM | 1,2-polybutadiene | | | - | 1,2-polybutadiene | - |
| MFR of component (B) (g/10 min) | 3.0 (230°C) | 3.0 (150°C) | | | - | 3.0 (150°C) | - |
| No.of intramolecular unsaturated bonds of (B) (per 1000 carbon atoms) | 70 | 250 | | | - | 250 | - |
| Amount of component (B) | 2.0% | 2.2% | 0.7% | 3.0% | 0 | 0.05% | 0 |
| No.of intramolecular unsaturated bonds in the composition (per 1000 carbon atoms) | 2 | 5.5 | 2.3 | 8 | 0 | 0.13 | 0 |
| Single layer/co-extrusion | Single layer | | | Co-extrusion | Single layer | | |
| Base material | Kraft paper | | | | Kraft paper | | |
| Molding temperature (°C) | 250 | | | | 250 | | 320 |
| Molding speed (m/min) | 300 | | | | 300 | | 350 |
| Air gap (mm) | 130 | | | | 130 | | 140 |
| Film thickness (µm) | 20 | | | | 20 | | 20 |
| Corona discharge treatment | 7KW | | | | 7KW | | 7KW |
| Ozone treatment | Done | | | | Done | | None |
| Adhesive strength | ⓞ | ⓞ | Δ | ⓞ | × | × | Δ |
| Fume | a | a | a | a | a | a | c |
| Condition for ozone treatment: 50 g/m³ - 4.5 m³/hr | | | | | | | |

As seen from the aforementioned, according to the release member of the present example, it is possible to produce a high adhesive strength while also maintaining a high molding speed and a low molding temperature. In contrast, Comparative Example 1, which lacked the (B) component, and Comparative Example 2, which had an inadequate amount of the (B) component, produced laminated members that displayed low adhesive strengths. In addition, although an improvement in the adhesive strength was observed in Comparative Example 3, which lacked the (B) component and did not undergo ozone treatment, a significant quantity of fumes was generated as a result of the increase in the molding temperature.

### §Examples relating to a processing sheet

### Example 8

The following resin components were used in the Examples and Comparative Examples described below.
PP: Polypropylene having a melt flow rate (230°C) of 35 g/10 min.
PB (I): 1,2-polybutadiene resin having a melt flow rate (150°C) of 9.0 g/10 min with 250 intramolecular unsaturated bonds per 10³ carbon atoms.
PB (II): 1,2-polybutadiene resin having a melt flow rate (150°C) of 3.0 g/10 min with 250 intramolecular unsaturated bonds per 10³ carbon atoms.

### [Example 8-1]

A polypropylene resin composition was prepared comprising 92% by weight of the aforementioned PP, and 8% by weight of the aforementioned PB (I).

The number of intramolecular unsaturated bonds per 10³ carbon atoms of the resultant polypropylene resin composition was measured by means of infrared (IR) analysis.

As shown in Figure 1, a processing layer comprising the polypropylene resin composition in a molten film state was then subjected to ozone treatment, and laminated onto corona-treated high-quality paper 10 (130 g/m²) under the conditions shown in the Table 8-1, by means of a lamination-molding apparatus having a width of 1100 mm and equipped with a 90 mm extruder, to produce a laminated member.

Subsequently, the inter-layer adhesive strength of the resultant laminated member and fumes produced at the time of manufacture were evaluated. These results are shown in Table 8-1.

The processing layer of this laminated member was then embossed in a predetermined manner to produce a processing sheet.

The resultant processing sheet displayed sufficient residual embossing to undergo an embossing finish, and also exhibited an adequate thermal resistance.

### [Example 8-2]

A polypropylene resin composition was prepared comprising 99.0% by weight of the aforementioned PP, and 1.0% by weight of the aforementioned PB (I).

In the same manner as in Example 8-1, a laminated member was manufactured under the conditions shown in Table 8-1, by laminating the resultant polypropylene resin composition onto high-quality paper, by means of a lamination-molding apparatus having a width of 1100 mm and equipped with a 90 mm extruder.

Subsequently, the inter-layer adhesive strength of the resultant laminated member and fumes produced at the time of manufacture were evaluated. These results are shown in Table 8-1.

The processing layer of this laminated member was then embossed in a predetermined manner to produce a processing sheet. The resultant processing sheet displayed sufficient residual embossing to undergo an embossing finish, and also exhibited an adequate thermal resistance.

### [Example 8-3]

A polypropylene resin composition was prepared comprising 90% by weight of the aforementioned PP, and 10% by weight of the aforementioned PB (I).

Extrusion-lamination (via co-extrusion) onto high-quality paper was then jointly performed under the conditions shown in Table 8-1, with the resultant polypropylene resin composition provided on the base material 13 side, and the aforementioned PP provided on the cooling roll 32 side, by means of a lamination-molding apparatus having a width of 1100 mm and equipped with a 90 mm extruder, to produce a laminated member having a three-layer structure comprising PP/ PP + PB (I)/ base material.

Subsequently, the inter-layer adhesive strength between the processing layer (PP/ PP + PB (I)) and base material was measured and fumes produced at the time of manufacture was evaluated. These results are shown in Table 8-1.

The processing layer of this laminated member was then embossed in a predetermined manner to produce a processing sheet. The resultant processing sheet displayed sufficient residual embossing to undergo an embossing finish, and also exhibited an adequate thermal resistance.

### [Comparative Example 8-1]

Using only the aforementioned PP, a laminated member was manufactured by means of laminating the PP onto high-quality paper under the conditions shown in Table 8-1, using a lamination-molding apparatus having a width of 1100 mm and equipped with a 90 mm extruder.

Subsequently, the inter-layer adhesive strength of the resultant laminated member and fumes produced at the time of manufacture were evaluated. These results are shown in Table 8-1.

### [Comparative Example 8-2]

A polypropylene resin composition was prepared comprising 99.95% by weight of the aforementioned PP, and 0.05% by weight of the aforementioned PB (II).

Using the resultant polypropylene resin composition, a laminated member was manufactured by means of laminating the resin composition onto high-quality paper under the conditions shown in Table 8-1, using a lamination-molding apparatus having a width of 1100 mm and equipped with a 90 mm extruder.

Subsequently, the inter-layer adhesive strength of the resultant laminated member and fumes produced at the time of manufacture were evaluated. These results are shown in Table 8-1.

### [Comparative Example 8-3]

Using only the aforementioned PP, a laminated member was manufactured by means of laminating the PP onto high-quality paper under the conditions shown in Table 8-1, using a lamination-molding apparatus having a width of 1100 mm and equipped with a 90 mm extruder. However, the molten resin was not subjected to ozone treatment.

Subsequently, the inter-layer adhesive strength of the resultant laminated member and fumes produced at the time of manufacture were evaluated. These results are shown in Table 8-1.

### [Evaluation Method]

### (Adhesive strength to paper)

The adhesive strength to a high-quality paper base material was evaluated based on the condition at the time of inter-layer separation according to the following 3-stage evaluation standard.
ⓞ : uniform solidification of the high-quality paper and the processing layer without residual stranding of the resin
Δ : intermediate adhesiveness with separation possible
× : easy separation of the high-quality paper and the processing layer

**Table 8-1**

| Items | Examples | | | Comparative Examples | | |
|---|---|---|---|---|---|---|
| | 8-1 | 8-2 | 8-3 | 8-1 | 8-2 | 8-3 |
| Component (A) | PP | | | PP | | |
| MFR of component (A) (230°C)(g/10 min) | 35 | | | 35 | | |
| Component (B) | 1,2-polybutadiene | | | - | 1,2-polybutadiene | - |
| MFR of component (B) (g/10 min) | 9.0 (150°C) | | | - | 3.0 (150°C) | - |
| No.of intramolecular unsaturated bonds of (B) (per 1000 carbon atoms) | 250 | | | - | 250 | - |
| Amount of component (B) | 8.0% | 1.0% | 8.0% | 0 | 0.05% | 0 |
| No.of intramolecular unsaturated bonds in the composition (per 1000 carbon atoms) | 20 | 2.5 | 20 | 0 | 0.13 | 0 |
| Single layer/co-extrusion | Single layer | | Co-extrusion | Single layer | | |
| Base material | High quality paper | | | High quality paper | | |
| Molding temperature (°C) | 270 | | | 270 | | 310 |
| Molding speed (m/min) | 120 | | | 120 | | 120 |
| Air gap (mm) | 110 | | | 110 | | 110 |
| Film thickness (µm) | 40 | | | 40 | | 40 |
| Corona discharge treatment | 7KW | | | 7KW | | 7KW |
| Ozone treatment | Done | | | Done | | None |
| Adhesive strength | ⓞ | Δ | ⓞ | × | × | Δ |
| Fume | a | a | a | a | a | c |
| Condition for ozone treatment: 50 g/m³ - 4.5 m³/hr | | | | | | |

As seen from the aforementioned, according to the processing sheet of the present example, it is possible to produce a high adhesive strength while also maintaining a high molding speed and a low molding temperature. In contrast, Comparative Example 1, which lacked the (B) component, and Comparative Example 2, which had an inadequate amount of the (B) component, produced laminated members that displayed low adhesive strengths. In addition, although an improvement in the adhesive strength was observed in Comparative Example 3, which lacked the (B) component and did not undergo ozone treatment, a significant quantity of fumes was generated as a result of the increase in the molding temperature.

### Example 9

The following resin components were used in the Examples and Comparative Examples described below.
MeP (I): 4-methyl-1-pentene resin having a melt flow rate (260°C) of 100 g/10 min.
MeP (II): 4-methyl-1-pentene resin having a melt flow rate (260°C) of 80 g/10 min.
PB (I): 1,2-polybutadiene resin having a melt flow rate (150°C) of 9.0 g/10 min with 250 intramolecular unsaturated bonds per 10³ carbon atoms.
PB (II): 1,2-polybutadiene resin having a melt flow rate (150°C) of 3.0 g/10 min with 250 intramolecular unsaturated bonds per 10³ carbon atoms.

### [Example 9-1]

A 4-methyl-1-pentene resin composition was prepared comprising 90% by weight of the aforementioned MeP (I), and 10% by weight of the aforementioned PB (I).

The number of intramolecular unsaturated bonds per 10³ carbon atoms of the resultant 4-methyl-1-pentene resin composition was measured by means of infrared (IR) analysis.

As shown in Figure 1, a processing layer comprising the 4-methyl-1-pentene resin composition in a molten film state was then subjected to ozone treatment, and laminated onto corona-treated high-quality paper 10 (160 g/m²) under the conditions shown in Table 9-1, by means of a lamination-molding apparatus having a width of 1100 mm and equipped with a 90 mm extruder, to produce a laminated member. Subsequently, the inter-layer adhesive strength of the resultant laminated member was measured. These results are shown in Table 9-1.

The processing layer of this laminated member was then embossed in a predetermined manner to produce a processing sheet.

The resultant processing sheet displayed sufficient residual embossing to undergo an embossing finish, and also exhibited an adequate thermal resistance.

### [Example 9-2]

A 4-methyl-1-pentene resin composition was prepared comprising 98% by weight of the aforementioned MeP (I), and 2.0% by weight of the aforementioned PB (I).

Using the resultant 4-methyl-1-pentene resin composition, a laminated member was manufactured in the same manner as in Example 9-1 by means of laminating the resin composition onto high-quality paper under the conditions shown in Table 9-1, using a lamination-molding apparatus having a width of 1100 mm and equipped with a 90 mm extruder.

Subsequently, the inter-layer adhesive strength of the resultant laminated member was measured. These results are shown in Table 9-1.

The processing layer of this laminated member was then embossed in a predetermined manner to produce a processing sheet. The resultant processing sheet displayed sufficient residual embossing to undergo an embossing finish, and also exhibited an adequate thermal resistance.

### [Example 9-3]

A 4-methyl-1-pentene resin composition was prepared comprising 90% by weight of the aforementioned MeP (I), and 10% by weight of the aforementioned PB (I).

Extrusion-lamination (via co-extrusion) onto high-quality paper 10 was then jointly performed under the conditions shown in Table 9-1, with the resultant 4-methyl-1-pentene resin composition provided on the base material 13 side, and the aforementioned MeP (I) provided on the cooling roll 32 side, by means of a lamination-molding apparatus having a width of 1100 mm and equipped with a 90 mm extruder, to produce a laminated member having a three-layer structure comprising MeP (I)/ MeP (I) + PB (I)/ base material. The thickness of both the MeP (I) layer and MeP (I) + PB (I) layer was 20 µm, respectively.

Subsequently, the inter-layer adhesive strength between the processing layer (MeP (I)/ MeP (I) + PB (I)) and base material was measured. These results are shown in Table 9-1.

The processing layer of this laminated member was then embossed in a predetermined manner to produce a processing sheet. The resultant processing sheet displayed sufficient residual embossing to undergo an embossing finish, and also exhibited an adequate thermal resistance.

### [Comparative Example 9-1]

Using only the aforementioned MeP (I), a laminated member was manufactured in the same manner as in Example 9-1 by means of laminating the MeP (I) onto high-quality paper under the conditions shown in Table 9-1, using a lamination-molding apparatus having a width of 1100 mm and equipped with a 90 mm extruder.

Subsequently, the inter-layer adhesive strength of the resultant laminated member was measured. These results are shown in Table 9-1.

### [Comparative Example 9-2]

A 4-methyl-1-pentene resin composition was prepared comprising 99.95% by weight of the aforementioned MeP (I), and 0.05% by weight of the aforementioned PB (II).

Using the resultant 4-methyl-1-pentene resin composition, a laminated member was manufactured by means of laminating the resin composition onto high-quality paper under the conditions shown in Table 9-1, using a lamination-molding apparatus having a width of 1100 mm and equipped with a 90 mm extruder.

Subsequently, the inter-layer adhesive strength of the resultant laminated member was measured. These results are shown in Table 9-1.

### [Comparative Example 9-3]

Using only the aforementioned MeP (II), a laminated member was manufactured by means of laminating the MeP (II) onto high-quality paper under the conditions shown in Table 9-1, using a lamination-molding apparatus having a width of 1100 mm and equipped with a 90 mm extruder. However, the molten resin was not subjected to ozone treatment.

Subsequently, the inter-layer adhesive strength of the resultant laminated member was measured. These results are shown in Table 9-1.

### [Evaluation Method]

### (Adhesive strength to paper)

The adhesive strength to a high-quality paper base material was evaluated based on the condition at the time of inter-layer separation according to the following 3-stage evaluation standard.
ⓞ : uniform solidification of the high-quality paper and the processing layer without residual stranding of the resin
Δ : intermediate adhesiveness with separation possible
× : easy separation of the high-quality paper and the processing layer

**Table 9-1**

| Items | Examples | | | Comparative Examples | | |
|---|---|---|---|---|---|---|
| | 9-1 | 9-2 | 9-3 | 9-1 | 9-2 | 9-3 |
| Component (A) | MeP (I) | | | MeP (I) | | MeP (II) |
| MFR of component (A) (260°C)(g/10 min) | 100 | | | 100 | | 80 |
| Component (B) | 1,2-polybutadiene | | | - | 1,2-polybutadiene | - |
| MFR of component (B) (g/10 min) | 9.0 (150°C) | | | - | 3.0 (150°C) | - |
| No.of intramolecular unsaturated bonds of (B) (per 1000 carbon atoms) | 250 | | | - | 250 | - |
| Amount of component (B) | 10.0% | 2.0% | 10.0% | 0 | 0.05% | 0 |
| No.of intramolecular unsaturated bonds in the composition (per 1000 carbon atoms) | 25 | 5 | 25 | 0 | 0.13 | 0 |
| Single layer/co-extrusion | Single layer | | Co-extrusion | Single layer | | |
| Base material | High quality paper | | | High quality paper | | |
| Molding temperature (°C) | 270 | | | 270 | | 310 |
| Molding speed (m/min) | 120 | | | 120 | | 120 |
| Air gap (mm) | 110 | | | 110 | | 110 |
| Film thickness (µm) | 50 | | | 50 | | 50 |
| Corona discharge treatment | 7KW | | | 7KW | | 7KW |
| Ozone treatment | Done | | | Done | | None |
| Adhesive strength | ⓞ | Δ | ⓞ | × | × | Δ |
| Condition for ozone treatment: 50 g/m³ - 4.5 m³/hr | | | | | | |

As seen from the aforementioned, according to the processing sheet of the present example, it is possible to produce a high adhesive strength while also maintaining a high molding speed and a low molding temperature. In contrast, Comparative Example 1, which lacked the (B) component, and Comparative Example 2, which had an inadequate amount of the (B) component, produced laminated members that displayed low adhesive strengths. In addition, an improvement in the adhesive strength was observed in Comparative Example 3, which lacked the (B) component and did not undergo ozone treatment, as a result of the increase in the molding temperature.

### Example 10

The following resin components were used in the Examples and Comparative Examples described below.
PP (I): Polypropylene having a melt flow rate (230°C) of 40 g/10 min.
PP (II): Polypropylene having a melt flow rate (230°C) of 20 g/10 min.
LDPE: Low-density polyethylene having a melt flow rate (190°C) of 7.0 g/10 min.
PB: 1,2-polybutadiene resin having a melt flow rate (150°C) of 9.0 g/10 min with 250 intramolecular unsaturated bonds per 10³ carbon atoms.
4-methyl-1-pentene resin having a melt flow rate (260°C) at a weight of 5.0 kg of 100 g/10 min.

### [Example 10-1]

A polyolefin resin composition was prepared comprising 75% by weight of the aforementioned PP (I), 10% by weight of the aforementioned PB, and 15% by weight of the aforementioned LDPE.

The number of intramolecular unsaturated bonds per 10³ carbon atoms of the resultant polyolefin resin composition was measured by means of infrared (IR) analysis.

In a separate process, a 4-methyl-1-pentene resin composition was prepared comprising 80% by weight of the aforementioned PP (I), and 20% by weight of the aforementioned 4-methyl-1-pentene resin.

As shown in Figure 7, co-extrusion of the resultant polyolefin resin composition and 4-methyl-1-pentene resin composition was performed, by means of a co-extrusion/lamination molding apparatus having a width of 1100 mm and equipped with 90 mm and 65 mm extruders. The adhesive layer of the molten resin film comprising the polyolefin resin composition was then subjected to ozone treatment, and laminated onto corona-treated board paper 13 (160 g/m²) under the conditions shown in Table 10-1, to produce a laminated member.

Subsequently, the adhesive strength between the base material and adhesive layer of the resultant laminated member was measured. A separation test was also performed on the surface layer. These results are shown in Table 10-1.

The surface layer of this laminated member was then embossed in a predetermined manner to produce a processing sheet.

The resultant processing sheet displayed sufficient residual embossing to undergo an embossing finish, and also exhibited an adequate thermal resistance.

### [Example 10-2]

A polyolefin resin composition was prepared comprising 84% by weight of the aforementioned PP (I), 1.0% by weight of the aforementioned PB, and 15% by weight of the aforementioned LDPE.

A processing sheet was manufactured in the same manner as in Example 10-1, except that the resultant polyolefin resin composition was used in the adhesive layer.

The resultant processing sheet displayed sufficient residual embossing to undergo an embossing finish, and also exhibited an adequate thermal resistance.

### [Comparative Example 10-1]

A polyolefin resin composition was prepared comprising 85% by weight of the aforementioned PP (I), and 15% by weight of the aforementioned LDPE.

In a separate process, a 4-methyl-1-pentene resin composition was prepared comprising 80% by weight of the aforementioned PP (I), and 20% by weight of the aforementioned 4-methyl-1-pentene resin.

A laminated member was manufactured on board paper in the same manner as in Example 10-1, using the polyolefin resin composition as the adhesive layer, and the 4-methyl-1-pentene resin composition as the surface layer.

### [Comparative Example 10-2]

A polyolefin resin composition was prepared comprising 84.95% by weight of the aforementioned PP (I), 0.05% by weight of the aforementioned PB, and 15% by weight of the aforementioned LDPE.

In a separate process, a 4-methyl-1-pentene resin composition was prepared comprising 80% by weight of the aforementioned PP (I), and 20% by weight of the aforementioned 4-methyl-1-pentene resin.

A laminated member was manufactured on board paper in the same manner as in Example 10-1, using the polyolefin resin composition as the adhesive layer, and the 4-methyl-1-pentene resin composition as the surface layer.

### [Comparative Example 10-3]

A polyolefin resin composition was prepared comprising 85% by weight of the aforementioned PP (I), and 15% by weight of the aforementioned LDPE.

In a separate process, a 4-methyl-1-pentene resin composition was prepared comprising 80% by weight of the aforementioned PP (I), and 20% by weight of the aforementioned 4-methyl-1-pentene resin.

A laminated member was manufactured on board paper in the same manner as in Example 10-1, at a lamination temperature of 305°C, using the polyolefin resin composition as the adhesive layer, and the 4-methyl-1-pentene resin composition as the surface layer.

### [Comparative Example 10-4]

A polyolefin resin composition was prepared comprising 80% by weight of the aforementioned PP (II), and 20% by weight of the aforementioned LDPE.

Using the resultant polyolefin resin composition, a laminated member was manufactured by means of laminating the resin composition onto board paper.

### [Evaluation Method]

### (Adhesive strength to paper)

The adhesive strength to a paper base material was evaluated based on the condition at the time of inter-layer separation according to the following 3-stage evaluation standard.
ⓞ : uniform solidification of the paper and the adhesive layer without residual stranding of the resin
Δ : intermediate adhesiveness with separation possible
× : easy separation of the high-quality paper and the adhesive layer (Separation test of the surface layer)

A urethane paste was coated onto the surface layer at a thickness of 100 µm, heat treated at 130°C for 1 minute, and then cooled to room temperature. The separating strength (g/ 30 mm width) required for the resultant urethane film was then measured using a tensile strength test.

**Table 10-1**

| | Items | Examples | | Comparative Examples | | | |
|---|---|---|---|---|---|---|---|
| | | 10-1 | 10-2 | 10-1 | 10-2 | 10-3 | 10-4 |
| Surface layer | Composition | | | | | | |
| | 4-methyl-1-pentene resin | 20% | | 20% | | | - |
| | Polypropylene | 80% | | 80% | | | - |
| Adhesive layer | Component (A) | PP | | PP | | | PP |
| | MFR of component (A) (230°C)(g/10 min) | 40 | | 40 | | | 20 |
| | Component (B) | 1,2-polybutadiene | | - | 1,2-polybutadiene | - | - |
| | MFR of component (B) (g/10 min) | 9.0 (150°C) | | - | 9.0 (150°C) | - | - |
| | No.of intramolecular unsaturated bonds of (B) (per 1000 carbon atoms) | 250 | | - | 250 | - | - |
| | Amount of component (B) | 10.0% | 1.0% | 0 | 0.05% | 0 | 0 |
| | No.of intramolecular unsaturated bonds in the composition (per 1000 carbon atoms) | 25 | 2.6 | 0 | 0.13 | 0 | 0 |
| | Base material | Board paper | | | Board paper | | |
| | Molding temperature (°C) | 270 | | | 270 | 305 | 305 |
| | Molding speed (m/min) | 150 | | | 150 | 150 | 150 |
| | Air gap (mm) | 110 | | | 110 | 110 | 110 |
| | Film thickness (µm) | - | | | - | - | 40 |
| | Surface layer (µm) | 15 | | | 15 | 15 | - |
| | Adhesive layer (µm) | 25 | | | 25 | 25 | - |
| | Corona discharge Treatment | 7KW | | | 7KW | 7KW | 7KW |
| | Ozone treatment | Done | | | Done | None | None |
| | Adhesive strength | ⓞ | ⓞ | × | × | Δ | Δ |
| | Strength to separate urethane | 7 | 7 | 7 | 7 | 12 | 70 |
| Condition for ozone treatment: 50 g/m³ - 4.5 m³/hr | | | | | | | |

As seen from the aforementioned, according to the processing sheet of the present example, it is possible to produce a high adhesive strength while also maintaining a high molding speed and a low molding temperature. Moreover, separation from the polyurethane film was easily accomplished, even when only small amounts of the 4-methyl-1-pentene resin were used.

In contrast, Comparative Example 1, which lacked the (B) component in adhesive layer, and Comparative Example 2, which had an inadequate amount of the (B) component, produced laminated members that displayed low adhesive strengths. In addition, although an improvement in the adhesive strength was observed in Comparative Example 3, which lacked the (B) component and did not undergo ozone treatment, a significant quantity of fumes was generated as a result of the increase in the molding temperature. In addition, although an improvement in the adhesive strength was observed in Comparative Example 4, a significant quantity of fumes was generated as a result of the increase in the molding temperature, and the separating strength for the urethane film was high as a result of lack of the 4-methyl-1-pentene resin,

### §Examples relating to a packaging material

### Example 11

The following resin components were used in the Examples and Comparative Examples described below.
LDPE (I): Low-density polyethylene having a melt flow rate (190°C) of 20 g/10 min and a density of 0.918 g/cm³ produced by means of a high-pressure radical method.
LDPE (II): Low-density polyethylene having a melt flow rate (190°C) of 8.2 g/10 min and a density of 0.918 g/cm³ produced by means of a high-pressure radical method.
1,2-polybutadiene resin having a melt flow rate (150°C) of 3.0 g/10 min with 250 intramolecular unsaturated bonds per 10³ carbon atoms.

### [Examples 11-1 and 11-2]

A polyethylene resin composition was prepared comprising 95.0% by weight of the aforementioned LDPE (I), and 5.0% by weight of the aforementioned 1,2-polybutadiene resin.

The number of intramolecular unsaturated bonds per 10³ carbon atoms of the resultant polyethylene resin composition was measured by means of infrared (IR) analysis.

As shown in Figure 9, a resin layer in a molten resin film state comprising the polyethylene resin composition was treated with ozone, and then laminated onto a base material 12 under the conditions shown in the following Table, by means of a lamination-molding apparatus having a width of 1100 mm and equipped with a 90 mm extruder, to produce a laminated member.

As the base material 12, aluminum foil was used in Example 1, and a polyamide film treated with corona discharge was used in Example 2.

Subsequently, the inter-layer adhesive strength of the resultant laminated member and fumes produced at the time of manufacture were evaluated. These results are shown in Tables 11-1 and 11-2.

Furthermore, a packaging material was manufactured by laminating a low-density polyethylene, formed by means of a high-pressure radical method, as the sealant layer onto the resin layer.

The resultant packaging material was impermeable to gas, and applicable to packaging. In addition, the packaging material was odorless, and was applicable to both food packaging and medical packaging material.

### [Examples 11-3 and 11-4]

A polyethylene resin composition was prepared comprising 99.0% by weight of the aforementioned LDPE (I), and 1.0% by weight of the aforementioned 1,2-polybutadiene resin.

Using the resultant polyethylene resin composition, a laminated member was manufactured by laminating the resin composition onto a base material under the conditions shown in the following Table, by means of a lamination-molding apparatus having a width of 1100 mm and equipped with a 90 mm extruder.

As the base material 12, aluminum foil was used in Example 3, and a polyamide film was used in Example 4.

Subsequently, the inter-layer adhesive strength of the resultant laminated member and fumes produced at the time of manufacture were evaluated. These results are shown in Tables 11-1 and 11-2.

Furthermore, a packaging material was manufactured by laminating a low-density polyethylene, formed by means of a high-pressure radical method, as the sealant layer onto the resin layer.

The resultant packaging material was impermeable to gas, and applicable to packaging. In addition, the packaging material was odorless, and was applicable to both food packaging and medical packaging material.

### [Examples 11-5 and 11-6]

A polyethylene resin composition was prepared comprising 95.0% by weight of the aforementioned LDPE (I), and 5.0% by weight of the aforementioned 1,2-polybutadiene resin.

Extrusion-lamination (via co-extrusion) onto a base material was then jointly performed under the conditions shown in the following Table, with the resultant polyethylene resin composition provided on the base material side, and the aforementioned LDPE (I) provided on the cooling roll 30 side, by means of a lamination-molding apparatus having a width of 1100 mm and equipped with a 90 mm extruder; to produce a laminated member having a three-layer structure comprising LDPE (I)/ LDPE (I) + 1,2-polybutadiene resin/ base material.

As the base material 12, aluminum foil was used in Example 5, and a polyamide film was used in Example 6.

Subsequently, the inter-layer adhesive strength between the resin layer (LDPE (I)/ LDPE (I) + 1,2-polybutadiene resin) and the base material was measured, and fumes produced at the time of manufacture was evaluated. These results are shown in Tables 11-1 and 11-2.

Furthermore, a packaging material was manufactured by laminating a low-density polyethylene, formed by means of a high-pressure radical method, as the sealant layer onto the resin layer.

The resultant packaging material was impermeable to gas, and applicable to packaging. In addition, the packaging material was odorless, and was applicable to both food packaging and medical packaging material.

### [Comparative Examples 11-1 and 11-2]

Using only the aforementioned LDPE (II), a laminated member was manufactured by laminating the LDPE (II) onto a base material under the conditions shown in the following Table, by means of a lamination-molding apparatus having a width of 1100 mm and equipped with a 90 mm extruder.

As the base material 12, aluminum foil was used in Comparative Example 1, and a polyamide film was used in Comparative Example 2.

Subsequently, the inter-layer adhesive strength of the resultant laminated member and fumes produced at the time of manufacture were evaluated. These results are shown in Tables 11-1 and 11-2.

### [Comparative Examples 11-3 and 11-4]

A polyethylene resin composition was prepared comprising 99.95% by weight of the aforementioned LDPE (I), and 0.05% by weight of the aforementioned 1,2-polybutadiene resin.

Using the resultant polyethylene resin composition, a laminated member was manufactured by laminating the resin composition onto a base material under the conditions shown in the following Table, by means of a lamination-molding apparatus having a width of 1100 mm and equipped with a 90 mm extruder.

As the base material 12, aluminum foil was used in Comparative Example 3, and a polyamide film was used in Comparative Example 4.

Subsequently, the inter-layer adhesive strength of the resultant laminated member and fumes produced at the time of manufacture were evaluated. These results are shown in Tables 11-1 and 11-2.

### [Comparative Examples 11-5 and 11-6]

Using only the aforementioned LDPE (II), a laminated member was manufactured by laminating the LDPE (II) onto a base material under the conditions shown in the following Table, by means of a lamination-molding apparatus having a width of 1100 mm and equipped with a 90 mm extruder. However, ozone treatment was not performed on the molten resin.

As the base material 12, aluminum foil was used in Comparative Example 5, and a polyamide film was used in Comparative Example 6.

Subsequently, the inter-layer adhesive strength of the resultant laminated member and fumes produced at the time of manufacture were evaluated. These results are shown in Tables 11-1 and 11-2.

### [Evaluation Method]

### (Adhesive strength)

The adhesive strength of the resultant laminated members was tested by means of cutting the laminated members in their direction of flow into rectangles having a width of 15 mm, and then separating them (90° separation at a separation speed of 300 mm/min) at the interface of the base material and resin layer using a universal tensile strength testing apparatus (manufactured by Orientech).

**Table 11-1**

| Items | Examples | | | Comparative Examples | | |
|---|---|---|---|---|---|---|
| | 11-1 | 11-3 | 11-5 | 11-1 | 11-3 | 11-5 |
| Component (A) | LDPE (I) | | | LDPE (I) | | LDPE (II) |
| MFR of component (A) (190°C)(g/10 min) | 20 | | | 20 | | 8.2 |
| Component (B) | 1,2-polybutadiene | | | - | 1,2-polybutadiene | - |
| MFR of component (B) (g/10 min) | 3.0 (150°C) | | | - | 3.0 (150°C) | - |
| No.of intramolecular unsaturated bonds of (B) (per 1000 carbon atoms) | 250 | | | - | 250 | - |
| Amount of component (B) | 5.0% | 1.0% | 5.0% | 0 | 0.05% | 0 |
| No.of intramolecular unsaturated bonds in the composition (per 1000 carbon atoms) | 12.5 | 2.6 | 12.5 | 0 | 0.13 | 0 |
| Single layer/co-extrusion | Single layer | | Co-extrusion | Single layer | | |
| Base material | Aluminum foil | | | Aluminum foil | | |
| Molding temperature (°C) | 280 | | | 280 | | 320 |
| Molding speed (m/min) | 200 | | | 200 | | 200 |
| Air gap (mm) | 120 | | | 120 | | 120 |
| Film thickness (µm) | 30 | | | 30 | | 30 |
| Ozone treatment | Done | | | Done | | None |
| Adhesive strength (g/15mm) | 390 | 250 | 380 | 40 | 40 | 200 |
| Odor | A | A | A | A | A | C |
| Fume | a | a | a | a | a | c |
| Condition for ozone treatment: 50 g/m³ - 4.5 m³/hr | | | | | | |

**Table 11-2**

| Items | Examples | | | Comparative Examples | | |
|---|---|---|---|---|---|---|
| | 11-2 | 11-4 | 11-6 | 11-2 | 11-4 | 11-6 |
| Component (A) | LDPE (I) | | | LDPE (I) | | LDPE (II) |
| MFR of component (A) (190°C)(g/10 min) | 20 | | | 20 | | 8.2 |
| Component (B) | 1,2-polybutadiene | | | - | 1,2-polybutadiene | - |
| MFR of component (B) (g/10 min) | 3.0 (150°C) | | | - | 3.0 (150°C) | - |
| No.of intramolecular unsaturated bonds of (B) (per 1000 carbon atoms) | 250 | | | - | 250 | - |
| Amount of component (B) | 5.0% | 1.0% | 5.0% | 0 | 0.05% | 0 |
| No.of intramolecular unsaturated bonds in the composition (per 1000 carbon atoms) | 12.5 | 2.6 | 12.5 | 0 | 0.13 | 0 |
| Single layer/co-extrusion | Single layer | | Co-extrusion | Single layer | | |
| Base material | Nylon film | | | Nylon film | | |
| Molding temperature (°C) | 280 | | | 280 | | 320 |
| Molding speed (m/min) | 200 | | | 200 | | 200 |
| Air gap (mm) | 120 | | | 120 | | 120 |
| Film thickness (µm) | 30 | | | 30 | | 30 |
| Corona discharge treatment | 7KW | | | 7KW | | 7KW |
| Ozone treatment | Done | | | Done | | None |
| Adhesive strength (g/15mm) | 870 | 500 | 850 | 50 | 50 | 200 |
| Odor | A | A | A | A | A | C |
| Fume | a | a | a | a | a | c |
| Condition for ozone treatment: 50 g/m³ - 4.5 m³/hr | | | | | | |

As seen from the aforementioned, according to the laminated member of the present example, it is possible to produce a high adhesive strength while also maintaining a high molding speed and a low molding temperature, even when using aluminum foil or polyamide as the base material. In contrast, Comparative Examples 1 and 2, which lacked the (B) component, and Comparative Examples 3 and 4, which had an inadequate number of intramolecular unsaturated bonds, produced laminated members that displayed low adhesive strengths. In addition, although an improvement in the adhesive strength was observed in Comparative Examples 5 and 6, which lacked the (B) component and did not undergo ozone treatment, a significant quantity of fumes and odor were generated as a result of the increase in the molding temperature.

### Example 12

The following resin components were used in the Examples and Comparative Examples described below.
LDPE: Low-density polyethylene having a melt flow rate (190°C) of 20 g/10 min and a density of 0.918 g/cm³ produced by means of a high-pressure radical method.
PB: 1, 2-polybutadiene resin having a melt flow rate (150°C) of 3.0 g/10 min with 250 intramolecular unsaturated bonds per 10³ carbon atoms.

### [Example 12-1]

A polyolefin resin composition was prepared comprising 95.0% by weight of the aforementioned LDPE, and 5.0% by weight of the aforementioned PB.

The number of intramolecular unsaturated bonds per 10³ carbon atoms of the resultant polyolefin resin composition was measured by means of infrared (IR) analysis.

As shown in Figure 11, co-extrusion of the resultant polyolefin resin composition and aforementioned LDPE was performed, by means of a co-extrusion/lamination molding apparatus having a width of 1100 mm and equipped with 90 mm and 65 mm extruders. The resin layer in a molten resin film state comprising the polyolefin resin composition was then treated with ozone, and laminated onto the evaporation surface 10 of an aluminum-evaporated PET film 10 which had undergone corona treatment, under the conditions shown in Table 12-1, to produce a packaging material having a layer structure comprising the aluminum-evaporated PET/ polyolefin resin composition layer/ LDPE layer.

Subsequently, the adhesive strength between the gas barrier layer and the resin layer, and odor of the resultant packaging material were evaluated.

### [Example 12-2]

A polyolefin resin composition was prepared comprising 99.5% by weight of the aforementioned LDPE, and 0.5% by weight of the aforementioned PB.

A packaging material for food and medical supplies was manufactured in the same manner as in Example 12-1 with the exception that the resultant polyolefin resin composition was used in the resin layer.

### [Example 12-3]

A packaging material for food and medical supplies was manufactured in the same manner as in Example 12-1 with the exception of using a vinyl chloride coated bi-axially oriented polypropylene (K-coated OPP) instead of the aluminum-evaporated PET film.

### [Comparative Example 12-1]

A packaging material for food and medical supplies was manufactured in the same manner as in Example 12-1 using an LDPE, without using the aforementioned polyolefin resin composition.

### [Comparative Example 12-2]

A polyolefin resin composition was prepared comprising 99.9% by weight of the aforementioned LDPE, and 0.1% by weight of the aforementioned PB.

Using this polyolefin resin composition, a packaging material was manufactured in the same manner as in Example 12-1.

### [Comparative Example 12-3]

A packaging material for food and medical supplies was manufactured in the same manner as in Example 12-1 using an LDPE, without using the aforementioned polyolefin resin composition. However, the molding temperature during extrusion-lamination was 310°C.

### [Evaluation Method]

### (Adhesive strength to the gas barrier layer)

The adhesive strength (g/ 15 mm) of the resultant laminated members was tested by means of cutting the laminated members in their direction of flow into rectangles having a width of 15 mm, and then separating them (90° separation at a separation speed of 300 mm/min) at the interface of the gas barrier layer and the resin layer using a universal tensile strength testing apparatus (manufactured by Orientech).

**Table 12-1**

| Items | Examples | | | Comparative Examples | | |
|---|---|---|---|---|---|---|
| | 12-1 | 12-2 | 12-3 | 12-1 | 12-2 | 12-3 |
| First layer | LD | LD | LD | LD | LD | LD |
| Second layer | LD+PB | LD+PB | LD+PB | LD | LD+PB | LD |
| Third layer | Al-evaporated PET | | K-coated OPP | Al-evaporated PET | | |
| MFR of LD (g/10 min) | 20 | 20 | 20 | 20 | 20 | 20 |
| MFR of PB (g/10 min) | 3 | 3 | 3 | - | 3 | - |
| Addition amount of PB (wt %) | 5 | 0.5 | 5 | 0 | 0.1 | 0 |
| Amount of unsaturated groups in the composition (per 10³ carbon atoms) | 12.5 | 1.25 | 12.5 | 0 | 0.25 | 0 |
| Lamination thickness (µm), First layer | 10 | 10 | 10 | 10 | 10 | 10 |
| Lamination thickness (µm), Second layer | 10 | 10 | 10 | 10 | 10 | 10 |
| Molding temperature (°C) | 270 | 270 | 270 | 270 | 270 | 310 |
| Molding speed (m/min) | 200 | 200 | 200 | 200 | 200 | 200 |
| Corona discharge treatment | 7KW | 7KW | 7KW | 7KW | 7KW | 7KW |
| Ozone treatment | Done | Done | Done | Done | Done | Done |
| Adhesive strength | 315 | 160 | 330 | 50 | 55 | 210 |
| Odor | A | A | A | A | A | C |
| Condition for ozone treatment: 50 g/m³ - 6 m³/hr | | | | | | |

As seen from the aforementioned Table 12-1, the packaging materials for food and medical supplies of the present example are formed from laminated members exhibiting a high adhesive strength while also maintaining a high molding speed and a low molding temperature. These packaging materials were also odorless and appropriate for use as packaging material for food and medical supplies. In contrast, Comparative Example 1, which lacked the (B) component in the resin layer, and Comparative Example 2, which had an inadequate number of intramolecular unsaturated bonds, produced products that displayed low adhesive strengths. In addition, although an improvement in the adhesive strength was observed in Comparative Example 3, which lacked the (B) component, a significant quantity of fumes and odor were generated as a result of the increase in the molding temperature.

### § Examples relating to a container

### Example 13

The following resin components were used in the Examples and Comparative Examples described below.
LDPE (I): Low-density polyethylene having a melt flow rate (190°C) of 20 g/10 min and a density of 0.918 g/cm³ produced by means of a high-pressure radical method.
LDPE (II): Low-density polyethylene having a melt flow rate (190°C) of 8.2 g/10 min and a density of 0.918 g/cm³ produced by means of a high-pressure radical method.
PB (I): 1,2-polybutadiene resin having a melt flow rate (150°C) of 3.0 g/10 min with 250 intramolecular unsaturated bonds per 10³ carbon atoms.
PB (II): 1,2-polybutadiene resin having a melt flow rate (150°C) of 9.0 g/10 min with 250 intramolecular unsaturated bonds per 10³ carbon atoms.

### [Example 13-1]

A polyolefin resin composition was prepared comprising 95.0% by weight of the aforementioned LDPE (I), and 5.0% by weight of the aforementioned PB (I).

The number of intramolecular unsaturated bonds per 10³ carbon atoms of the resultant polyolefin resin composition was measured by means of infrared (IR) analysis.

As shown in Figure 11, co-extrusion of the resultant polyolefin resin composition and aforementioned LDPE (I) was performed, by means of a co-extrusion/lamination molding apparatus having a width of 1100 mm and equipped with 90 mm and 65 mm extruders. The resin layer in a molten resin film state comprising the polyolefin resin composition was then treated with ozone, and laminated onto board paper (260 g/m²) 10 which had undergone corona treatment under the inner layer conditions shown in Table 13-1, to produce a laminated member (inner layer).

Furthermore, with respect to the base material of the inner layer, co-extrusion of the resultant polyolefin resin composition and aforementioned LDPE (I) was performed, in the same manner as described above. The resin layer in a molten resin film state comprising the polyolefin resin composition was then treated with ozone, and laminated thereon under the outer layer conditions shown in Table 13-2, to produce the laminated member shown in Figure 10 (inner layer (surface layer/ resin layer/ base material) + outer layer (resin layer/ surface layer)) having a five-layer structure comprising the LDPE (I)/ LDPE (I) + PB/ base material/ LDPE (I) + PB/ LDPE (I).

Subsequently, the adhesive strengths between the base material 10 and each of the resin layers 12 and 14, and fumes produced at the time of manufacture were evaluated.

Furthermore, a container for food and medical supplies was manufactured using this laminated member. In addition, the odor from this container was also evaluated.

### [Example 13-2]

A polyolefin resin composition was prepared comprising 99% by weight of the aforementioned LDPE (I), and 1.0% by weight of the aforementioned PB.

A laminated member and container for food and medical supplies was manufactured in the same manner as in Example 13-1 with the exception that the resultant polyolefin resin composition was used in the resin layer.

### [Example 13-3]

A polyolefin resin composition was prepared comprising 95% by weight of the aforementioned LDPE (I), and 5.0% by weight of the aforementioned PB.

A laminated member and container for food and medical supplies was manufactured in the same manner as in Example 13-1 with the exception that the resultant polyolefin resin composition was used in the resin layer.

### [Comparative Example 13-1]

Using only the aforementioned LDPE (I), an inner layer was prepared in the same manner as in Example 13-1. Furthermore, using only the aforementioned LDPE (I), an outer layer was laminated onto a base material to produce a laminated member having a structure comprising the LDPE (I)/ LDPE (I)/ base material/ LDPE (I)/ LDPE (I).

### [Comparative Example 13-2]

A polyolefin resin composition was prepared comprising 99.95% by weight of the aforementioned LDPE (I), and 0.05% by weight of the aforementioned PB.

A laminated member comprising an inner layer and outer layer was manufactured in the same manner as in Example 13-1 using this polyolefin resin-composition.

### [Comparative Example 13-3]

A laminated member (inner layer) was manufactured using only the aforementioned LDPE (II) under the conditions shown in Table 13-1, by means of an extrusion/lamination molding apparatus having a width of 1100 mm and equipped with a 90 mm extruder. In the same manner, the aforementioned LDPE (II) was laminated onto the base material of this inner layer to produce a laminated member having a three-layer structure comprising the LDPE (II)/ base material/ LDPE (II).

### [Evaluation Method]

### (Adhesive strength to paper)

The adhesive strength to a paper base material was evaluated based on the condition at the time of inter-layer separation according to the following 3-stage evaluation standard.
ⓞ : uniform solidification of the paper and the resin layer without residual stranding of the resin
Δ : intermediate adhesiveness with separation possible
× : easy separation of the paper and the resin layer

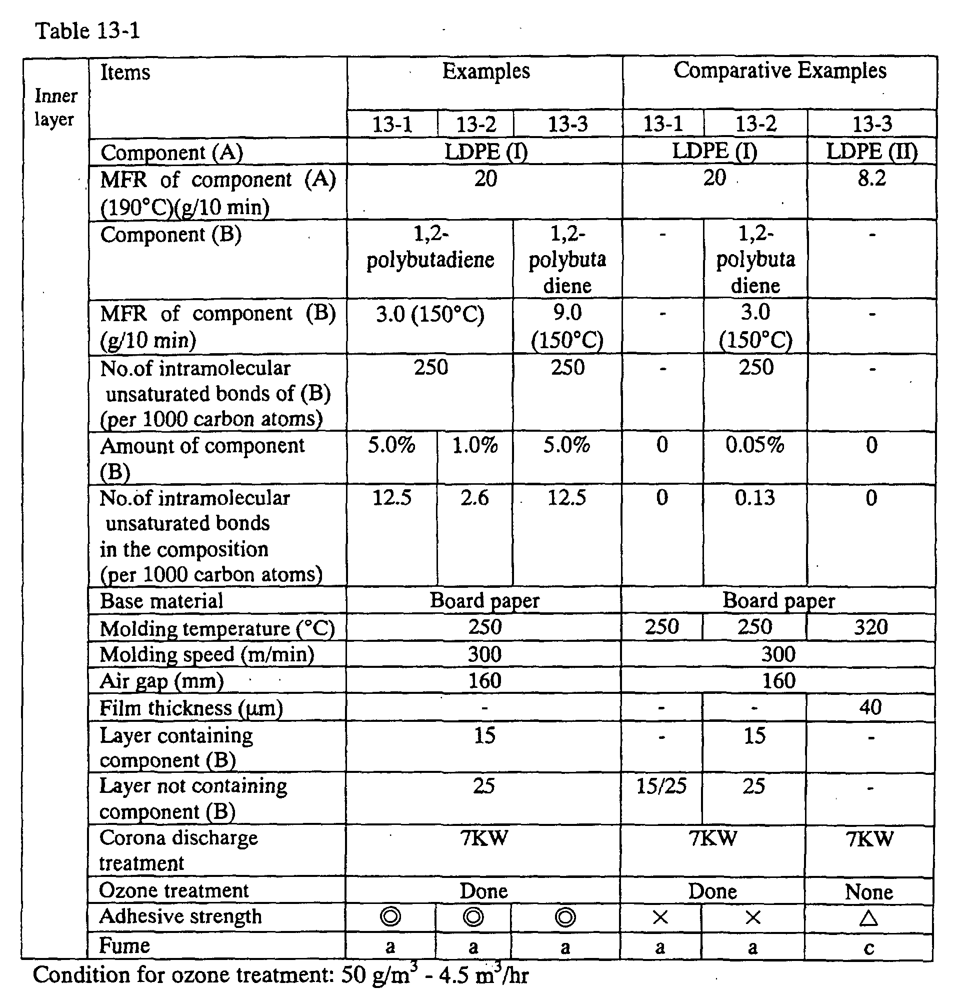

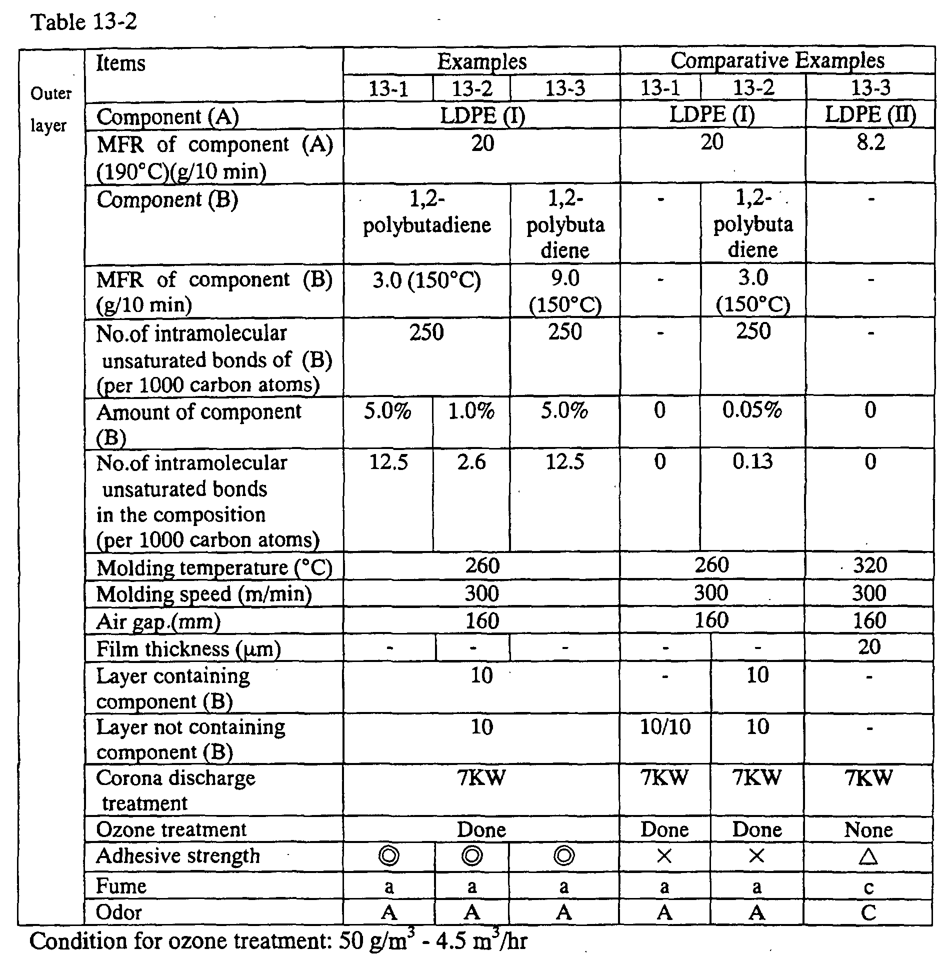

As seen from the aforementioned Tables 13-1 and 13-2, the containers for food and medical supplies of the present example are formed from laminated members exhibiting a high adhesive strength while also maintaining a high molding speed and a low molding temperature. These containers were also odorless and appropriate for use as containers for food and medical supplies.

In contrast, Comparative Example 1, which lacked the (B) component in the resin layer, and Comparative Example 2, which had an inadequate quantity of the (B) component, produced products that displayed low adhesive strengths. In addition, although an improvement in the adhesive strength was observed in Comparative Example 3, which lacked the (B) component and did not undergo ozone treatment, a significant quantity of fumes and odor were generated as a result of the increase in the molding temperature.

### Example 14

The following resin components were used in the Examples and Comparative Examples described below.
LDPE: Low-density polyethylene having a melt flow rate (190°C) of 20 g/10 min and a density of 0.918 g/cm³ produced by means of a high-pressure radical method.
PB: 1,2-polybutadiene resin having a melt flow rate (150°C) of 3.0 g/10 min with 250 intramolecular unsaturated bonds per 10³ carbon atoms.

### [Example 14-1]

A polyolefin resin composition was prepared comprising 95.0% by weight of the aforementioned LDPE, and 5.0% by weight of the aforementioned PB.

The number of intramolecular unsaturated bonds per 10³ carbon atoms of the resultant polyolefin resin composition was measured by means of infrared (IR) analysis.

As shown in Figure 13, co-extrusion of the resultant polyolefin resin composition and aforementioned LDPE was performed, by means of a co-extrusion/lamination molding apparatus having a width of 1100 mm and equipped with 90 mm and 65 mm extruders. The resin layer in a molten resin film state comprising the polyolefin resin composition was then treated with ozone, and laminated onto board paper (260 g/m²) 10 which had undergone corona treatment, under the conditions shown in Table 14-1, to produce the laminated member 24 shown in Figure 12.

In addition, co-extrusion of the resultant polyolefin resin composition and aforementioned LDPE was performed, in the same manner as described above. The resin layer in a molten resin film state comprising the polyolefin resin composition was then treated with ozone, and laminated onto a bi-axially oriented nylon film 18 which had undergone corona treatment, under the conditions shown in Table 14-1, to produce the laminated member 26 shown in Figure 12.

As shown in Figure 14, the laminated member 24 prepared above was ejected from the main delivery device 40, the aforementioned laminated member 26 was ejected from a "sandwich" delivery device 44, and the aforementioned polyolefin resin composition was extruded from extruder 30. The paper layer 10 of laminated member 24, and the gas barrier layer 18 of laminated member 26 were then pressed between a nip roll 34 and cooling roll 32, in a manner such that each layer was placed in contact with the molten polyolefin resin composition, to produce a laminated member having a seven-layer structure by means of sandwich-lamination.

Subsequently, the adhesive strengths between each of the layers were evaluated.

Furthermore, a container for food and medical supplies was manufactured using this laminated member. In addition, the odor from this container was also evaluated.

### [Example 14-2]

A polyolefin resin composition was prepared comprising 99.5% by weight of the aforementioned LDPE, and 0.5% by weight of the aforementioned PB.

A laminated member and container for food and medical supplies was manufactured in the same manner as in Example 14-1 with the exception that the resultant polyolefin resin composition was used in the resin layer.

### [Example 14-3]

A laminated member and container for food and medical supplies was manufactured in the same manner as in Example 14-1 with the exception of using a bi-axially oriented EVOH instead of the bi-axially oriented nylon.

### [Example 14-4]

A laminated member and container for food and medical supplies was manufactured in the same manner as in Example 14-1 with the exception that aluminum foil was used instead of the bi-axially oriented nylon, and the aforementioned LDPE was used at the time of adhering laminated member 24 and laminated member 26 at a temperature of 320°C.

### [Comparative Example 14-1]

A laminated member and container for food and medical supplies was manufactured in the same manner as in Example 14-1 using an LDPE without the above prepared polyolefin resin composition.

### [Comparative Example 14-2]

A polyolefin resin composition was prepared comprising 99.9% by weight of the aforementioned LDPE, and 0.1% by weight of the aforementioned PB.

Using the resultant polyolefin resin composition, a laminated member and container for food and medical supplies was manufactured in the same manner as in Example 14-1.

### [Comparative Example 14-3]

A laminated member and container for food and medical supplies was manufactured in the same manner as in Example 14-1 using an LDPE without the above prepared polyolefin resin composition. However, the molding temperature at the time of extrusion-lamination was set to 310°C.

### [Evaluation Method]

### (Adhesive strength to the paper layer)

The adhesive strength to the paper layer was evaluated based on the condition at the time of inter-layer separation according to the following 3-stage evaluation standard.
ⓞ : uniform solidification of the paper and the resin layers without residual stranding of the resin
Δ : intermediate adhesiveness with separation possible
× : easy separation of the paper and the resin layers

### (Adhesive strength to the gas barrier layer)

The adhesive strength (g/ 15 mm) of the resultant laminated members was tested by means of cutting the laminated members in their direction of flow into rectangles having a width of 15 mm, and then separating them (90° separation at a separation speed of 300 mm/min) at the interface of the gas barrier layer and resin layer using a universal tensile strength testing apparatus (manufactured by Orientech).

**Table 14-1**

| Items | Examples | | | | Comparative Examples | | |
|---|---|---|---|---|---|---|---|
| | 14-1 | 14-2 | 14-3 | 14-4 | 14-1 | 14-2 | 14-3 |
| First layer | LD | | | | LD | | |
| Second layer | LD+PB | | | | LD | LD+PB | LD |
| Third layer | Paper | | | | | Paper | |
| Fourth layer | LD+PB | LD+PB | LD+PB | LD*² | LD | LD+PB | LD |
| Fifth layer | ONy | ONy | EVOH | Al | ONy | ONy | ONy |
| Sixth layer | LD+PB | LD+PB | LD+PB | LD+PB | LD | LD+PB | LD |
| Seventh layer | LD | | | | LD | | |
| MFR of LD (g/10 min) | 20 | | | | 20 | | |
| MFR of PB (g/10 min) | 3 | | | | - | 3 | - |
| Addition amount of PB (wt %) | 5 | 0.5 | 5 | 5 | 0 | 0.1 | 0 |
| Amount of unsaturated groups in the composition (per 10³ carbon atoms) | 12.5 | 1.25 | 12.5 | 12.5 | 0 | 0.25 | 0 |
| Lamination thickness (µm), First layer | 10 | | | | 10 | | |
| Second layer | 10 | | | | 10 | | |
| Fourth layer | 20 | | | | 20 | | |
| Sixth layer | 20 | | | | 20 | | |
| Seventh layer | 20 | | | | 20 | | |
| Molding temperature (°C) | 270 | | | | 270 | | 310 |
| Molding speed (m/min) | 200 | | | | 200 | | |
| Corona discharge treatment | 7KW | | | | 7KW | | |
| Ozone treatment*¹ | Done | | | | Done | | |
| Adhesive strength, Second layer /paper | ⓞ | Δ | ⓞ | ⓞ | × | × | Δ |
| Fourth layer /paper | ⓞ | Δ | ⓞ | ⓞ | × | × | Δ |
| Fourth layer /barrier layer | 710 | 430 | 680 | 300 | 50 | 55 | 230 |
| Sixth layer /barrier layer | 830 | 520 | 730 | 310 | 60 | 60 | 310 |
| Odor | A | A | A | A | A | A | C |

| | | | | | | | |
|---|---|---|---|---|---|---|---|
| *1: 50 g/m³ - 6 m³/hr | | | | | | | |
| *2: The temperature at which the laminated members 24 and 26 were laminated was set at 320°C. | | | | | | | |

As seen from the aforementioned Table 14-1, the containers for food and medical supplies of the present example are formed from laminated members exhibiting a high adhesive strength while also maintaining a high molding speed and a low molding temperature. These containers were also odorless and appropriate for use as containers for food and medical supplies.

In contrast, Comparative Example 1, which lacked the (B) component in the resin layer, and Comparative Example 2, which had an inadequate number of intramolecular unsaturated bonds, produced products that displayed low adhesive strengths. In addition, although an improvement in the adhesive strength was observed in Comparative Example 3, which lacked the (B) component, a significant quantity of fumes and odor were generated as a result of the increase in the molding temperature.

### Industrial Applicability

The polyolefin resin composition according to the present invention comprises a compound containing a high quantity of intramolecular unsaturated bonds, wherein by means of treating with ozone a molded product, particularly a laminated-molded product which uses this polyolefin resin composition, it is possible to easily maintain a high inter-layer adhesive strength with a variety of different materials.

In addition, with regard to a molded product treated with ozone, the surface of the molded product is activated, which in turn improves the adhesiveness, coating properties, and printing characteristics.

In the extrusion-lamination molding process, it is also possible to produce a product at a low molding temperature using high-speed molding while maintaining a high inter-layer adhesive strength. Consequently, due to the higher molding speed, it is possible to remarkably improve the productivity. In addition, from the low temperature molding capabilities, it is possible to significantly reduce the effects on the working and surrounding environments from the fumes produced.

The present invention is, in particular, applicable to various laminated members, e.g., release members, processing sheets, packaging materials, packaging materials for food and medical supplies, containers, containers for food and medical supplies, gas-impermeable packaging materials for food and medical supplies, gas-impermeable containers for food and medical supplies, and the like.

## Claims

1. A polyolefin resin composition **characterized in** comprising (A) a polyolefin resin, and (B) a compound containing intramolecular unsaturated bonds, wherein in said polyolefin resin composition, the number of intramolecular unsaturated bonds is at least 0.5 bonds per 10³ carbon atoms.

2. A polyolefin resin composition according to Claim 1, wherein said polyolefin resin composition comprises 99.9 ∼ 50% by weight of said (A) polyolefin resin, and 0.1 ∼ 50% by weight of said (B) compound containing intramolecular unsaturated bonds; and in said (B) compound containing intramolecular unsaturated bonds, the number of intramolecular unsaturated bonds is 0.5 ∼ 250 bonds per 10³ carbon atoms.

3. A polyolefin resin composition according to Claim 1, wherein said (A) polyolefin resin is a polyolefin resin (A1) containing 3 ∼ 20 carbon atoms.

4. A polyolefin resin composition according to Claim 1, wherein said (B) compound containing intramolecular unsaturated bonds is at least one compound selected from among the group consisting of a polybutadiene, an ethylene-propylene-diene terpolymer, and a polyisoprene.

5. A polyolefin resin composition according to Claim 1, wherein said (B) compound containing intramolecular unsaturated bonds is 1,2-polybutadiene.

6. A polyolefin resin composition according to Claim 1, **characterized in** further comprising (C) an epoxy compound.

7. A polyolefin resin composition according to Claim 6, wherein said (C) epoxy compound possesses at least two intramolecular epoxy groups, and has a molecular weight of no greater than 3000.

8. A polyolefin resin composition according to Claim 6, **characterized in** further comprising (D) an olefin resin possessing functional groups that are reactive with the epoxy groups.

9. A polyolefin resin composition according to Claim 6, wherein said (C) epoxy compound is an epoxidized plant oil.

10. A polyolefin resin composition according to Claim 1, wherein said polyolefin resin composition is a resin composition for use in extrusion-lamination molding.

11. A laminated member **characterized in** comprising a layer, which is provided on at least one surface of a base material and is formed from a polyolefin resin composition comprising (A1) a polyolefin resin containing 3 ∼ 20 carbon atoms, and (B) a compound containing intramolecular unsaturated bonds, wherein in said polyolefin resin composition, the number of intramolecular unsaturated bonds is at least 0.5 bonds per 10³ carbon atoms.

12. A laminated member according to Claim 11, wherein said polyolefin resin composition comprises 99.9 ∼ 50% by weight of said (A1) polyolefin resin containing 3 ∼ 20 carbon atoms, and 0.1 ∼ 50% by weight of said (B) compound containing intramolecular unsaturated bonds; and in said (B) compound containing intramolecular unsaturated bonds, the number of intramolecular unsaturated bonds is 0.5 ∼ 250 bonds per 10³ carbon atoms.

13. A laminated member **characterized in** comprising a layer, which is provided on at least one surface of a base material and is formed from a polyolefin resin composition comprising (A) a polyolefin resin, (B) a compound containing intramolecular unsaturated bonds, and (C) an epoxy compound, wherein in said polyolefin resin composition, the number of intramolecular unsaturated bonds is at least 0.5 bonds per 10³ carbon atoms.

14. A laminated member according to Claim 13, wherein said polyolefin resin composition further comprises (D) an olefin resin possessing functional groups that are reactive with the epoxy groups.

15. A method for manufacturing a laminated member **characterized in** comprising the steps of laminating and adhering a layer formed from a polyolefin resin composition to at least one surface of a base material by means of an extrusion-lamination process; said polyolefin resin composition comprises (A1) a polyolefin resin containing 3 ∼ 20 carbon atoms, and (B) a compound containing intramolecular unsaturated bonds, wherein in said polyolefin resin composition, the number of intramolecular unsaturated bonds is at least 0.5 bonds per 10³ carbon atoms.

16. A method for manufacturing a laminated member **characterized in** comprising the steps of laminating and adhering a layer formed from a polyolefin resin composition to at least one surface of a base material by means of an extrusion-lamination process; said polyolefin resin composition comprises (A) a polyolefin resin, (B) a compound containing intramolecular unsaturated bonds, and (C) an epoxy compound, wherein in said polyolefin resin composition, the number of intramolecular unsaturated bonds is at least 0.5 bonds per 10³ carbon atoms.

17. A method for manufacturing a laminated member according to Claim 16, wherein said polyolefin resin composition further comprises (D) an olefin resin possessing functional groups that are reactive with the epoxy groups.

18. A method for manufacturing a laminated member according to Claim 15, wherein at the time of laminating and adhering said polyolefin resin composition to at least one surface of a base material by means of an extrusion-lamination process, surface processing of a base material and/or a film formed from said polyolefin resin composition is first performed, followed by adhering via said surface-processed surface.

19. A method for manufacturing a laminated member according to Claim 18, wherein said lamination and adherence is performed by laminating and adhering an ozone-treated polyolefin resin composition film, and a base material treated by means of corona discharge treatment via surface-processed surface.

20. A method for manufacturing a laminated member according to Claim 15, wherein the molding temperature of said exrusion-lamination is 200 ∼ 300°C.

21. A release member **characterized in** comprising a base material layer and a resin layer formed on said base material layer; or comprising a base material layer, a resin layer formed thereon, and a release material layer formed on said resin layer; wherein said resin layer comprises a layer formed from a polyolefin resin composition comprising (A) a polyolefin resin, and (B) a compound containing intramolecular unsaturated bonds, and in said polyolefin resin composition, the number of intramolecular unsaturated bonds is at least 0.5 bonds per 10³ carbon atoms.

22. A release member according to Claim 21, wherein said polyolefin resin composition further comprises (C) an epoxy compound.

23. A processing sheet **characterized in** comprising a base material and a processing layer formed on said base material, wherein said processing layer comprises a layer formed from a polyolefin resin composition comprising (A) a polyolefin resin, and (B) a compound containing intramolecular unsaturated bonds, and in said polyolefin resin composition, the number of intramolecular unsaturated bonds is at least 0.5 bonds per 10³ carbon atoms.

24. A processing sheet according to Claim 23, wherein said polyolefin resin composition further comprises (C) an epoxy compound.

25. A processing sheet comprising a base material, an adhesive layer formed thereon, and a surface layer formed onto said adhesive layer, wherein said adhesive layer comprises a layer formed from a polyolefin resin composition comprising (A) a polyolefin resin, and (B) a compound containing intramolecular unsaturated bonds, and in said polyolefin resin composition, the number of intramolecular unsaturated bonds is at least 0.5 bonds per 10³ carbon atoms; and said surface layer is formed from a compound selected from among an α-olefin homopolymer or copolymer containing 3 ∼ 20 carbon atoms, and a composition comprising an α-olefin homopolymer or copolymer containing 3 ∼ 20 carbon atoms and another polyolefin.

26. A processing sheet according to Claim 25, wherein said polyolefin resin composition of said adhesive layer further comprises (C) an epoxy compound.

27. A packaging material comprising at least a base material and resin layer, wherein said resin layer comprises a layer formed from a polyolefin resin composition comprising (A) a polyolefin resin, and (B) a compound containing intramolecular unsaturated bonds, and in said polyolefin resin composition, the number of intramolecular unsaturated bonds is at least 0.5 bonds per 10³ carbon atoms.

28. A packaging material according to Claim 27, wherein said polyolefin resin composition further comprises (C) an epoxy compound.

29. A packaging material according to Claim 27, **characterized in** further comprising a sealant layer.

30. A packaging material according to Claim 27, **characterized in** further comprising a gas barrier-type layer.

31. A packaging material according to Claim 27, wherein said base material is formed from a gas barrier-type material.

32. A container formed from at least a laminated member comprising a resin layer formed onto a base material, wherein said resin layer comprises a layer formed from a polyolefin resin composition comprising (A) a polyolefin resin, and (B) a compound containing intramolecular unsaturated bonds, and in said polyolefin resin composition, the number of intramolecular unsaturated bonds is at least 0.5 bonds per 10³ carbon atoms.

33. A container according to Claim 32, wherein said polyolefin resin composition further comprises (C) an epoxy compound.

34. A container according to Claim 32, **characterized in** further comprising a gas barrier-type layer.

35. A container according to Claim 34, wherein a resin layer/ paper layer/ resin layer/ polyethylene layer are laminated onto one surface of said gas barrier-type layer, and a sealant layer is laminated onto another surface of said gas barrier-type layer via a resin layer.
